# EUROPEAN PATENT APPLICATION

(11) **EP 3 735 032 A1**
(43) Date of publication of application: **04.11.2020**
(21) Application number: 20172593.4
(22) Date of filing: 01.05.2020
(51) Int. Cl.: H04W 36/00

(54) **BANDWIDTH PART OPERATION DURING HANDOVER PROCEDURE**

(30) Priority: 02.05.2019 US 201962842396 P
(71) Applicant: Comcast Cable Communications, LLC, Philadelphia, PA 19103 (US)
(72) Inventor: RASTEGARDOOST, Nazanin, Philadelphia, PA 19103 (US); DINAN, Esmael, Philadelphia, PA 19103 (US); JEON, Hyoungsuk, Philadelphia, PA 19103 (US); YI, Yunjung, Philadelphia, PA 19103 (US); PARK, Kyungmin, Philadelphia, PA 19103 (US); CIRIK, Ali, Philadelphia, PA 19103 (US)
(74) Representative: V.O.

(57) **Abstract**

Wireless communications are described for wireless resource configuration. A wireless device may be configured for simultaneous connectivity with multiple base stations, such as a source base station and a target base station during a hand over procedure. A wireless resource configuration may be determined that reduces the time period during which the wireless device may not be able to communicate with any base station.

## Description

### CROSS-REFERENCE TO RELATED APPLICATIONS

This application claims the benefit of U.S. Provisional Application No. 62/842,396, titled "Bandwidth Parts in Simultaneous Connectivity" and filed on May 2,2019. The above-referenced application is hereby incorporated by reference in its entirety.

### BACKGROUND

Wireless communications may include a wireless device communicating with a base station. A handover of a wireless device, from a source base station to a target base station, may be performed, for example, if a wireless device relocates to a cell serviced by the targetbase station.

### SUMMARY

The following summary presents a simplified summary of certain features. The summary is not an extensive overview and is not intended to identify key or critical elements.

Wireless communications are described for wireless resource configuration. A handover may be performed for the wireless device to communicate with a base station (e.g., targetbase station) different from the base station (e.g., source base station) with which the wireless device may have been previously communicating. Handover performance may be improved by reducing a time period during which the wireless device may be unable to communicate with any base station. Usinga simultaneous connectivity procedure, a wireless device may be able to communicate with multiple base stations (e.g., both a target base station and a source base station), such as during a handoverprocedure. A wireless resource configuration may be determined thatreduces the time period during which the wireless device may not be able to communicate with any base station. The wireless resource configuration may be based on an overlap ofwireless resources (e.g., bandwidth part overlap) associated with a target base station and a source base station and/or a capability of the wireless device.

These and other features and advantages are described in greater detailbelow.

### BRIEF DESCRIPTION OF THE DRAWINGS

Some features are shown by way of example, and not by limitation, in the accompanying drawings. In the drawings, like numerals reference similar elements.
FIG. 1 shows an example radio access network (RAN) architecture.
FIG. 2A shows an example userplane protocol stack.
FIG.2B shows an example control plane protocol stack.
FIG. 3 shows an example wireless device and two base stations.
FIG. 4A, FIG 4B, FIG. 4C and FIG. 4D showexamples of up link and down link signal transmission.
FIG. 5A shows an example up link channel mapping and example up link physical signals.
FIG. 5B shows an example downlink channel mapping and example downlinkphysicalsignals.
FIG. 6 shows an example transmission time and/ or reception time for a carrier.
FIG. 7A and FIG. 7B show example sets oforthogonalfrequency divisionmultiplexing (OFDM) subcarriers.
FIG. 8 shows example OFDM radio resources.
FIG. 9A shows an example channel state information reference signal (CSI-RS) and/or synchronization signal (SS) block transmission in a multi-beam system.
FIG. 9B shows an example down link beam management procedure.
FIG. 10 shows an example of configured bandwidthparts (BWPs).
FIG 11A and FIG. 11B show examples ofmulti connectivity.
FIG 12 shows an example of a randomaccess procedure.
FIG 13 shows example medium access control (MAC) entities.
FIG 14 shows an example RAN architecture.
FIG 15 shows example radio resource control (RRC) states.
FIG 16 shows an example of a handover procedure.
FIG 17 shows example signaling between a wireless device and two base stations during a handoverprocedure.
FIG 18 shows an example of cell and/or beam measurements.
FIG 19 shows an example beam-based measurement.
FIG 20 shows an example of high level signaling during a handover procedure.
FIG 21 shows an example of high levelsignaling during a handover procedure with simultaneous connectivity.
FIG 22 shows an example of a BWP configuration of a source cell and a target cell using aligned/matched active BWPs.
FIG 23 shows an example ofa BWP configuration ofa source cell and atarget cellusingdifferentactive BWPs.
FIG 24 shows an example ofa BWP configuration ofa source cell and a target cell using different BWPs.
FIG 25 shows an example of a procedure for a target base station during handover using simultaneous connectivity.
FIG 26 shows an example of a BWP management procedure for a target base station during handover using simultaneous connectivity.
FIG 27 shows an example of a procedure for a source base station during handover using simultaneous connectivity.
FIG 28 shows anexample ofa procedure for a wireless device during hand over using simultaneous connectivity.
FIG 29 shows example elements of a computing device thatmay be used to implement any ofthe various devices describedherein.

### DETAILED DESCRIPTION

The accompanying drawings and descriptions provide examples. It is to be understood that the examples shown in the drawings and/or described are non-exclusive and that there are otherexamples ofhowfeatures shown and describedmay be practiced.

Examples are provided for operation ofwireles s communication systems whichmay be used in the technical field of multicarrier communication systems. More particularly, the technology describedherein may relate to wireless resource configuration for simultaneous connectivity in multicarrier communication systems.

The following acronyms are used throughout the drawings and/or descriptions, and are provided below for convenience although other acronyms may be introducedin the detailed description:
- 3GPP: 3rd Generation Partnership Project
- 5GC: 5G Core Network
- ACK: Acknowledgement
- AMF: Access and Mobility Management Function
- ARQ: Automatic Repeat Request
- AS: Access Stratum
- ASIC: Application-Specific Integrated Circuit
- BA: Bandwidth Adaptation
- BCCH: Broadcast Control Channel
- BCH: BroadcastChannel
- BPSK: Binary Phase Shift Keying
- BWP: Bandwidth Part
- CA: Carrier Aggregation
- CC: Component Carrier
- CCCH: Common ControlCHannel
- CDMA: Code Division Multiple Access
- CN: Core Network
- CP: Cyclic Prefix
- CP-OFDM: Cyclic Prefix- Orthogonal Frequency Division Multiplex
- C-RNTI: Cell-Radio Network Temporary Identifier
- CS: Configured Scheduling
- CSI: Channel State Information
- CSI-RS: Channel State Information-Reference Signal
- CQI: Channel Quality Indicator
- CSS: Common Search Space
- CU: Central Unit
- DC: Dual Connectivity
- DCCH: Dedicated Control Channel
- DCI: Downlink Control Information
- DL: Downlink
- DL-SCH: Downlink Shared CHannel
- DM-RS: DeModulationReference Signal
- DRB: Data Radio Bearer
- DRX: Discontinuous Reception
- DTCH: Dedicated Traffic Channel
- DU: Distributed Unit
- EPC: Evolved Packet Core
- E-UTRA: Evolved UMTS Terrestrial Radio Access
- E-UTRAN: Evolved-Universal Terrestrial Radio Access Network
- FDD: Frequency Division Duplex
- FPGA: Field Programmable Gate Arrays
- F1-C: F1-Control plane
- F1-U: F1-User plane
- gNB: next generation Node B
- HARQ: Hybrid Automatic RepeatreQuest
- HDL: Hardware Description Languages
- IE: Information Element
- IP: Internet Protocol
- LCID: Logical Channel Identifier
- LTE: Long Term Evolution
- MAC: Media Access Control
- MCG: Master Cell Group
- MCS: Modulation and Coding Scheme
- MeNB: Master evolved Node B
- MIB: Master Information Block
- MME: Mobility ManagementEntity
- MN: MasterNode
- NACK: Negative Acknowledgement
- NAS: Non-Access Stratum
- NG CP: Next Generation Control Plane
- NGC: Next Generation Core
- NG-C: NG-Control plane
- ng-eNB: next generation evolved Node B
- NG-U: NG-User plane
- NR: New Radio
- NR MAC: New Radio MAC
- NR PDCP: New Radio PDCP
- NR PHY: New Radio PHYsical
- NR RLC: New Radio RLC
- NR RRC: New Radio RRC
- NSSAI: Network Slice Selection Assistance Information
- O&M: Operation and Maintenance
- OFDM: Orthogonal Frequency Division Multiplexing
- PBCH: Physical Broadcast CHannel
- PCC: Primary Component Carrier
- PCCH: Paging Control CHannel
- PCell: Primary Cell
- PCH: Paging CHannel
- PDCCH: Physical Downlink Control CHannel
- PDCP: Packet Data Convergence Protocol
- PDSCH: Physical Downlink Shared CHannel
- PDU: Protocol Data Unit
- PHICH: Physical HARQ Indicator CHannel
- PHY: PHYsical
- PLMN: Public Land Mobile Network
- PMI: Precoding Matrix Indicator
- PRACH: Physical Random Access CHannel
- PRB: Physical Resource Block
- PSCell: Primary Secondary Cell
- PSS: Primary Synchronization Signal
- pTAG: primary Timing Advance Group
- PT-RS: Phase Tracking Reference Signal
- PUCCH: Physical Uplink Control CHannel
- PUSCH: Physical Uplink Shared CHannel
- QAM: Quadrature Amplitude Modulation
- QFI: Quality of Service Indicator
- QoS: Quality of Service
- QPSK: Quadrature Phase Shift Keying
- RA: RandomAccess
- RACH: RandomAccess CHannel
- RAN: Radio Access Network
- RAT: Radio Access Technology
- RA-RNTI: Random Access-Radio Network Temporary Identifier
- RB: Resource Blocks
- RBG: Resource Block Groups
- RI: Rank indicator
- RLC: Radio Link Control
- RRC: Radio Resource Control
- RS: Reference Signal
- RSRP: Reference Signal Received Power
- SCC: Secondary Component Carrier
- SCell: Secondary Cell
- SCG: Secondary Cell Group
- SC-FDMA: Single Carrier-Frequency Division Multiple Access
- SDAP: Service Data Adaptation Protocol
- SDU: Service Data Unit
- SeNB: Secondary evolved Node B
- SFN: System Frame Number
- S-GW: Serving GateWay
- SI: System Information
- SIB: System Information Block
- SMF: SessionManagement Function
- SN: Secondary Node
- SpCell: Special Cell
- SRB: Signaling Radio Bearer
- SRS: Sounding Reference Signal
- SS: Synchronization Signal
- SSS: Secondary Synchronization Signal
- sTAG: secondary Timing Advance Group
- TA: Timing Advance
- TAG: Timing Advance Group
- TAI: Tracking Area Identifier
- TAT: Time Alignment Timer
- TB: Transport Block
- TC-RNTI: Temporary Cell-Radio Network Temporary Identifier
- TDD: Time Division Duplex
- TDMA: Time Division Multiple Access
- TTI: Transmission Time Interval
- UCI: Uplink Control Information
- UE: User Equipment
- UL: Uplink
- UL-SCH: Uplink Shared CHannel
- UPF: User Plane Function
- UPGW: User Plane Gateway
- VHDL: VHSIC Hardware Description Language
- Xn-C: Xn-Controlplane
- Xn-U: Xn-Userplane

Examples described herein may be implemented using various physical layer modulation and transmission mechanisms. Example transmission mechanisms may include, but are not limited to: Code Division Multiple Access (CDMA), Orthogonal Frequency Division Multiple Access (OFDMA), Time Division Multiple Access (TDMA), Wavelet technologies, and/or the like. Hybrid transmission mechanisms suchas TDMA/CDMA, and/or OFDM/CDMA may be used. Various modulation schemes may be used for signal transmission in the physical layer. Examples ofmodulation schemes include, but are not limited to: phase, amplitude, code, a combination of these, and/or the like. An example radio transmission method may implement Quadrature Amplitude Modulation (QAM) using Binary Phase Shift Keying (BPSK), Quadrature Phase Shift Keying (QPSK), 16-QAM, 64-QAM, 256-QAM, and/or the like. Physical radio transmission may be enhanced by dynamically or semi-dynamically changing the modulation and coding scheme, for example, depending on transmission requirements and/or radio conditions.

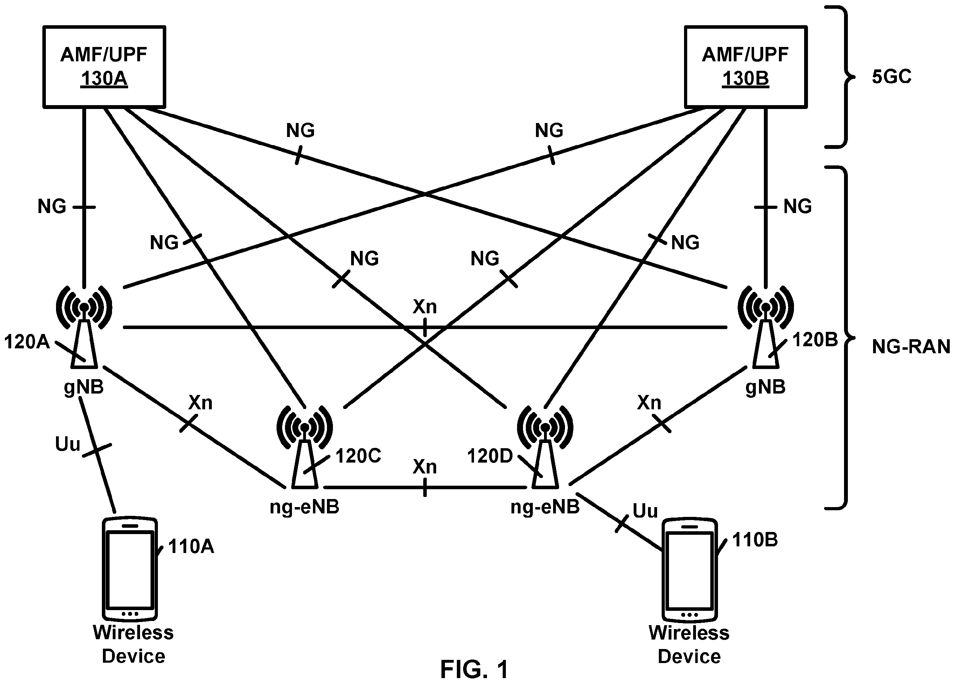

FIG. 1 shows an example Radio Access Network (RAN) architecture. A RAN node may comprise a next generation Node B (gNB) (e.g., 120A, 120B) providing New Radio (NR) user plane and control plane protocol terminations towards a first wireless device (e.g., 110A). A RAN node may comprise a base station such as a next generationevolvedNode B (ng-eNB) (e.g., 120C, 120D), providing EvolvedUMTS TerrestrialRadio Access (E-UTRA) user plane and control plane protocol terminations towards a second wireless device (e.g., 110B). A first wireless device 110A may communicate with a base station, such as a gNB 120A, over a Uu interface. A second wireless device 110B may communicate with abase station, such as an ng-eNB 120D, over a Uu interface.

A base station , such as a gNB (e.g., 120A, 120B, etc.) and/or an ng-eNB (e.g., 120C, 120D, etc.) may host functions such as radio resource management and scheduling, IP header compression, encryption and integrity protection of data, selection of Access and Mobility Management Function (AMF) at wireless device (e.g., User Equipment (UE)) attachment, routing of user plane and control plane data, connection setup and release, scheduling and transmission of paging messages (e.g., originated from the AMF), scheduling and transmission of system broadcast information (e.g., originated from the AMF or Operation and Maintenance (O&M)), measurement and measurement reporting configuration, transport level packet marking in the uplink, session management, support of network slicing, Quality of Service (QoS) flow management and mapping to data radio bearers, support of wireless devices in an inactive state (e.g., RRC_INACTIVE state), distribution function for Non-Access Stratum (NAS) messages, RAN sharing, dual connectivity, and/or tight interworking between NR and E-UTRA.

One or more first base stations (e.g., gNBs 120A and 120B) and/or one or more second base stations (e.g., ng-eNBs 120C and 120D) may be interconnected with each other via Xn interface. A first base station (e.g., gNB 120A, 120B, etc.) or a second base station (e.g., ng-eNB 120C, 120D, etc.) may be connected via NG interfaces to a network, such as a 5GCore Network (5GC). A 5GC may comprise one or more AMF/User Plan Function (UPF) functions (e.g., 130A and/or 130B). A base station (e.g., a gNB and/or an ng-eNB) may be connected to a UPF via an NG-User plane (NG-U) interface. The NG-U interface may provide delivery (e.g., non-guaranteed delivery) of user plane Protocol Data Units (PDUs) between a RAN node and the UPF. A base station (e.g., an gNB and/or an ng-eNB) may be connected to an AMF via an NG-Control plane (NG-C) interface. The NG-C interface may provide functions such as NG interface management, wireless device (e.g., UE) context management, wireless device (e.g., UE) mobility management, transport ofNAS mes sages, paging, PDU session management, configuration transfer, and/or warning message transmission.

A UPF may hostfunctions such as anchor point for intra-/inter-Radio Access Technology (RAT) mobility (e.g., if applicable), external PDU ses sionpoint of interconnect to data network, packet routing and forwarding, packet inspection and user plane part of policy rule enforcement, traffic usage reporting, uplink classifier to support routing traffic flows to a data network, branching point to support multi-homed PDU session, quality of service (QoS) handling for user plane, packet filtering, gating, Uplink (UL)/Downlink (DL) rate enforcement, uplink traffic verification (e.g., Service Data Flow (SDF) to QoS flow mapping), downlink packet buffering, and/or downlink data notification triggering.

An AMF may host functions such as NAS signaling termination, NAS signaling security, Access Stratum (AS) security control, inter Core Network (CN) node signaling (e.g., for mobility between 3rd Generation Partnership Project (3GPP) access networks), idle mode wireless device reachability (e.g., control and execution of paging retransmission), registration area management, support of intra-system and inter-system mobility, access authentication, access authorization including check of roaming rights, mobility management control (e.g., subscriptionand/orpolicies), support ofnetworkslicing, and/or Session Management Function (SMF) selection.

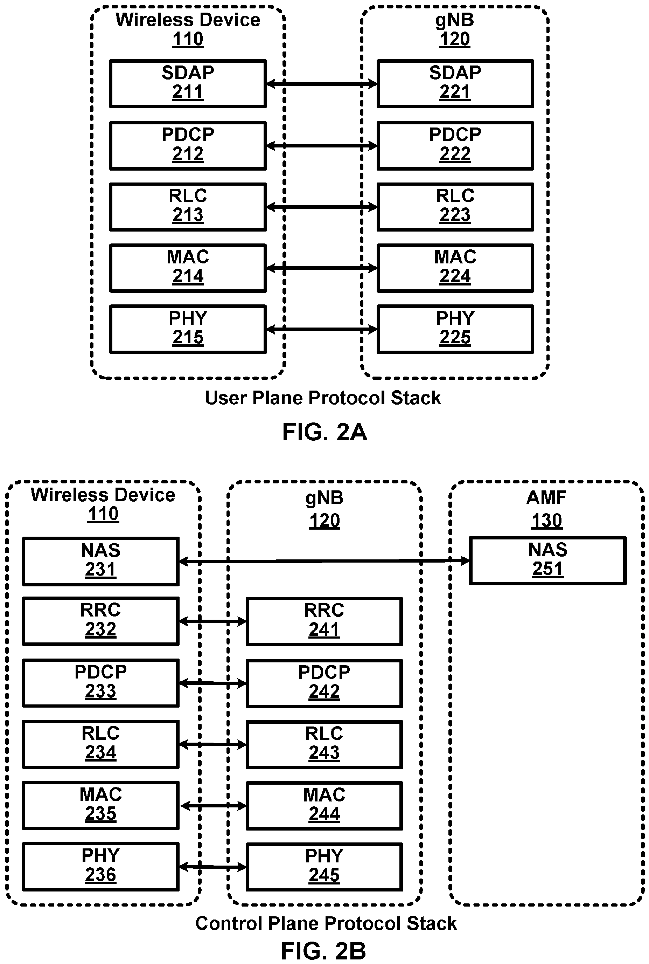

FIG. 2A shows an example userplane protocol stack. A Service Data AdaptationProtocol(SDAP) (e.g., 211 and 221), Packet Data Convergence Protocol (PDCP) (e.g., 212 and 222), Radio Link Control (RLC) (e.g., 213 and 223), and Media Access Control (MAC) (e.g., 214 and 224) sublayers, and a Physical (PHY) (e.g., 215 and 225) layer, may be terminated in a wireless device (e.g., 110) and in a base station (e.g., 120) on a network side. A PHY layermay provide transport services to higher layers (e.g., MAC, RRC, etc.). Services and/or functions of a MAC sublayer may comprise mapping between logical channels and transport channels, multiplexing and/or demultiplexing of MAC Service Data Units (SDUs) belonging to the same or different logical channels into and/or from Transport Blocks (TBs) delivered to and/or from the PHY layer, scheduling information reporting, error correction through Hybrid Automatic Repeat request (HARQ) (e.g., one HARQ entity per carrier for Carrier Aggregation (CA)), priority handling between wireless devices such as by using dynamic scheduling, priority handling between logical channels of a wireless device such as by using logical channel prioritization, and/or padding. A MAC entity may support one or multiple numerologies and/or transmission timings. Mapping restrictions in a logical channel prioritization may control which numerology and/or transmission timing a logical channel may use. An RLC sublayer may support transparent mode (TM), unacknowledged mode (UM), and/or acknowledged mode (AM) transmission modes. The RLC configuration may be per logical channel with no dependency on numerologies and/or Transmission Time Interval (TTI) durations. Automatic Repeat Request (ARQ) may operate on any of the numerologies and/or TTI durations with which the logical channel is configured. Services and functions of the PDCP layer for the user plane may comprise, for example, sequence numbering, header compression and decompression, transfer of user data, reordering and duplicate detection, PDCP PDU routing (e.g., such as for split bearers), retransmission of PDCP SDUs, ciphering, deciphering and integrity protection, PDCP SDU discard, PDCP re-establishment and data recovery for RLC AM, and/or duplication of PDCP PDUs. Services and/or functions of SDAP may comprise, for example, mapping between a QoS flow and a data radio bearer. Services and/or functions of SDAP may comprise mapping a Quality of Service Indicator (QFI) in DL and UL packets. A protocol entity of SDAP may be configured for an individual PDU session.

FIG. 2B shows an example controlplane protocol stack. A PDCP (e.g., 233 and 242), RLC (e.g., 234 and 243), and MAC (e.g., 235 and 244) sublayers, and a PHY (e.g., 236 and 245) layer, may be terminated in a wireless device (e.g., 110), and in a base station (e.g., 120) on a network side, and perform service and/or functions described above. RRC(e.g., 232 and 241) may be terminated in a wireless device and a base station on a network side. Services and/or functions of RRC may comprise broadcast of system information related to AS and/orNAS; paging (e.g., initiated by a 5GC or a RAN); establishment, maintenance, and/or release of an RRC connection between the wireless device and RAN; security functions such as key management, establishment, configuration, maintenance, and/or release of Signaling Radio Bearers (SRBs) and Data Radio Bearers (DRBs); mobility functions; QoS management functions; wireless device measurement reporting and control of the reporting; detection of and recovery fromradio link failure; and/orNAS message transfer to/from NAS from/to a wireless device. NAS control protocol (e.g., 231 and 251) may be terminated in the wireless device and AMF (e.g., 130) on a network side. NAS control protocol may perform functions such as authentication, mobility management between a wireless device and an AMF (e.g., for 3GPP access and non -3GPP access), and/or session management between a wireless device and an SMF (e.g., for 3GPP access andnon-3GPP access).

A base station may configure a plurality of logical channels for a wireless device. A logical channel ofthe plurality of logical channels may correspond to a radio bearer. The radio bearer may be associated with a QoS requirement. A base station may configure a logical channel to be mapped to one or more TTIs and/or numerologies in a plurality of TTIs and/or numerologies. The wireless device may receive Downlink Control Information (DCI) via a Physical Downlink Control CHannel (PDCCH) indicating an uplink grant. The uplink grant may be for a first TTI and/or a first numerology and may indicate uplinkresources for transmission of a transport block. The base station may configure each logical channel in the plurality of logical channels with one ormore parameters to be used by a logical channel prioritization procedure at the MAC layer of the wireless device. The one or more parameters may comprise, for example, priority, prioritized bit rate, etc. A logical channel in the plurality of logical channels may correspond to one ormore buffers comprising data associated with the logical channel The logical channel prioritization procedure may allocate the uplinkresources to one ormore first logical channels in the plurality of logical channels and/orto one ormore MAC Control Elements (CEs). The one ormore first logical channels may be mappedto the first TTI and/or the first numerology. The MAC layer at the wireless device may multiplex one or more MAC CEs and/or one or more MAC SDUs (e.g., logical channel) in a MAC PDU (e.g., transport block). The MAC PDU may comprise a MAC header comprising a plurality of MAC sub-headers. A MAC sub-header in the plurality of MAC sub-headers may correspond to a MAC CEor a MAC SUD (e.g., logical channel) in the one or more MAC CEs and/or in the one or more MAC SDUs. A MAC CE and/or a logical channel may be configured withaLogicalChannelIDentifier(LCID). An LCID for a logicalchanneland/oraMACCE may be fixed and/or pre-configured. An LCID for a logical channel and/or MACCE may be configured for the wireless device by the base station. The MAC sub-header corresponding to a MACCE and/or a MAC SDU may comprise an LCID as s ociated with the MAC CE and/or the MAC SDU.

A base station may activate, deactivate, and/or impact one or more processes (e.g., set values of one or more parameters ofthe one ormore processes or start and/or stop one ormore timers of the one ormore processes) at the wireless device, for example, by using one ormore MACcommands. The one ormore MACcommands may comprise one or more MAC control elements. The one or more processes may comprise activation and/or deactivation of PDCP packet duplication for one or more radio bearers. The base station may send (e.g., transmit) a MACCE comprising one or more fields. The values of the fields may indicate activation and/or deactivation of PDCP duplication for the one or more radio bearers. The one or more processes may comprise Channel State Information (CSI) transmission of on one or more cells. The base station may send (e.g., transmit) one or more MAC CEs indicating activation and/or deactivation ofthe CSI transmission on the one ormore cells. The one or more processes may comprise activation and/or deactivation of one or more secondary cells. The base station may send (e.g., transmit) a MA CE indicating activation and/or deactivation of one ormore secondary cells. The base station may send (e.g., transmit) one or more MAC CEs indicating starting and/or stopping of one or more Discontinuous Reception (DRX) timers at the wireless device. The base stationmay send (e.g., transmit) one or more MACCEs indicating one ormore timing advance values for one or more Timing Advance Groups (TAGs).

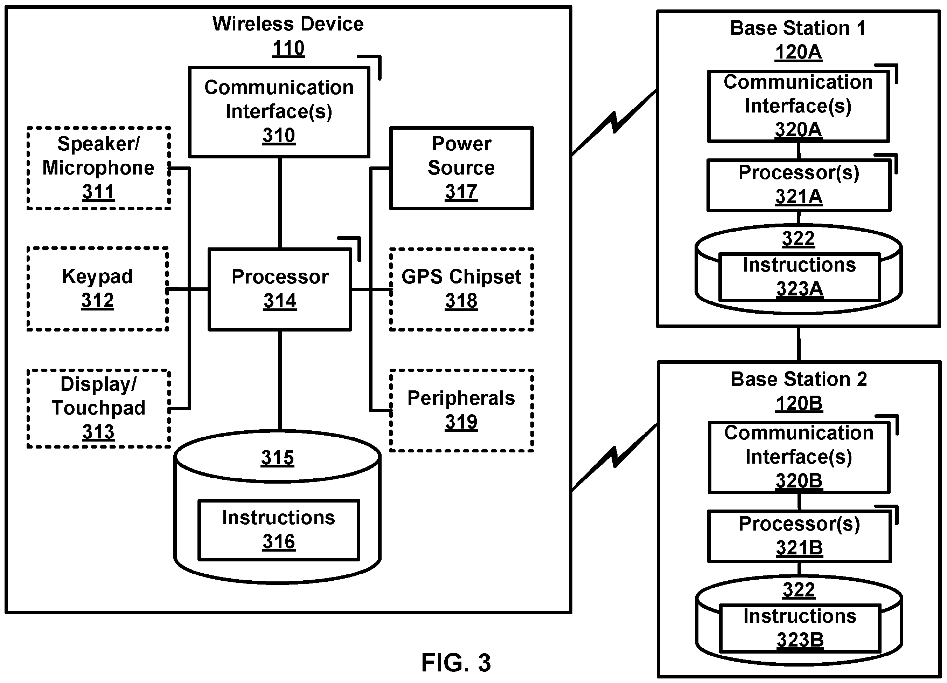

FIG. 3 shows an example ofbase stations (base station 1, 120A, and base station 2, 120B) and a wireless device 110. The wireless device 110 may comprise a UE or any other wireless device. The base station (e.g., 120A, 120B) may comprise a Node B, eNB, gNB, ng-eNB, or any otherbase station. A wireless device and/orabase station may perform one or more functions of a relay node. The base station 1, 120A, may comprise at least one communication interface 320A (e.g., a wireless modem, an antenna, a wired modem, and/orthe like), at least one processor 321A, and at least one set of program code instructions 323A that may be stored in non-transitory memory 322A and executable by the atleastone processor 321A. The base station 2, 120B, may comprise at least one communication interface 320B, at least one processor 321B, and at least one set of program code instructions 323B that may be stored in non-transitory memory 322B and executable by the at least one processor 321B.

A base station may comprise any number of sectors, for example: 1, 2, 3, 4, or 6 sectors. A base station may comprise any number of cells, for example, ranging from 1 to 50 cells or more. A cell may be categorized, for example, as a primary cell or secondary cell. At Radio Resource Control (RRC) connection establishment, re-establishment, handover, etc., a serving cell may provide NAS (non-access stratum) mobility information (e.g., Tracking Area Identifier (TAI)). At RRC connection re-establishment and/or handover, a serving cell may provide security input. This serving cell may be referred to as the Primary Cell (PCell). In the downlink, a carrier corresponding to the PCell may be a DL Primary Component Carrier (PCC). In the uplink, a carrier may be an UL PCC. Secondary Cells (SCells) may be configured to form together with a PCell a set of serving cells, for example, depending on wireless device capabilities. In a downlink, a carrier corresponding to an SCell may be a downlink secondary component carrier (DL SCC). In an uplink, a carrier may be an uplink secondary component carrier (UL SCC). An SCell may or may not have an uplink carrier.

A cell, comprising a downlink carrier and optionally an uplink carrier, may be as signed a physical cell ID and/or a cell index A carrier (downlink and/or uplink) may belong to one cell. The cell ID and/or cell indexmay identify the downlink carrier and/or uplink carrier of the cell (e.g., depending on the context it is used). A cell ID may be equally referred to as a carrier ID, and a cell indexmay be referred to as a carrier index A physical cell ID and/or a cell index may be as signed to a cell. A cell ID may be determined using a synchronization signal transmitted via a downlink carrier. A cell index may be determined using RRC messages. A first physical cell ID for a first downlink carrier may indicate that the first physical cell ID is for a cell comprising the first downlink carrier. The same conceptmay be used, for example, with carrier activation and/or deactivation (e.g., secondary cell activation and/or deactivation). A first carrier that is activatedmay indicate that a cell comprising the first carrier is activated.

A base station may send (e.g., transmit) to a wireless device one or more messages (e.g., RRC messages) comprising a plurality of configuration parameters for one or more cells. One or more cells may comprise at least one primary cell and at least one secondary cell. An RRC message may be broadcasted and/or unicasted to the wireless device. Configuration parameters may comprise common parameters and dedicated parameters.

Services and/or functions of an RRC sublayer may comprise at least one of: broadcast of system information related to AS and/or NAS; paging initiated by a 5GC and/or an NG-RAN; establishment, maintenance, and/or release of an RRC connection between a wireless device and an NG-RAN, which may comprise at least one of addition, modification, and/or release of carrier aggregation; and/or addition, modification, and/or release of dual connectivity in NRor between E-UTRA and NR. Services and/or functions of an RRC sublayer may comprise at least one of security functions comprising key management; establishment, configuration, maintenance, and/or release of Signaling Radio Bearers (SRBs) and/or Data Radio Bearers (DRBs); mobility functions which may comprise at least one of a handover (e.g., intra NR mobility or inter-RAT mobility) and/or a context transfer, and/or a wireless devicecell s election and/or res election and/or control of cell selection and reselection. Services and/orfunctions of an RRCsublayermay comprise at least one ofQoS management functions; a wireless device measurement configuration/reporting; detection of and/or recovery fromradio link failure; and/orNAS message transfer to and/or from a core network entity (e.g., AMF, Mobility Management Entity (MME)) from and/or to the wireless device.

An RRC sublayermay support an RRC_Idle state, an RRC_Inactive state, and/or an RRC_Connected state for a wireless device. In an RRC Idle state, a wireless device may performat leastone of: Public Land Mobile Network (PLMN) s election; receiving broadcasted system information; cell s election and/or re -selection; monitoring and/or receiving a paging for mobile terminated data initiated by 5GC; paging for mobile terminated data areamanaged by 5GC; and/or DRX for CN paging configured via NAS. In an RRC_Inactive state, a wireless device may perform at least one of: receiving broadcasted system in formation; cell selection and/orre -selection; monitoring and/or receiving a RAN and/or CN paging initiated by an NG-RAN and/or a 5GC; RAN-based notification area (RNA) managed by an NG- RAN; and/or DRX for a RAN and/or CN paging configured by NG-RAN/NAS. In an RRC_Idle state of a wireless device, a base station (e.g., NG-RAN) may keep a 5GC-NG-RAN connection (e.g., both C/U-planes) for the wireless device; and/or store a wireless device AS context for the wireless device. In an RRC_Connected state of a wireless device, a base station (e.g., NG-RAN) may perform at least one of establishment of 5GC-NG-RAN connection (both C/U-planes) for the wireless device; storing a UE AS context for the wireless device; send (e.g., transmit) and/or receive of unicast data to and/or from the wireless device; and/or network-controlled mobility based on measurement results received from the wireless device. In an RRC_Connected state of a wireless device, an NG-RAN may know a cell to which the wireless device belongs.

System information (SI) may be divided into minimum SI and other SI. The minimum SI may be periodically broadcast. The minimum SI may comprise basic information required for initial access and/or information for acquiring any other SI broadcast periodically and/or provisioned on-demand (e.g., scheduling information). The other SI may either be broadcast, and/or be provisioned in a dedicated manner, such as either triggered by a network and/or upon request from a wireless device. A minimum SI may be transmitted via two different downlink channels using different messages (e.g., Master Information Block and System Information Block Type1). Another SI may be transmitted via System Information Block Type2. For a wireless device in an RRC_Connected state, dedicated RRC signalling may be used forthe request and delivery ofthe other SI. For the wireless device in the RRC_Idle state and/or in the RRC_Inactive state, the request may trigger a random-access procedure.

A wireless device may report its radio access capability information, which may be static. A base station may request one or more indications of capabilities for a wireless device to report based on band information. A temporary capability restriction requestmay be sent by the wireless device (e.g., if allowed by a network) to signal the limited availability of some capabilities (e.g., dueto hardware sharing, interference, and/or overheating) to the base station. The base station may confirm or reject the request. The temporary capability restriction may be transparent to 5GC (e.g., only static capabilities may be stored in 5GC).

A wireless device may have an RRC connection with a network, for example, if CA is configured. At RRC connection establishment, re-establishment, and/or handover procedures, a serving cell may provide NAS mobility information. At RRC connection re-establishmentand/or handover, a serving cell may provide a security input. This serving cellmay be referred to as the PCell. SCells may be configuredto form together with the PCell a set of serving cells, for example, depending on the capabilities of the wireless device. The configured set of serving cells forthe wireless device may comprise a PCell and one ormore SCells.

The reconfiguration, addition, and/or removal of SCells may be performed by RRC messaging. At intra-NR handover, RRC may add, remove, and/or reconfigure SCells for usage with the target PCell. Dedicated RRC signaling may be used (e.g., if adding anew SCell) to send all required system information ofthe SCell (e.g., if in connected mode, wireless devices may not acquire broadcasted system information directly from the SCells).

The purpose of an RRC connection reconfiguration procedure may be to modify an RRC connection, (e.g., to establish, modify, and/or release RBs; to perform handover; to setup, modify, and/or release measurements, for example, to add, modify, and/or release SCells and cell groups). NAS dedicated information may be transferred from the networkto the wireless device, for example, as part of the RRC connection reconfiguration procedure. The RRCConnectionReconfiguration message may be a command to modify an RRC connection. One or more RRC messages may convey information for measurement configuration, mobility control, and/orradio resource configuration (e.g., RBs, MAC main configuration, and/or physical channel configuration), which may comprise any associated dedicated NAS information and/or security configuration. The wireless device may perform an SCell release, for example, if the received RRC Connection Reconfiguration message includes the sCellToReleaseList. The wireless device may perform SCell additions or modification, for example, if the received RRC Connection Reconfiguration message includes the sCellToAddModList.

An RRC connection establishment, reestablishment, and/or resume procedure may be to establish, reestablish, and/or resume an RRC connection, respectively. An RRC connection establishment procedure may comprise SRB1 establishment. The RRC connection establishment procedure may be used to transfer the initial NAS dedicated information and/or message from a wireless device to a E-UTRAN. The RRCConnection Reestablishment message may be used to re-establish SRB1.

A measurement report procedure may be used to transfermeasurementresults from a wireless device to an NG-RAN. The wireless device may initiate a measurement report procedure, for example, after successful security activation. A measurementreportmessage may be used to send (e.g., transmit) measurement results.

The wireless device 110 may comprise at least one communication interface 310 (e.g., a wireless modem, an antenna, and/or the like), at least one processor 314, and at least one set of program code instructions 316 that may be stored in non-transitory memory 315 and executable by the at least one processor 314. The wireless device 110 may further comprise at least one of at least one speaker and/ormicrophone 311, at least one keypad 312, at least one display and/or touchpad 313, at least one power source 317, at least one global positioning system (GPS) chipset 318, and/or other peripherals 319.

The processor 314 of the wireless device 110, the processor 321A of the base station 1120A, and/or the processor 321B of the base station 2 120B may comprise at least one of a general-purpose processor, a digital signal processor (DSP), a controller, a microcontroller, an application specific integrated circuit (ASIC), a field programmable gate array (FPGA) and/or other programmable logic device, discrete gate and/or transistor logic, discrete hardware components, and/orthe like. The processor 314 ofthe wireless device 110, the processor 321A in base station 1120A, and/or the processor 321B in base station 2120Bmay perform at least one of signalcoding and/or processing, data processing, power control, input/output processing, and/or any other functionality that may enable the wireless device 110, the base station 1120A and/orthe base station 2120Bto operate in a wireless environment.

The processor 314 of the wireless device 110may be connected to and/or in communication with the speaker and/or microphone 311, the keypad 312, and/or the display and/or touchpad 313. The processor 314 may receive user input data from and/or provide user output data to the speaker and/or microphone 311, the keypad 312, and/or the display and/or touchpad 313. The processor 314 in the wireless device 110 may receive power from the power source 317 and/or may be configuredto distribute the powerto the other components in the wireless device 110. The power source 317may comprise at least one of one or more dry cell batteries, solar cells, fuel cells, and/or the like. The processor 314 may be connected to the GPS chipset318. The GPS chipset318 may be configured to provide geographic location information of the wireless device 110.

The processor 314 of the wireless device 110 may further be connected to and/or in communication with other peripherals 319, which may comprise one or more software and/or hardware modules that may provide additional features and/or functionalities. For example, the peripherals 319 may comprise at least one of an accelerometer, a satellite transceiver, a digital camera, a universal serial bus (USB) port, a hands -free headset, a frequency modulated (FM) radio unit, a media player, an Internet browser, and/or the like.

The communication interface 320A ofthe base station 1, 120A, and/or the communication interface 320B of the base station 2, 120B, may be configured to communicate with the communication interface 310 of the wireless device 110, for example, via a wireless link 330A and/or via a wireless link 330B, respectively. The communication interface 320A ofthe base station 1, 120A, may communicate with the communication interface 320B of the base station 2 and/or other RAN and/or core networknodes.

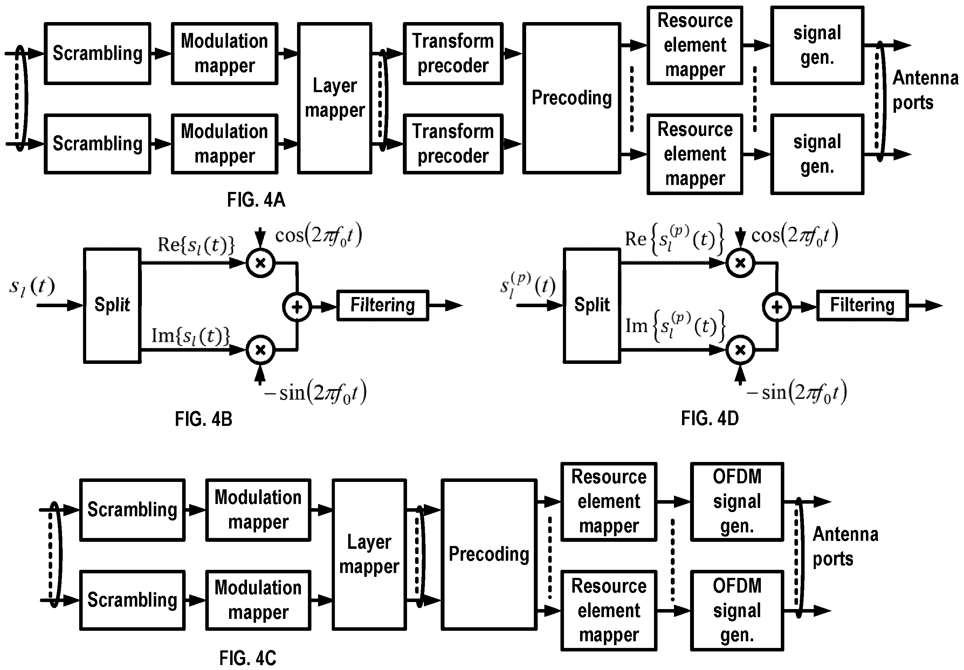

The wireless link 330A and/orthe wireless link330B may comprise at least one ofabi-directionallinkand/ora directional link. The communication interface 310 of the wireless device 110 may be configuredto communicate with the communication interface 320A ofthe base station 1120A and/or with the communication interface 320B of the base station 2120B. The base station 1120A and the wireless device 110, and/orthe base station2 120B and the wireless device 110, may be configuredto send and receive transportblocks, for example, via the wireless link 330A and/or via the wireless link330B, respectively. The wireless link 330A and/or the wireless link 330B may use at leastone frequency carrier. Transceiver(s) may be used. A transceiver may be a device that comprises both a transmitter and a receiver. Transceivers may be used in devices such as wireless devices, base stations, relay nodes, computing devices, and/or the like. Radio technology may be implemented in the communication interface 310, 320A, and/or 320B, and the wireless link 330A and/or 330B. The radio technology may comprise one or more elements shown in FIG. 4A, FIG. 4B, FIG. 4C, FIG. 4D, FIG 6, FIG. 7A, FIG 7B, FIG. 8, and associated text, described below.

Other nodes in a wireless network (e.g. AMF, UPF, SMF, etc.) may comprise one or more communication interfaces, one ormore processors, and memory storing instructions. A node (e.g., wireless device, base station, AMF, SMF, UPF, servers, switches, antennas, and/or the like) may comprise one ormore processors, and memory storing instructions that when executed by the one or more processors causes the node to perform certain processes and/or functions. Single-carrier and/or multi-carrier communication operation may be performed. A non-transitory tangible computerreadable media may comprise instructions executable by one ormore processors to cause operation of single-carrier and/or multi-carrier communications. An article ofmanufacturemay comprise a non-transitory tangible computer readable machine-accessible medium having instructions encoded thereon for enabling programmable hardware to cause a node to enable operation of single -carrier and/or multi-carrier communications. Thenode may include processors, memory, interfaces, and/or the like.

An interface may comprise at least one of a hardware interface, a firmware interface, a software interface, and/or a combination thereof. The hardware interface may comprise connectors, wires, and/or electronic devices such as drivers, amplifiers, and/or the like. The software interface may comprise code stored in a memory device to implement protocol(s), protocol layers, communication drivers, device drivers, combinations thereof, and/orthe like. The firmware interface may comprise a combination of embedded hardware and/or code stored in (and/or in communication with) a memory device to implement connections, electronic device operations, protocols), protocol layers, communication drivers, device drivers, hardware operations, combinations thereof, and/or the like.

A communication network may comprise the wireless device 110, the base station 1, 120A, the base station 2, 120B, and/or any other device. The communication network may comprise any number and/or type of devices, such as, for example, computing devices, wireless devices, mobile devices, handsets, tablets, laptops, internet of things (IoT) devices, hotspots, cellular repeaters, computing devices, and/or, more generally, user equipment(e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, or any other network for wireless communications. Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network As used throughout, the term "base station" may comprise one or more of: a base station, a node, a Node B, a gNB, an eNB, an ng-eNB, a relay node (e.g., an integrated access and backhaul (IAB) node), a donornode (e.g., a donor eNB, a donor gNB, etc.), an access point (e.g., a WiFi access point), a computing device, a device capable of wirelessly communicating, or any other device capable of sending and/or receiving signals. As used throughout, the term "wireless device" may comprise one ormore of: a UE, a handset, a mobile device, a computing device, a node, a device capable of wireles sly communicating, or any other device capable of sending and/or receiving signals. Any reference to one or more of these terms/devices also considers use of any other term/device mentioned above.

FIG. 4A, FIG. 4B, FIG. 4C and FIG. 4D show examples of uplink and downlink signal transmission. FIG. 4A shows an example uplink transmitter for at least one physical channel. A baseband signal representing a physical uplink shared channel may perform one ormore functions. Theone ormore functions may comprise at least one of: scrambling (e.g., by Scrambling); modulation of scrambled bits to generate complex-valued symbols (e.g., by a Modulation mapper); mapping of the complex-valued modulation symbols onto one or several transmission layers (e.g., by a Layermapper); transform precoding to generate complex-valued symbols (e.g., by a Transform precoder); precodingofthe complex-valued symbols (e.g., by a Precoder); mappingofprecoded complex-valued symbols to resource elements (e.g., by a Resource element mapper); generation of complex-valued time-domain Single Carrier-Frequency Division Multiple Access (SC-FDMA) or CP-OFDM signal for an antenna port (e.g., by a signal gen.); and/or the like. A SC-FDMA signal for uplink transmission may be generated, for example, if transform precoding is enabled. An CP-OFDM signal for uplink transmission may be generated by FIG. 4A, for example, if transform precoding is not enabled. These functions are shown as examples and other mechanisms may be implemented.

FIG 4B shows an example of modulation and up-conversion to the carrier frequency of a complex-valued SC-FDMA or CP-OFDM baseband signal for an antennaport and/or for the complex-valued Physical Random Access CHannel (PRACH) baseband signal. Filtering may be performed prior to transmission.

FIG 4C shows an example of downlink transmissions. The baseband signal representing a downlink physical channelmay perform one or more functions. The one or more functions may comprise: scrambling of coded bits in a codeword to be transmitted on a physical channel (e.g., by Scrambling); modulation of scrambled bits to generate complex-valued modulation symbols (e.g., by a Modulation mapper); mapping of the complex-valued modulation symbols onto one or several transmission layers (e.g., by a Layer mapper); precoding of the complex-valued modulation symbols on a layer for transmission on the antenna ports (e.g., by Precoding); mapping of complex-valued modulation symbols for an antenna port to resource elements (e.g., by a Resource element mapper); generation of complex-valued time-domain OFDM signal for an antenna port (e.g., by an OFDM signal gen.); and/or the like. These functions are shown as examples and other mechanisms may be implemented.

A base station may send (e.g., transmit) a first symbol and a second symbol on an antenna port, to a wireless device. The wireless device may infer the channel (e.g., fading gain, multipath delay, etc.) for conveying the second symbol on the antenna port, from the channel for conveying the first symbol on the antenna port. A first antenna port and a second antennaport may be quasi co -located, for example, if one or more large-scale properties of the channel over which a first symbol on the first antenna port is conveyedmay be inferred from the channel over which a second symbolon a second antenna port is conveyed. The one ormore large -scale properties may comprise at least one of: delay spread; doppler spread; doppler shift; average gain; average delay; and/or spatial receiving (Rx) parameters.

FIG. 4D shows anexample modulation and up-conversion to the carrier frequency of the complex-valued OFDM baseband signal for an an tennaport. Filtering may be performed prior to transmission.

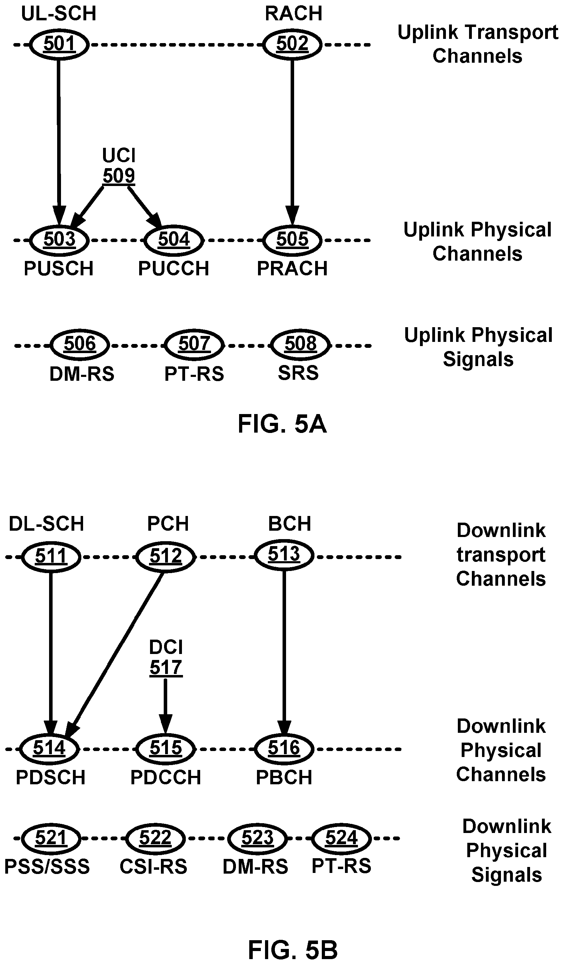

FIG. 5A shows example uplink channel mapping and example uplink physical signals. A physical layer may provide one or more information transfer services to a MAC and/or one or more higher layers. The physical layer may provide the one or more information transfer services to the MAC via one or more transport channels. An information transfer service may indicate how and/or with what characteristics data is transferred over the radio interface.

Uplink transport channels may comprise an Uplink-Shared CHannel (UL-SCH) 501 and/or a Random Access CHannel (RACH) 502. A wireless device may send (e.g., transmit) one or more uplink DM-RSs 506 to a base station for channel estimation, for example, for coherent demodulation of one ormore uplink physical channels (e.g., PUSCH 503 and/or PUCCH 504). The wireless device may send (e.g., transmit) to a base station at least one uplink DM-RS 506 with PUSCH 503 and/or PUCCH 504, wherein the at least one uplink DM-RS 506 may be spanning a same frequency range as a corresponding physical channel. The base station may configure the wireless device with one ormore uplinkDM-RS configurations. At leastone DM-RS configuration may support a front-loadedDM-RS pattern. A front-loadedDM-RS may be mapped over one ormore OFDM symbols (e.g., 1 or2 adjacentOFDM symbols). One ormore additional uplink DM-RS may be configuredto send (e.g., transmit) at one ormore symbols of a PUSCH and/or PUCCH. The base stationmay semi-statically configure the wireless device with a maximum number of front-loaded DM-RS symbols for PUSCH and/or PUCCH. The wireless device may schedule a single-symbol DM-RS and/or double symbol DM-RS based on a maximum number of front-loaded DM-RS symbols, wherein the base stationmay configure the wireless device with one ormore additional uplink DM-RS for PUSCH and/or PUCCH. A new radio network may support, for example, at least for CP-OFDM, a common DM-RS structure for DL and UL, wherein a DM-RS location, DM-RS pattern, and/or scrambling sequence may be same or different.

Whetherornot an uplinkPT-RS 507 is present may depend on an RRC configuration. A presence ofthe uplink PT-RS may be wireless device-specifically configured. A presence and/or a pattern ofthe uplink PT-RS 507 in a scheduled resource may be wireless device-specifically configured by a combination of RRC signaling and/or association with one or more parameters used for other purposes (e.g., Modulation and Coding Scheme (MCS)) which may be indicated by DCI. If configured, a dynamic presence of up link PT-RS 507 may be associated with one or more DCI parameters comprising at least a MCS. A radio networkmay support a plurality of uplink PT-RS densities defined in time/frequency domain. Ifpresent, a frequency domain density may be associated with at least one configuration of a scheduled bandwidth. A wireless device may as sume a same precoding for a DMRS port and a PT-RS port. A number of PT-RS ports may be fewer than a number of DM-RS ports in a scheduled resource. The uplink PT-RS 507 may be confined in the scheduledtime/frequency duration for a wireless device.

A wireless device may send (e.g., transmit) an SRS 508 to a base station for channelstate estimation, for example, to support uplink channel dependent scheduling and/or link adaptation. The SRS 508 sent (e.g., transmitted) by the wireless device may allow for the base station to estimate an uplink channel state at one or more different frequencies. A base stations cheduler may use an uplink channel state to assign one ormore resource blocks of a certain quality (e.g., above a quality threshold) for an uplink PUSCH transmissionfromthe wireless device. The base station may semi-statically configure the wireless device with one or more SRS resource sets. For an SRS resource set, the base station may configure the wireless device with one or more SRS resources. An SRS resource set applicability may be configured by a higher layer (e.g., RRC) parameter. An SRS resource in each of one or more SRS resource sets may be sent (e.g., transmitted) at a time instant, for example, if a higher layerparameter indicates beam management. The wireless device may send (e.g., transmit) one or more SRS resources in different SRS resource sets simultaneously. A new radio network may support aperiodic, periodic, and/or semi-persistent SRS transmissions. The wireless device may send (e.g., transmit) SRS resources, for example, based on one or more triggertypes. The one or more trigger types may comprise higher layer signaling (e.g., RRC) and/orone or more DCI formats (e.g., at least one DCI format may be used fora wireless deviceto select at least one of one or more configured SRS resource sets). An SRS trigger type 0 may refer to an SRS triggered based on a higher layer signaling. An SRS triggertype 1 may referto an SRS triggered based on one or more DCI formats. The wireless device may be configured to send (e.g., transmit) the SRS 508 after a transmission of PUSCH 503 and corresponding uplink DM-RS 506, for example, if PUSCH 503 and the SRS 508 are transmittedin a same slot.

A base station may semi-statically configure a wireless device with one or more SRS configuration parameters indicating at leastone of following: an SRS resource configuration identifier, a number of SRS ports, time domain behavior of SRS resource configuration (e.g., an indication of periodic, semi-persistent, or aperiodic SRS), sbt (mini-slot, and/or subframe) level periodicity and/or offset for aperiodic and/or aperiodic SRS resource, a number of OFDM symbols in a SRS resource, starting OFDM symbol of a SRS resource, an SRS bandwidth, a frequency hopping bandwidth, acyclic shift, and/or an SRS sequence ID.

FIG. 5B shows an example downlink channel mapping and downlink physical signals. Downlink transport channels may comprise a Downlink-Shared CHannel (DL-SCH) 511, a Paging CHannel (PCH) 512, and/or a Broadcast CHannel (BCH) 513. A transport channel may be mapped to one or more corresponding physical channels. A UL-SCH 501 may be mapped to a Physical Uplink Shared CHannel (PUSCH) 503. A RACH 502 may be mapped to a PRACH 505. A DL-SCH 511 and a PCH 512 may be mapped to a Physical Downlink Shared CHannel (PDSCH) 514. A BCH 513 may bemapped to a Physical Broadcast CHannel (PBCH) 516.

A radio networkmay comprise one ormore downlink and/or uplink transport channels. The radio network may comprise one or more physical channels without a corresponding transport channel. The one or more physical channels may beused for an Uplink ControlInformation (UCI) 509 and/ora Downlink Control Information (DCI) 517. A Physical Uplink Control CHannel (PUCCH) 504 may carry UCI 509 from a wireless device to a base station. A Physical Downlink Control CHannel (PDCCH) 515 may carry the DCI 517 from a base station to a wireless device. The radio network (e.g., NR) may support the UCI 509 multiplexing in the PUSCH 503, for example, if the UCI 509 and the PUSCH 503 transmissions may coincide in a slot (e.g., at least in part). The UCI 509 may comprise at least one of a CSI, an Acknowledgement (ACK)/Negative Acknowledgement (NACK), and/or a scheduling request. TheDCI 517 via the PDCCH 515 may indicate at leastone offollowing: one or more downlink as signments and/or one or more uplink scheduling grants.

In uplink, a wireless device may send (e.g., transmit) one ormore Reference Signals (RSs) to a base station. The one or more RSs may comprise atleastoneofaDemodulation-RS (DM-RS) 506, a Phase Tracking-RS(PT-RS) 507, and/or a Sounding RS (SRS) 508. In downlink, a base station may send (e.g., transmit, unicast, multicast, and/or broadcast) one or more RSs to a wireless device. The one or more RSs may comprise at least one of a Primary Synchronization Signal (PSS)/Secondary Synchronization Signal (SSS) 521, a CSI-RS 522, a DM-RS 523, and/or a PT-RS 524.

In a time domain, an SS/PBCH block may comprise one or more OFDM symbols (e.g., 4 OFDM symbols numbered in increasing order from 0 to 3) within the SS/PBCH block. An SS/PBCH block may comprise the PSS/SSS 521 and/or the PBCH 516. In the frequency domain, an SS/PBCH block may comprise one or more contiguous subcarriers (e.g., 240 contiguous subcarriers with the subcarriers numbered in increasing order from 0 to 239) within the SS/PBCH block. The PSS/SSS 521 may occupy, for example, 1 OFDM symbol and 127 subcarriers. The PBCH 516 may span across, for example, 3 OFDM symbols and 240 subcarriers. A wireless device may assume that one or more SS/PBCH blocks transmitted with a same block index may be quasi co-located, for example, with respect to Doppler spread, Doppler shift, average gain, average delay, and/or spatial Rx parameters. A wireless device may not as sume quasi co -location for other SS/PBCH block transmissions. A periodicity of an SS/PBCH block may be configured by a radio network (e.g., by an RRC signaling). One or more time locations in which the SS/PBCH block may be sent may be determined by sub-carrier spacing. A wireless device may assume a band-specific sub-carrier spacing for an SS/PBCH block, for example, unless a radio networkhas configured the wireless deviceto assume a different sub-carrier spacing.

The downlink CSI-RS 522 may be used for a wireless device to acquire channel state information. A radio network may support periodic, aperiodic, and/orsemi-persistenttransmission ofthedownlinkCSI-RS 522. A base station may semi-statically configure and/or reconfigure a wireless device with periodic transmission of the downlink CSI-RS 522. A configured CSI-RS resources may be activated and/or deactivated. For semi-persistent transmission, an activation and/or deactivation of a CSI-RS resource may be triggered dynamically. A CSI-RS configuration may comprise one or more parameters indicating at least a number of antenna ports. A base station may configure a wireless device with 32 ports, or any other number of ports. A base station may semi-statically configure a wireless device with one or more CSI-RS resource sets. One or more CSI-RS resources may be allocated from one or more CSI-RS resource sets to one or more wireless devices. A base station may semi-statically configure one or more parameters indicating CSI RS resource mapping, for example, time-domain location of one or more CSI-RS resources, a bandwidth of a CSI-RS resource, and/or a periodicity. A wireless device may be configured to use the same OFDM symbols for the downlink CSI-RS 522 and the Control Resource Set (CORESET), for example, if the downlink CSI-RS 522 and the CORESET are spatially quasi co-located and resource elements associated with the downlink CSI-RS 522 are the outside of PRBs configured for the CORESET. A wireless device may be configured to use the same OFDM symbols for downlink CSI-RS 522 and SSB/PBCH, for example, if the downlink CSI-RS 522 and SSB/PBCH are spatially quasi co-located and resource elements associated with the downlink CSI-RS 522 are outside ofthe PRBs configured for the SSB/PBCH.

A wireless device may send (e.g., transmit) one or more downlink DM-RSs 523 to a base station for channel estimation, for example, for coherent demodulation of one or more downlink physical channels (e.g., PDSCH 514). A radio network may support one or more variable and/or configurable DM-RS patterns for data demodulation. At least one downlink DM-RS configuration may supporta front-loadedDM-RS pattern. A front-loaded DM-RS may be mapped over one or more OFDM symbols (e.g., 1 or 2 adjacent OFDM symbols). A base stationmay semi-statically configure a wireless device with a maximum number offront-loaded DM-RS symbols for PDSCH 514. A DM-RS configuration may support one or more DM-RS ports. A DM-RS configuration may support atleast 8 orthogonal downlink DM-RS ports, for example, for single user-MIMO. ADM-RS configuration may support 12 orthogonal downlink DM-RS ports, for example, for multiuser-MIMO. A radio network may support, for example, at least for CP-OFDM, a common DM-RS structure for DL and UL, wherein a DM-RS location, DM-RS pattern, and/or scrambling sequence may be the same or different.

Whether or not the downlink PT-RS 524 is present may depend on an RRC configuration. A presence of the downlink PT-RS 524 may be wireless device-specifically configured. A presence and/or a pattern of the downlink PT-RS 524 in a scheduledresource may bewireless device-specifically configured, for example, by a combination of RRC signaling and/or an association with one or more parameters used for other purposes (e.g., MCS) which may be indicated by the DCI. If configured, a dynamic presence ofthe downlink PT-RS 524 may be associated with one or more DCI parameters comprising at least MCS. A radio network may support a plurality of PT -RS densities in a time/frequency domain. Ifpresent, a frequency domain density may be associated with at least one configuration of a scheduled bandwidth. A wireless device may as sume the same precoding for a DMRS port and a PT-RS port. A number of PT-RS ports may be less than a number of DM-RS ports in a scheduled resource. The downlinkPT-RS 524 may be confined in the scheduledtime/frequency duration for a wireless device.

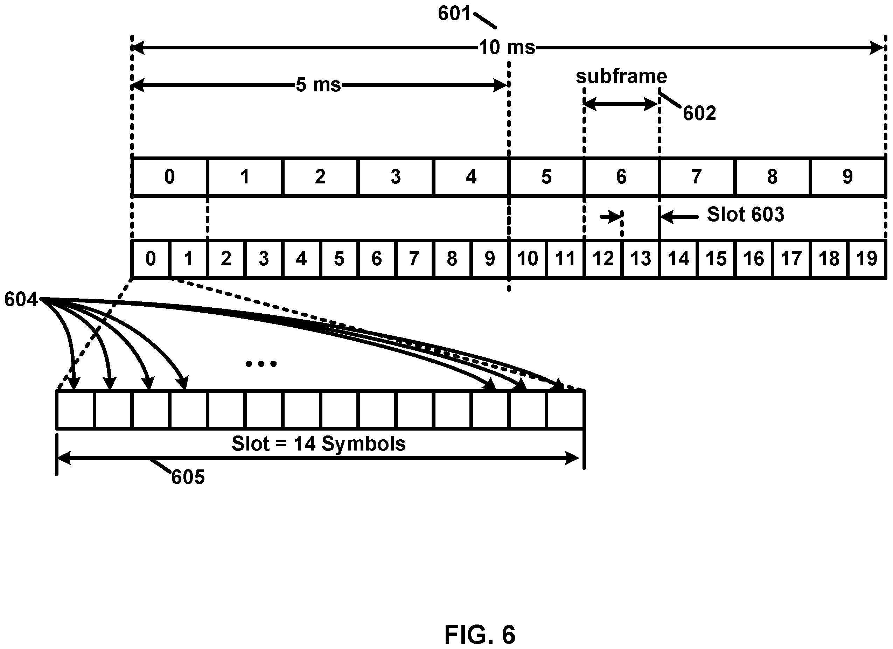

FIG. 6 shows an example transmission time and reception time for a carrier. A multi carrier OFDM communication system may include one or more carriers, for example, ranging from 1 to 32 carriers (such as for carrier aggregation) or ranging from 1 to 64 carriers (suchas for dual connectivity). Different radio frame structures may be supported (e.g., for FDD and/or for TDD duplex mechanisms). FIG. 6 shows an example frame timing. Downlink and uplink transmissions may be organized into radio frames 601. Radio frame duration may be 10 milliseconds (ms). A 10 ms radio frame 601 may be divided into ten equally sized subframes 602, each with a 1 ms duration. Subframe(s) may comprise one or more slots (e.g., slots 603 and 605) depending on subcarrier spacing and/or CP length. For example, a subframe with 15 kHz, 30 kHz, 60 kHz, 120 kHz, 240 kHz and 480 kHz subcarrier spacing may comprise one, two, four, eight, sixteen and thirty-two slots, respectively. In FIG. 6, a subframe may be divided into two equally sized slots 603 with 0.5 ms duration. For example, 10 subframes may be available for downlink transmission and 10 subframes may be available for uplink transmissions in a 10 ms interval. Other subframe durations such as, for example, 0.5 ms, 1 ms, 2 ms, and 5 ms may be supported. Uplink and downlinktransmissions may be separatedin the frequency domain. Slot(s) may include a plurality of OFDM symbols 604. The number of OFDM symbols 604 in a slot 605 may depend on the cyclic prefix length. A sbt may be 14 OFDM symbols forthe same subcarrier spacing ofup to 480 kHz with normal CP. A slot may be 12 OFDM symbols for the same subcarrier spacing of 60 kHz with extended CP. A slot may comprise downlink, uplink, and/or a downlinkpart and an uplinkpart, and/or alike.

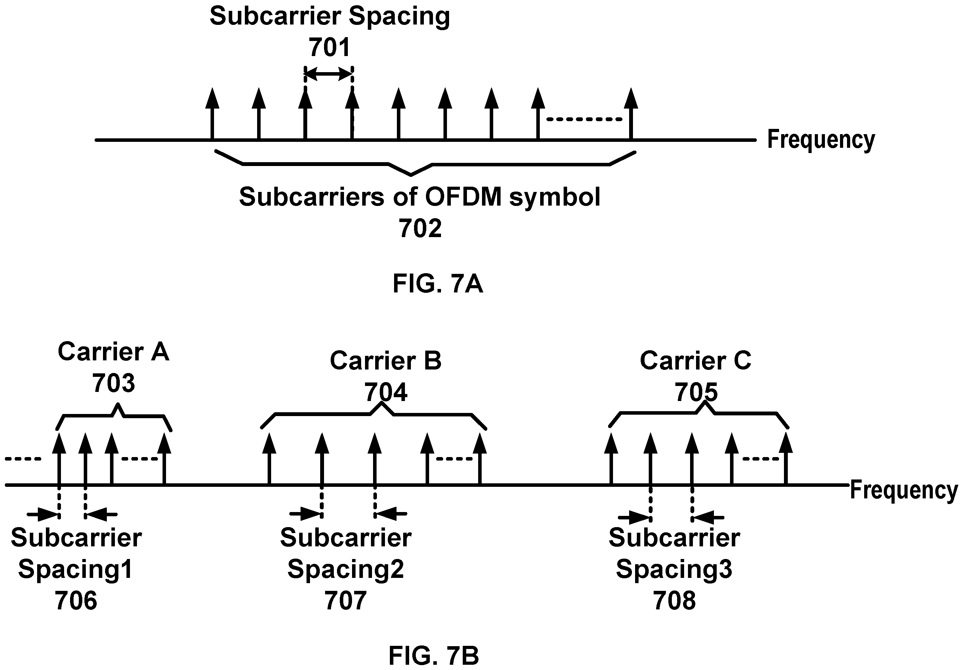

FIG. 7A shows example sets of OFDM subcarriers. Abase station may communicate with a wireless device using a carrier having an example channel bandwidth 700. Arrow(s) in the example may depict a subcarrier in a multicarrier OFDM system. The OFDM system may use technology such as OFDM technology, SC-FDMA technology, and/or the like. An arrow 701 shows a subcarrier transmitting information symbols. A subcarrier spacing 702, between two contiguous subcarriers in a carrier, may be any one of 15 kHz, 30 kHz, 60 kHz, 120 kHz, 240 kHz, or any other frequency. Different subcarrier spacing may correspond to different transmission numerologies. A transmission numerology may comprise at least: a numerology index; a value of subcarrier spacing; and/or a type of cyclic prefix (CP). A base station may send (e.g., transmit) to and/or receive from a wireless device via a number of subcarriers 703 in a carrier. A bandwidth occupied by a number of subcarriers 703 (e.g., transmission bandwidth) may be smaller than the channel band width 700 of a carrier, for example, due to guard bands 704 and 705. Guard bands 704 and 705 may be used to reduce interference to and from one or more neighbor carriers. A number of subcarriers (e.g., transmission bandwidth) in a carrier may depend on the channel bandwidth of the carrier and/or the subcarrier spacing. A transmission bandwidth, for a carrier with a 20 MHz channel bandwidth and a 15 kHz subcarrier spacing, may be in number of 1024 subcarriers.

A base station and a wireless device may communicate with multiple component carriers (CCs), for example, if configured with CA. Different component carriers may have different bandwidth and/or different subcarrier spacing, for example, if CA is supported. A base station may send (e.g., transmit) a first type of service to a wireless device via a first component carrier. The base station may send (e.g., transmit) a second type of service to the wireless device via a second component carrier. Different types of services may have different service requirements (e.g., datarate, latency, reliability), which may be suitable for transmission via different component carriers having different subcarrier spacing and/or different bandwidth.

FIG. 7B shows examples of component carriers. A first component carrier may comprise a first number of subcarriers 706 having a first subcarrier spacing 709. A second component carrier may comprise a second number of subcarriers 707havinga second subcarrier spacing 710. A third component carrier may comprise a third number of subcarriers 708 having a third subcarrier spacing 711. Carriers in a multicarrier OFDM communication system may be contiguous carriers, non-contiguous carriers, or a combination of both contiguous and non-contiguous carriers.

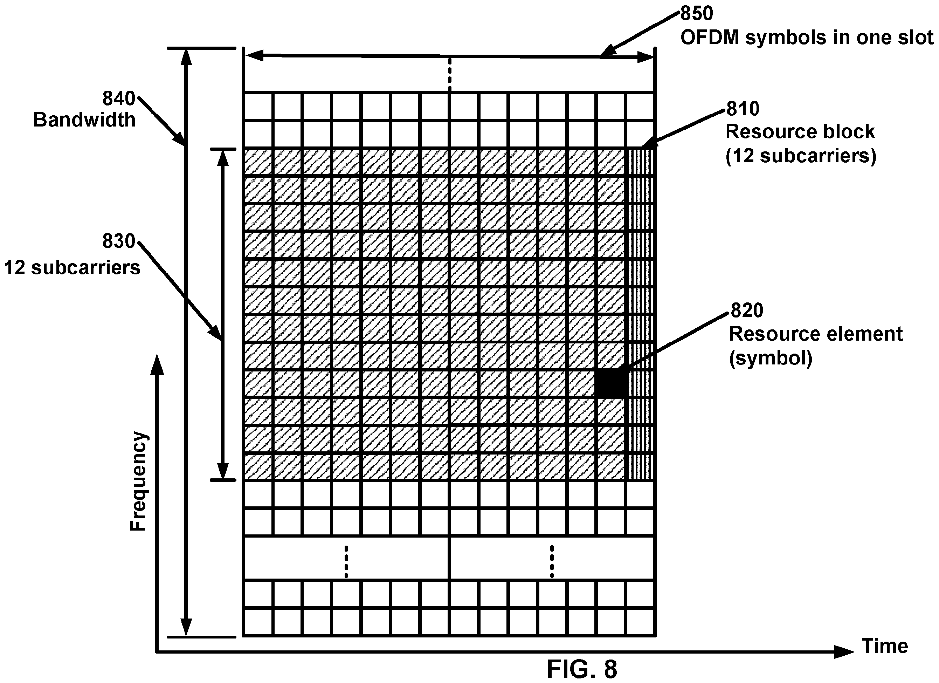

FIG 8 shows an example ofOFDM radio resources. A carrier may have a transmission bandwidth 801. A resource grid may be in a structure offrequency domain 802 and time domain 803. A resource grid may comprise a first number of OFDM symbols in a subframe and a second number of resource blocks, starting from a common resource block indicated by higher-layer signaling (e.g., RRC signaling), for a transmission numerology and a carrier. In a resource grid, a resource element 805 may comprise a resource unit that may be identified by a subcarrier index and a symbol index A subframe may comprise a first number of OFDM symbols 807that may depend on a numerology associated with a carrier. A subframe may have 14 OFDM symbols for a carrier, for example, if a subcarrier spacing of a numerology of a carrier is 15 kHz. A subframe may have 28 OFDM symbols, for example, if a subcarrier spacing of a numerology is 30 kHz. A subframe may have 56 OFDM symbols, for example, if a subcarrier spacing of a numerology is 60kHz. A subcarrier spacing of a numerology may comprise any otherfrequency. A secondnumberofresource blocks comprised in a resource grid of a carrier may depend on a bandwidth and a numerology of the carrier.

A resource block 806 may comprise 12 subcarriers. Multiple resource blocks may be grouped into a Resource Block Group (RBG) 804. A size of a RBG may depend on at least one of: a RRC message indicating a RBG size configuration; a size of a carrier bandwidth; and/or a size of a bandwidth part of a carrier. A carrier may comprise multiple bandwidth parts. A first bandwidth part of a carrier may have a different frequency location and/or a different bandwidth from a second bandwidthpart ofthe carrier.

A base station may send (e.g., transmit), to a wireless device, a downlink control information comprising a downlink or up link resource block assignment. A base station may send (e.g., transmit) to and/or receive from, a wireless device, data packets (e.g., transport blocks). The data packets may be scheduled on and transmitted via one ormore resourceblocks and one or more slots indicated by parameters in downlink control information and/or RRC message(s). A starting symbol relative to a first slot ofthe one ormore slots may be indicated to the wireless device. A base station may send (e.g., transmit) to and/or receive from, a wireless device, data packets. The data packets may be scheduled for transmission on one ormore RBGs and in one ormore slots.

Abase stationmay send (e.g., transmit), to a wireless device, downlink control information comprising a downlink assignment. The base station may send (e.g., transmit) the DCI via one or more PDCCHs. The downlink assignment may comprise parameters indicating at least one of a modulation and coding format; resource allocation; and/or HARQ information related to the DL-SCH. The resource allocation may comprise parameters of resource block allocation; and/or slot allocation. A base station may allocate (e.g., dynamically) resources to a wireless device, for example, via a Cell-Radio Network Temporary Identifier (C-RNTI) on one or more PDCCHs. The wireless device may monitor the one ormore PDCCHs, for example, in orderto find possible allocation if its downlink reception is enabled. The wireless device may receive one or more downlink data packets on one or more PDSCH scheduled by the one or more PDCCHs, for example, if the wireless device successfully detects the one or more PDCCHs.

abase stationmay allocateConfiguredScheduling(CS) resources for downlink transmission to a wireless device. The base station may send (e.g., transmit) one or more RRC messages indicating a periodicity of the CS grant. The base stationmay send (e.g., transmit) a DCI via a PDCCH addressed to a Configured Scheduling-RNTI (CS-RNTI) activating the CS resources. The DCI may comprise parameters indicating that the downlink grant is a CS grant. The CS grant may be implicitly reused according to the periodicity defined by the one or more RRC messages. The CS grantmay be implicitly reused, for example, until deactivated.

A base station may send (e.g., transmit), to a wireless device via one or more PDCCHs, downlink control information comprising an uplink grant. The uplink grant may comprise parameters indicating at least one of a modulation and coding format; a resource allocation; and/or HARQ information related to the UL-SCH. The resource allocation may comprise parameters ofresource block allocation; and/or slot allocation. The base station may dynamically allocate resources to the wireless device via a C-RNTI on one ormore PDCCHs. The wireless device may monitor the one or more PDCCHs, for example, in order to find possible resource allocation. The wireless device may send (e.g., transmit) one ormore uplink data packets via one ormore PUSCH scheduled by the one ormore PDCCHs, for example, if the wireless device successfully detects the one ormore PDCCHs.

The base station may allocate CS resources for uplink data transmission to a wireless device. The base station may transmit one ormore RRC messages indicating a periodicity ofthe CS grant. The base stationmay send (e.g., transmit) a DCI via a PDCCH addressed to a CS-RNTI to activate the CS resources. The DCI may comprise parameters indicatingthat the uplink grant is a CS grant. The CS grant may be implicitly reusedaccordingto the periodicity defmedby the one ormore RRC message, The CS grant may be implicitly reused, for example, until deactivated.

A base station may send (e.g., transmit) DCI and/or control signaling via a PDCCH. The DCI may comprise a format of a plurality of formats. The DCI may comprise downlink and/or uplink scheduling information (e.g., resource allocation information, HARQ related parameters, MCS), request(s) for CSI (e.g., aperiodic CQI reports), request(s) for an SRS, uplink power control commands for one or more cells, one or more timing information (e.g., TB transmission/reception timing, HARQ feedback timing, etc.), and/orthe like. The DCI may indicate an uplink grant comprising transmission parameters for one or more transport blocks. The DCI may indicate a downlink assignment indicating parameters for receiving one or more transport blocks. The DCI may be used by the base station to initiate a contention -free random access at the wireless device. The base station may send (e.g., transmit) a DCI comprising a slot format indicator (SFI) indicating a slot format. The base stationmay send (e.g., transmit) a DCI comprising a pre-emption indication indicating the PRB(s) and/orOFDM symbol(s) in which a wireless device may assume no transmission is intended for the wireless device. The base station may send (e.g., transmit) a DCI for group power control ofthe PUCCH, the PUSCH, and/oran SRS. A DCI may correspond to an RNTI. The wireless device may obtain an RNTI after or in response to completing the initial access (e.g., C-RNTI). The base station may configure an RNTI for the wireless (e.g., CS-RNTI, TPC-CS-RNTI, TPC-PUCCH-RNTI, TPC-PUSCH-RNTI, TPC-SRS-RNTI). The wireless device may determine (e.g., compute) an RNTI (e.g., the wireless device may determine the RA-RNTI based on resources used for transmission of a preamble). An RNTI may have a pre-configured value (e.g., P-RNTI or SI-RNTI). The wireless device may monitor a group common search space whichmay be used by the base station for sending (e.g., transmitting) DCIs that are intended for a group of wirele s s devices. A group common DCI may correspond to an RNTI which is commonly configured for a group of wireless devices. The wireless device may monitor a wireless device-specific search space. A wireless device specific DCI may correspond to an RNTI configured for the wireless device.

A communications system (e.g., an NR system) may support a single beam operation and/or a multi-beam operation. In a multi-beam operation, a base station may perform a downlink beams weeping to provide coverage for common control channels and/or downlink SS blocks, which may comprise at least a PSS, a SSS, and/or PBCH. A wireless devicemay measure quality of a beam pair link using one or more RSs. One ormore SS blocks, or one ormore CSI-RS resources (e.g., which may be associated with a CSI-RS resource index(CRI)), and/or one or more DM-RSs of a PBCH, may be used as an RS for measuring a quality of a beam pair link. The quality of a beam pair link may be based on a reference signal received power (RSRP) value, a reference signal received quality (RSRQ) value, and/or a CSI value measured on RS resources. The base stationmay indicate whether an RS resource, used for measuring a beam pair link quality, is quasi-co-located (QCLed) with DM-RSs of a control channel. An RS resource and DM-RSs of a control channel may be called QCLed, for example, if channel characteristics from a transmission on anRS to a wireless device, and that froma transmission on a control channel to a wireless device, are similar or the same under a configured criterion. In a multi-beam operation, a wireless device may perform an up link beams weeping to access a cell.

A wireless device may be configured to monitor a PDCCH on one or more beam pair links simultaneously, for example, depending on a capability ofthe wireless device. This monitoring may increase robustness against beam pair link blocking. A base station may send (e.g., transmit) one or more messages to configure the wireless device to monitor the PDCCH on one ormore beam pair links in different PDCCH OFDM symbols. A base station may send (e.g., transmit) higher layer signaling (e.g., RRC signaling) and/or a MACCE comprising parameters related to the Rx beamsetting of the wireless device for monitoring the PDCCH on one or more beam pair links. The base stationmay send (e.g., transmit) an indication of a spatial QCL assumption between an DLRS antenna pot(s) (e.g., a cell-specific CSI-RS, a wireless device-specific CSI-RS, an SS block, and/or a PBCH with or without DM-RSs of the PBCH) and/orDLRS antenna port(s) for demodulation of a DL control channel. Signaling for beam indication for a PDCCH may comprise MACCE signaling, RRC signaling, DCI signaling, and/or specification-transparent and/or implicit method, and/or any combination of signaling methods.

Abase stationmay indicate spatial QCLparameters betweenDLRS antennaport(s) and DM-RS antenna poit(s) of a DL data channel, for example, for reception of a unicast DLdata channel. The base station may send (e.g., transmit) DCI (e.g., downlink grants) comprising information indicating the RS antenna port(s). The information may indicate RS antennaport(s) that may be QCL-ed with the DM-RS antenna port(s). A different set of DM -RS antenna port(s) for a DL data channel may be indicated as QCL with a different set ofthe RS antennaport(s).

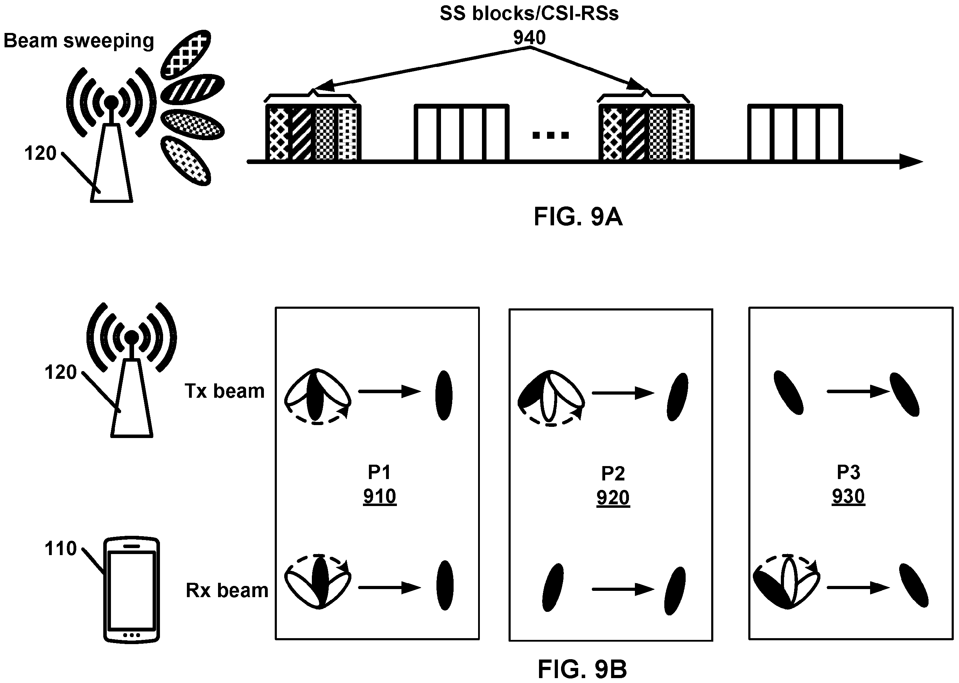

FIG. 9A shows an example of beams weeping in a DLchannel. In an RRC_INACTlVE state or RRC_IDLE state, a wireless devicemay assume that SS blocks form an SS burst 940, and an SS burst set950. The SS burst set950 may have a given periodicity. A base station 120 may send (e.g., transmit) SS blocks in multiple beams, together forming a SS burst 940, for example, in a multi-beam operation. One or more SS blocks may be sent (e.g., transmitted) on one beam. If multiple SS bursts 940 are transmitted with multiple beams, SS bursts together may form SS burst set 950.

A wireless device may use CSI-RS for estimating a beam quality of a link between a wireless device and abase station, for example, in the multi beam operation. A beam may be associated with a CSI-RS. A wireless device may (e.g., based on a RSRP measurement on CSI-RS) report a beam index, which may be indicated in a CRI for downlink beam selection and/or associated with an RSRP value of a beam. A CSI-RS may be sent (e.g., transmitted) on a CSI-RS resource, which may comprise at least one of: one or more antennaports and/or one or more time and/or frequency radio resources. A CSI-RS resource may be configured in a cell-specific way such as by common RRC signaling, or in a wireless device-specific way such as by dedicated RRC signaling and/or L1/L2 signaling. Multiple wireless devices covered by a cell may measure a cell-specific CSI-RS resource. A dedicated subsetofwireless devices covered by acellmay measure a wireless device-specific CSI-RS resource.

A CSI-RS resource may be sent (e.g., transmitted) periodically, using aperiodic transmission, or using a multi-shot or semi-persistent transmission. In a periodic transmission in FIG. 9A, a base station 120 may send (e.g., transmit) configured CSI-RS resources 940 periodically using a configured periodicity in a time domain. In an aperiodic transmission, a configured CSI-RS resource may be sent (e.g., transmitted) in a dedicated time slot. In a multi-shot and/or semi-persistent transmission, a configured CSI-RS resource may be sent (e.g., transmitted) within a configured period. Beams used for CSI-RS transmission may have a different beam width than beams used for SS-blocks transmission.

FIG 9B shows anexample of a beam management procedure, suchas in an example newradio network. The base station 120 and/orthe wireless device 110 may perform a downlink L1/L2 beam management procedure. One or more of the following downlink L1/L2 beam management procedures may be performed within one or more wireless devices 110 and one ormore base stations 120. A P1 procedure 910 may be used to enable the wireless device 110 to measure one or more Transmission (Tx) beams associated with the base station 120, for example, to support a selection of a first set of Tx beams associated with the base station 120 and a first set ofRx beam(s) associated with the wireless device 110. A base station 120 may sweep a set of different Txbeams, for example, for beam forming at a base station 120 (such as shown in the top row, in a counter-clockwise direction). A wireless device 110 may sweep a set of different Rxbeams, for example, for beamforming at a wireless device 110 (such as shown in the bottom row, in a clockwise direction). A P2 procedure 920 may be used to enable a wireless device 110 to measure one or more Txbeams associated with abase station 120, for example, to possibly change a first set of Tx beams associated with a base station 120. A P2 procedure 920 may be performed on a possibly smaller set of beams (e.g., for beam refinement) than in the P1 procedure 910. A P2 procedure 920 may be a special example of a P1 procedure 910. A P3 procedure 930 may be used to enable a wireless device 110 to measure at least one Tx beam associated with abase station 120, for example, to change a first set ofRx beams associated with a wireless device 110.

A wireless device 110 may send (e.g., transmit) one or more beam management reports to a base station 120. In one or more beam management reports, a wireless device 110 may indicate one or more beam pair quality parameters comprising one or more of: a beam identification; an RSRP; a Precoding Matrix Indicator (PMI), Channel Quality Indicator (CQI), and/or Rank Indicator (RI) of a subset of configured beams. Based on one or more beam management reports, the base station 120 may send (e.g., transmit) to a wireless device 110 a signal indicating thatone ormore beam pair links are one ormore serving beams. The base station 120may send (e.g., transmit) the PDCCH and the PDSCHfor a wireless device 110 using one ormore servingbeams.

A communications network (e.g., a new radio network) may support a Bandwidth Adaptation (BA). Receive and/or transmit bandwidths that may be configured for a wireless device using a BA may not be large. Receive and/or transmit bandwidthmay not be as large as a bandwidth of a cell. Receive and/or transmit bandwidths may be adjustable. A wireless device may change receive and/or transmit bandwidths, for example, to reduce (e.g, shrink) the bandwidth(s) at (e.g., during) a period of low activity such as to save power. A wireless device may change a location of receive and/or transmit bandwidths in a frequency domain, for example, to increase scheduling flexibility. A wireless devicemay change a subcarrier spacing, for example, to allow different services.

A Bandwidth Part (BWP) may comprise a subset of a total cell bandwidth of a cell. A base station may configure a wireless device with one or more BWPs, for example, to achieve a BA. A base station may indicate, to a wireless device, which ofthe one ormore (configured) BWPs is an active BWP.

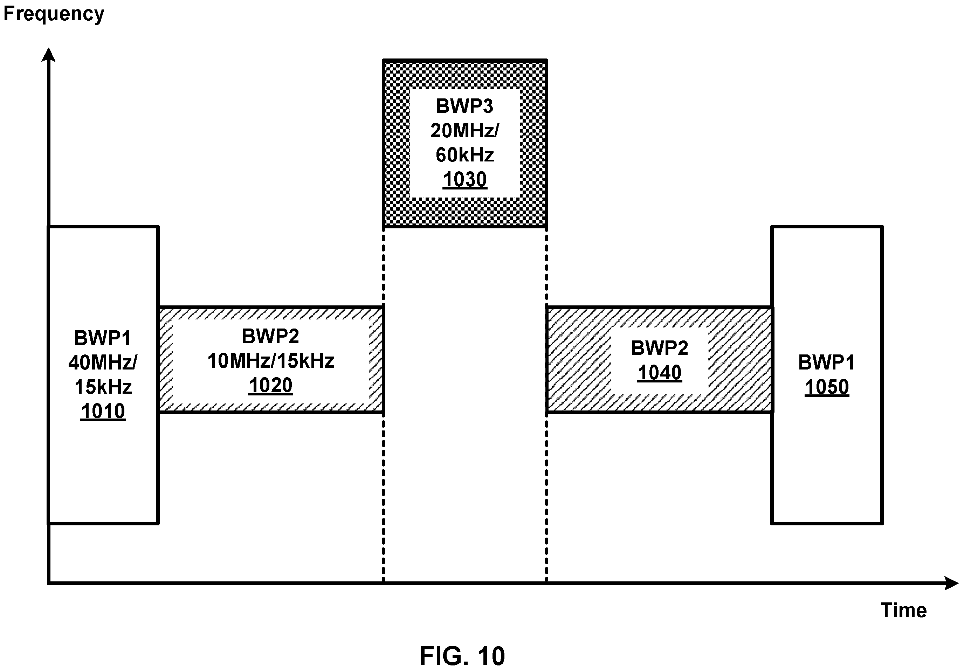

FIG. 10 shows an example of BWP configurations. BWPs may be configured as follows: BWP1 (1010 and 1050) with a width of 40 MHz and subcarrier spacing of 15 kHz; BWP2 (1020 and 1040) with a width of 10 MHz and subcarrier spacing of 15 kHz; BW P3 1030 with a width of 20 MHz and subcarrier spacing of 60 kHz. Any number of BWP configurations may comprise any other width and subcarrier spacing combination.

A wireless device, configured for operation in one or more BWPs of a cell, may be configured by one or more higher layers (e.g., RRC layer). The wireless devicemay be configured for a cell with: a set of one ormore BWPs (e.g., at most four BWPs) for reception (e.g., a DL BWP set) in a DL bandwidth by at least one parameter DL-BWP; and a set of one ormore BWPs (e.g., at most four BWPs) for transmissions (e.g., UL BWP set) in an UL bandwidth by at least one parameter UL-BWP.

A base station may configure a wireless device with one or more UL and DL BWP pairs, for example, to enable BA on the PCell. To enable BA on SCells (e.g., for CA), a base station may configure a wireless device at least with one ormore DL BWPs (e.g., there may be none in an UL).

An initial active DL BWP may comprise at least one of a location and number of contiguous PRBs, a subcarrier spacing, or a cyclic prefix for example, for a control resource set for at least one common search space. For operation on the PCell, one or more higher layer parameters may indicate at least one initial ULBWP for a random access procedure. If a wireless device is configured with a secondary carrier on a primary cell, the wireless device may be configured with an initial BWP for random access procedure on a secondary carrier.

A wireless device may expect that a centerfrequency for a DL BWP may be same as a center frequency for a UL BWP, for example, for unpaired spectrum operation. A base statin may semi-statically configure a wireless device for a cell with one or more parameters, for example, for a DL BWP or an UL BWP in a set of one or more DL BWPs or one or more UL BW Ps, respectively. The one ormore parameters may indicateone ormore of following: a subcarrier spacing; a cyclic prefix; a number of contiguous PRBs; an indexin the set of one ormore DL BWPs and/or one ormore UL BWPs; a link between a DL BWP and an UL BWP from a set of configured DLBWPs and ULBWPs; a DCI detection to a PDSCH reception timing; a PDSCH reception to a HARQ-ACK transmission timing value; a DCI detection to a PUSCH transmission timing value; and/or an offset of a first PRB of a DL bandwidth or an UL bandwidth, respectively, relative to a first PRB of a bandwidth.

For a DL BWP in a set of one or more DLBWPs on a PCell, a base stationmay configure a wireless device with one or more control resource sets for at least one type of common search space and/or one wireless device-specific search space. A base station may not configure a wireless device without a common search space on a PCell, or on a PSCell, in an active DLBWP. For an UL BWP in a set of one ormore ULBWPs, a base station may configure a wireless device with one ormore resource sets for one ormore PUCCH transmissions.

A DCI may comprise a BWP indicator field. The BWP indicator field value may indicate an active DL BWP, from a configured DL BWP set, for one ormore DL receptions. The BWP indicator field value may indicate an active UL BWP, from a configured UL BWP set, for one or more UL transmissions.

For a PCell, a base station may semi-statically configure a wireless device with a default DL BWP among configured DL BWPs. If a wireless device is not provided a default DL BWP, a default BWP may be an initial active DL BWP.

A base stationmay configure a wireless device with a timer value for a PCell. A wireless device may start a timer (e.g., a BWP inactivity timer), for example, if a wireless device detects a DCI indicating an active DLBWP, other than a default DL BWP, for a paired spectrum operation, and/or if a wireless device detects a DCI indicating an active DLBWP or UL BWP, other than a default DLBWP or UL BWP, for an unpaired spectrum operation. The wireless device may increment the timer by an interval of a first value (e.g., the first value may be 1 millisecond, 0.5 milliseconds, or any other time duration), for example, if the wireless device does not detect a DCI at (e.g., during) the interval for a paired spectrum operation or for an unpaired spectrumoperation. The timermay expire at a time that the timer is equal to the timer value. A wireless device may switchto the default DL BWP from an active DL BWP, for example, if the timer expires.

A base station may semi-statically configure a wireless device with one or more BWPs. A wireless device may switch an active BWP from a first BWP to a second BWP, for example, afteror in response to receiving a DCI indicating the second BWP as an active BWP, and/or after or in response to an expiry of BWP inactivity timer (e.g., the second BWP may be a default BWP). FIG. 10 shows an example of three BWPs configured, BWP1 (1010 and 1050), BWP2 (1020 and 1040), and BWP3 (1030). BWP2 (1020 and 1040) may be a default BWP. BWP1 (1010) may be an initial active BWP. A wireless device may switch an active BWP from BWP1 1010 to BWP2 1020, for example, after or in response to an expiry of the BWP inactivity timer. A wireless device may switch an active BWP from BWP2 1020 to BWP3 1030, for example, after or in response to receiving a DCI indicating BW P3 1030 as an active BWP. Switching an active BWP from BWP3 1030 to BWP21040 and/or from BWP2 1040 to BWP1 1050 may be after or in response to receivinga DCI indicating an active BWP, and/or after or in response to an expiry of BWP inactivity timer.

Wireless device procedures on a secondary cell may be same as on a primary cell using the timer value for the secondary cell and the default DL BWP for the secondary cell, for example, if a wireless device is configured for a secondary cell with a default DL BWP among configured DL BWPs and a timer value. A wireless device may use an indicated DL BWP and an indicated UL BWP on a secondary cell as arespective first active DLBWP and first active ULBWP on a secondary cell or carrier, for example, if a base station configures a wireless device with a first active DL BWP and a first active UL BWP on a secondary cell or carrier.

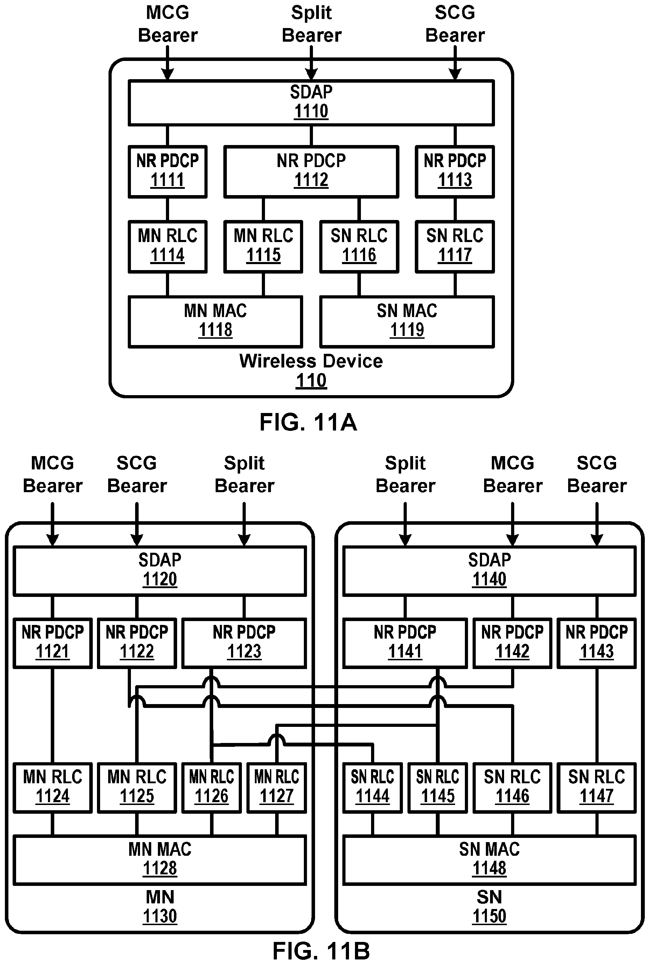

FIG. 11A and FIG. 11B showpacketflows using a multi connectivity (e.g.,dualconnectivity,multiconnectivity, tight interworking, and/or the like). FIG. 11A shows an example of a protocol structure of a wireless device 110 (e.g., UE) with CA and/or multi connectivity. FIG. 11B shows an example of a protocol structure of multiple base stations with CA and/or multi connectivity. The multiple base stations may comprise a master node, MN 1130 (e.g., a master node, a master base station, a master gNB, a master eNB, and/or the like) and a secondary node, SN 1150 (e.g., a secondary node, a secondary base station, a secondary gNB, a secondary eNB, and/or the like). A masternode 1130 and a secondary node 1150 may co-work to communicate with awireless device 110.

If multi connectivity is configured for a wireless device 110, the wireless device 110, which may support multiple reception and/or transmission functions in an RRC connected state, may be configured to utilize radio resources provided by multiple schedulers of a multiple base stations. Multiple base stations may be inter-connected via a non-ideal or ideal backhaul (e.g., Xn interface, X2 interface, and/or the like). A base station involved in multi connectivity for a certain wireless device may perform at least one of two different roles: a base station may act as a master base station or act as a secondary base station. In multi connectivity, a wireless device may be connected to one masterbase station and one or more secondary base stations. A masterbase station (e.g., the MN 1130) may provide a master cell group (MCG) comprising a primary cell and/orone ormore secondary cells for a wireless device (e.g., the wireless device 110). A secondary base station (e.g., the SN 1150) may provide a secondary cell group (SCG) comprising a primary secondary cell(PSCell) and/or one or more secondary cells for a wireless device (e.g., the wireless device 110).

Inmulti connectivity, a radio protocol architecture that a bearer uses may depend on howabeareris setup. Three different types of bearer setup options may be supported: an MCGbearer, an SCG bearer, and/or a split bearer. A wireless device may receive and/or send (e.g., transmit) packets of an MCGbearer via one or more cells of the MCG. A wireless device may receive and/or send (e.g., transmit) packets of an SCG bearer via one ormore cells ofan SCG. Multi-connectivity may indicate having at least one bearer configured to use radio resources provided by the secondary base station. Multi-connectivity may ormay not be configured and/or implemented.

A wireless device (e.g., wireless device 110) may send (e.g., transmit) and/or receive: packets of an MCGbearer via an SDAP layer (e.g., SDAP 1110), a PDCP layer (e.g., NR PDCP 1111), an RLC layer (e.g., MN RLC 1114), and a MAC layer (e.g., MN MAC 1118); packets of a split bearer via an SDAP layer (e.g., SDAP 1110), a PDCP layer (e.g., NR PDCP 1112), one ofa masteror secondary RLC layer (e.g., MN RLC 1115, SN RLC 1116), and one of a master or secondary MAC layer (e.g., MN MAC 1118, SN MAC 1119); and/or packets of an SCGbearer via an SDAP layer (e.g., SDAP 1110), a PDCP layer (e.g., NR PDCP 1113), an RLC layer (e.g., SN RLC 1117), and a MAC layer (e.g., MN MAC 1119).

A master base station (e.g., MN 1130) and/or a secondary base station (e.g., SN 1150) may send (e.g., transmit) and/orreceive: packets of an MCGbearer via a master or secondary node SDAP layer (e.g., SDAP 1120, SDAP 1140), a master or secondary node PDCP layer (e.g., NR PDCP 1121, NRPDCP 1142), amasternode RLC layer (e.g., MNRLC 1124, MNRLC 1125), and amasternode MAC layer (e.g., MN MAC 1128); packets of an SCG bearer via a master or secondary node SDAP layer (e.g., SDAP 1120, SDAP 1140), a master or secondary node PDCP layer (e.g.,NR PDCP 1122, NRPDCP 1143), a secondary nodeRLC layer (e.g., SN RLC 1146, SN RLC 1147), and a secondary node MAC layer (e.g., SN MAC 1148); packets of a split bearer via a master or secondary node SDAP layer (e.g., SDAP 1120, SDAP 1140), a master or secondary node PDCP layer (e.g., NRPDCP 1123, NRPDCP 1141), a master or secondary node RLC layer (e.g., MN RLC 1126, SN RLC 1144, SN RLC 1145, MN RLC 1127), and a master or secondary node MAC layer (e.g., MN MAC 1128, SN MAC1148).

In multi connectivity, a wireless device may configure multiple MAC entities, such as one MACentity (e.g., MN MAC 1118) for a master base station, and other MAC entities (e.g., SN MAC 1119) for a secondary base station. In multi-connectivity, a configured set of serving cells for a wireless device may comprise two subsets: an MCG comprising serving cells of a master base station, and SCGs comprising serving cells of a secondary base station. For an SCG, one or more of following configurations may be used. At least one cell of an SCG may have a configuredULCC and at least one cell of a SCG, named as primary secondary cell (e.g., PSCell, PCell of SCG, PCell), and may be configured with PUCCH resources. If an SCG is configured, there may be at least one SCG bearer or one split bearer. Afterorupon detection of a physical layerproblemor a random access problem on a PSCell, or a number of NR RLC retransmissions has been reached associated with the SCG, or after or upon detection of an access problem on a PSCell associated with (e.g., during) a SCG addition or an SCG change: an RRC connection re-establishment procedure may not be triggered, UL transmissions towards cells of an SCGmay be stopped, a master base station may be informed by a wireless device of a SCG failure type, aDL data transfer over a master base station may be maintained (e.g., for a split bearer). An NR RLC acknowledged mode (AM) bearer may be configured for a split bearer. A PCell and/or a PSCell may not be de-activated. A PSCell may be changed with a SCG change procedure (e.g., with security key change and a RACH procedure). A bearer type change between a split bearer and a SCG bearer, and/or simultaneous configuration of a SCG and a split bearer, may ormay not be supported.

With respect to interactions between a master base station and a secondary base stations for multi-connectivity, one or more of the following may be used. A master base station and/or a secondary base station may maintain RRM measurement configurations of a wireless device. A master base station may determine (e.g., based on received measurement reports, traffic conditions, and/or bearer types) to request a secondary base station to provide additional resources (e.g., serving cells) for a wireless device. After or upon receiving a request from a master base station, a secondary base station may create and/or modify a container that may result in a configuration of additional serving cells for a wireless device (or decide that the secondary base station has no resource available to do so). For a wireless device capability coordination, a master base station may provide (e.g., all or a part of) an AS configuration and wireless device capabilities to a secondary base station. A master base station and a secondary base station may exchange information about a wireless device configuration such as by using RRC containers (e.g., inter-node messages) carried via Xn messages. A secondary base station may initiate a reconfiguration of the secondary base station existing serving cells (e.g., PUCCH towards the secondary base station). A secondary base station may decide which cell is a PSCell within a SCG. A master base station may or may not change content of RRC configurations provided by a secondary base station. A master base station may provide recent (and/or the latest) measurement results for SCG cell(s), for example, if an SCG addition and/or an SCG SCell addition occurs. A master base station and secondary base stations may receive information of SFN and/or subframe offset of each other from an OAM and/or via an Xn interface (e.g., for a purpose of DRX alignment and/or identification of a measurement gap). Dedicated RRC signaling may be used for sending required system information of a cell as for CA, for example, if adding a new SCG SCell, except for an SFN acquired froman MIB of a PSCell of a SCG

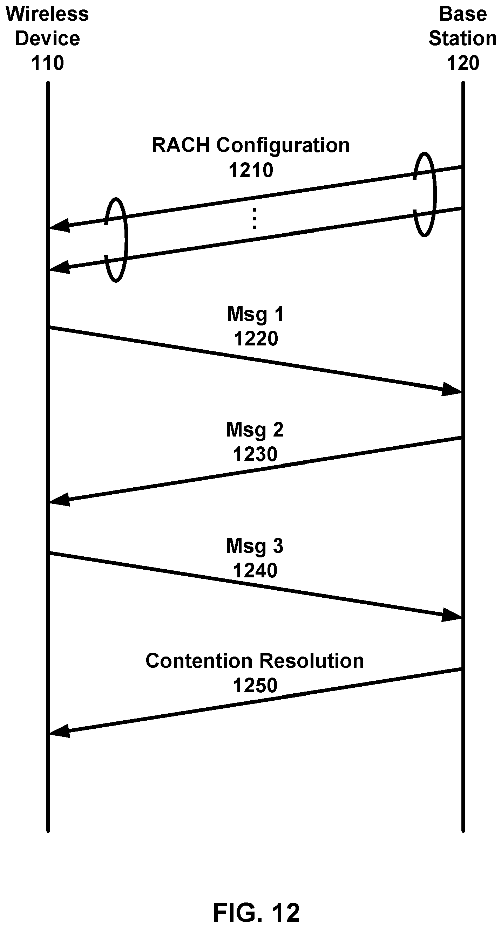

FIG 12 shows an example of a random access procedure. One or more events may trigger a random access procedure. For example, one or more events may be at least one of following: initial access from RRC_IDLE, RRC connection re-establishment procedure, handover, DL or UL data arrival in (e.g., during) a state of RRC_CONNECTED (e.g., if UL synchronization status is non-synchronized), transition from RRC Inactive, and/or request for other system information. A PDCCH order, a MAC entity, and/or a beam failure indication may initiate a random access procedure.

A random access procedure may comprise or be one of at least a contention based random access procedure and/or a contention free random access procedure. A contention based random access procedure may comprise one or more Msg 1 1220 transmissions, one or more Msg21230 transmissions, one ormore Msg3 1240 transmissions, and contention resolution 1250. A contention free random access procedure may comprise one or more Msg 1 1220 transmissions and one ormore Msg21230 transmissions. One ormore of Msg 11220, Msg 21230, Msg 3 1240, and/or contention resolution 1250 may be transmitted in the same step. A two -step random access procedure, for example, may comprise a first transmission (e.g., MsgA) and a second transmission (e.g., Msg B). The first transmission (e.g., Msg A) may comprise transmitting, by a wireless device (e.g., wireless device 110) to a base station (e.g., base station 120), one or more messages indicating an equivalent and/or similar contents of Msg1 1220 and Msg3 1240 of a four-step random access procedure. The second transmission (e.g., Msg B) may comprise transmitting, by the base station (e.g., base station 120) to a wireless device (e.g., wireless device 110) after or in response to the first message, one or more messages indicatingan equivalent and/or similar content of Msg2 1230 and contention resolution 1250 of a four-step random access procedure.

A base stationmay send (e.g., transmit, unicast, multicast, broadcast, etc.), to a wireless device, a RACH configuration 1210 via one or more beams. The RACH configuration 1210 may comprise one ormore parameters indicating at least one offollowing: an available set of PRACH resources for a transmission of a random access preamble, initial preamble power (e.g., random access preamble initial received target power), an RSRP threshold for a selection of a SS block and corresponding PRACH resource, a power-ramping factor (e.g., random access preamble power ramping step), a randomaccess preamble index a maximum number of preamble transmissions, preamble group A and group B, a threshold (e.g., message size) to determine the groups of random access preambles, a set of one or more random access preambles for a system information request and corresponding PRACHresource(s) (e.g., if any), a set of one or more random access preambles for beam failure recovery request and corresponding PRACHresource(s) (e.g., if any), a time windowto monitor RA response(s), a time window to monitor response(s) on beam failure recovery request, and/or a contention resolution timer.

The Msg1 1220 may comprise one or more transmissions of a random access preamble. For a contention based random access procedure, a wireless device may select an SS block with an RSRP above the RSRP threshold. If random access preambles group Bexists, a wireless device may select one or more randomaccess preambles from a group A or a group B, for example, depending on a potential Msg3 1240 size. If a random access preambles group B does not exist, a wireless device may select the one ormore randomaccess preambles from a group A. A wireless device may select a random access preamble indexrandomly (e.g., with equal probability or a normal distribution) from one ormore random access preambles associated with a selected group. If a base station semi-statically configures a wireless device with an as sociation between random access preambles and SS blocks, the wireless device may select a random access preamble index randomly with equal probability from one or more randomaccess preambles associated with a selected SS block and a selected group.

A wireless device may initiate a contention free randomaccess procedure, for example, based on a beam failure indication from a lower layer. A base station may semi-statically configure a wireless device with one or more contention free PRACH resources for beam failure recovery request associated with at least one of SS blocks and/or CSI-RSs. A wireless device may select a random access preamble index corresponding to a selected SS block or a CSI-RS from a set of one or more random access preambles for beam failure recovery request, for example, if at least one of the SS blocks with an RSRP above a first RSRP threshold amongst associated SS blocks is available, and/or if at least one ofCSI-RSs with a RSRP above a second RSRP threshold amongst associated CSI-RSs is available.

A wireless device may receive, from a base station, a random access preamble indexvia PDCCH or RRC for a contention free random access procedure. The wireless device may select a random access preamble index for example, if a base station does not configure a wireless device with at least one contention free PRACH resource associated with SS blocks or CSI-RS. The wireless device may select the at least one SS block and/or select a random access preamble correspondingto the at least one SS block, for example, if a base station configures the wireless device with one ormore contention free PRACH resources associated with SS blocks and/or if at least one SS block with a RSRP above a first RSRP threshold amongst associated SS blocks is available. The wireless device may select the at least one CSI-RS and/or select a random access preamble corresponding to the at least one CSI-RS, for example, if a base station configures a wireless device with one or more contention free PRACH resources associated with CSI-RSs and/or if at least one CSI-RS with a RSRP above a second RSPR threshold amongst the associated CSI-RSs is available.

A wireless device may perform one ormore Msg1 1220 transmissions, for example, by sending (e.g., transmitting) the selected random access preamble. The wireless device may determine an PRACH occasion from one ormore PRACH occasions corresponding to a selected SS block, for example, if the wireless device selects an SS block and is configured with an association between one or more PRACH occasions and/or one or more SS blocks. The wireless device may determine a PRACH occasion from one or more PRACH occasions corresponding to a selected CSI-RS, for example, if the wireless device selects a CSI-RS and is configured with an association between one ormore PRACH occasions and one ormore CSI-RSs. The wireless device may send (e.g., transmit), to a base station, a selected random access preamble via a selected PRACH occasions. The wireless device may determine a transmit power for a transmission of a selected random access preamble at least based on an initial preamble power and a power-ramping factor. The wireless device may determine an RA -RNTI associated with a selected PRACH occasion in which a selected random access preamble is sent (e.g., transmitted). The wireless device may not determine an RA-RNTI for a beamfailure recovery request. The wireless device may determine an RA-RNTI at least based on an index of a first OFDM symbol, an index of a first slot of a selected PRACH occasions, and/or an uplink carrier index for a transmis sion of Msg1 1220.

A wireless device may receive, from a base station, a random access response, Msg21230. The wireless device may start a time window (e.g., ra-ResponseWindow) to monitor a random access response. For beam failure recovery request, the base station may configure the wireless device with a different time window (e.g., bfr-ResponseWindow) to monitor response on beam failure recovery request. The wireless device may start a time window (e.g., ra-ResponseWindow or bfr-ResponseWindow) at a start of a first PDCCH occasion, for example, after a fixed duration of one ormore symbols froman end of a preamble transmission. If the wireless device sends (e.g., transmits) multiple preambles, the wireless device may start a time window at a start of a first PDCCH occasion after a fixed duration of one or more symbols froman end of a first preamble transmission. The wireless device may monitor a PDCCH of a cell for at least one random access response identified by a RA-RNTI, or for at least one response to beam failure recovery request identified by a C-RNTI, at a time that a timer for a time window is running.

A wireless devicemay determine that a reception of random access response is successful, for example, if at least one random access response comprises a random access preamble identifier corresponding to a random access preamble sent (e.g., transmitted) by the wireless device. The wireless device may determine that the contention free random access procedure is successfully completed, for example, if a reception of a random access response is successful. The wireless device may determine that a contention free random access procedure is successfully complete, for example, if a contention free random access procedure is triggered for a beam failure recovery request and if a PDCCH transmission is addressed to a C-RNTI. The wireless device may determine that the random access procedure is successfully completed, and may indicate a reception of an acknowledgement for a system information request to upper layers, for example, if at least one random access response comprises only a random access preamble identifier. The wireless device may stop sending (e.g., transmitting) remaining preambles (if any) after or in response to a successful reception of a corresponding random access response, for example, if the wireless devicehas signaled multiple preamble transmissions.

The wireless device may perform one or more Msg 31240 transmissions, for example, after or in response to a successful reception of random access response (e.g., for a contention based random access procedure). The wireless device may adjust an uplink transmission timing, for example, based on a timing advance d command indicated by a random access response. The wireless device may send (e.g., transmit) one or more transport blocks, for example, based on an uplink grant indicated by a random access response. Subcarrier spacing for PUSCH transmission for Msg3 1240 may be provided by at least one higher layer (e.g., RRC) parameter. The wireless device may send (e.g., transmit) a random access preamble via a PRACH, and Msg3 1240 via PUSCH, on the same cell. A base station may indicate an UL BWP for a PUSCH transmission of Msg3 1240 via system information block. The wireless device may use HARQ for a retransmis sion of Msg 3 1240.

Multiple wireless devices may perform Msg 1 1220, for example, by sending (e.g., transmitting) the same preamble to a base station. The multiple wireless devices may receive, from the base station, the same random access response comprising an identity (e.g., TC-RNTI). Contention resolution (e.g., comprising the wireless device 110 receiving contention resolution 1250) may be used to increase the likelihood that a wireless device does not incorrectly use an identity of another wireless device. The contention resolution 1250may be based on, for example, a C-RNTI on a PDCCH, and/or a wireless device contention resolution identity on a DL-SCH. If a base stationassigns aC-RNTI to a wireless device, the wireless device may perform contention resolution (e.g., comprising receiving contention resolution 1250), for example, based on a reception of a PDCCH transmission that is addressed to the C-RNTI. The wireless device may determine that contention resolution is successful, and/or that a random access procedure is successfully completed, for example, after or in response to detecting a C-RNTI on a PDCCH. If a wireless device has no valid C-RNTI, a contention resolution may be addressed by using a TC-RNTI. If a MAC PDU is successfully decoded and a MAC PDU comprises a wireless device contention resolution identity MAC CE that matches or otherwise corresponds with the CCCH SDU sent (e.g., transmitted) in Msg3 1250, the wireless device may determine that the contention resolution (e.g., comprising contention resolution 1250) is successful and/or the wireless device may determine that the random access procedure is successfully completed.

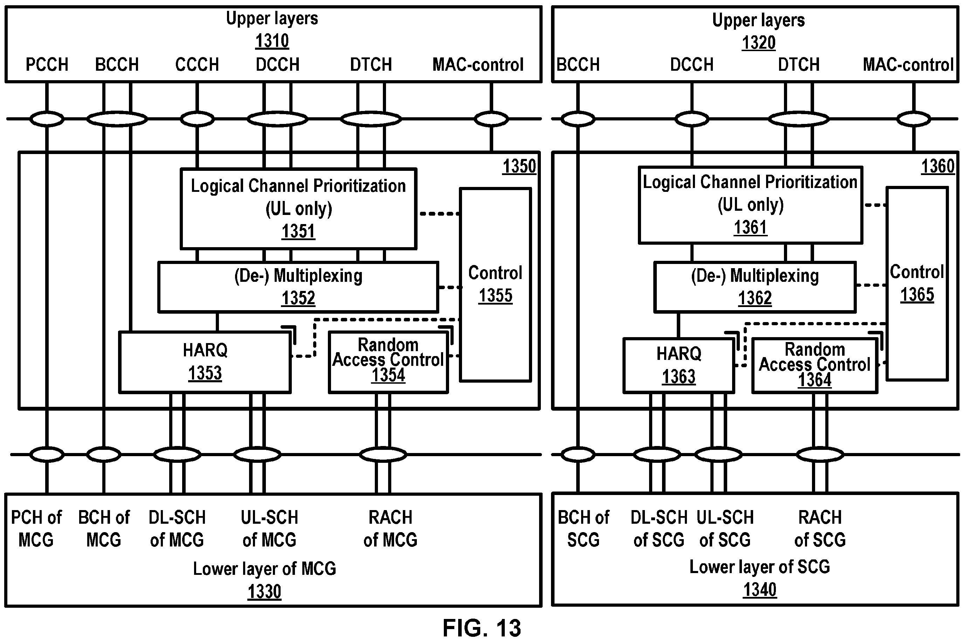

FIG. 13 shows an example structure for MAC entities. A wireless device may be configured to operate in a multi-connectivity mode. A wireless device in RRC_CONNECTED with multiple Rx/Tx may be configured to utilize radio resources provided by multiple schedulers that may be located in a plurality of base stations. The plurality of base stations may be connected via a non-ideal or ideal backhaul over the Xn interface. A base station in a plurality of base stations may act as a master base station or as a secondary base station. A wireless device may be connectedto and/or in communication with, for example, one master base station and one or more secondary base stations. A wireless device may be configured with multiple MAC entities, for example, one MACentity for a master base station, and one or more other MAC entities for secondary base station(s). A configured set of serving cells for a wireless device may comprise two subsets: an MCG comprising serving cells of a master base station, and one or more SCGs comprising serving cells of a secondary base station(s). FIG. 13 shows an example structure for MAC entities in which a MCG and a SCG are configured for a wireless device.

At least one cell in a SCG may have a configured ULCC. A cell ofthe at least one cellmay comprise a PSCell or a PCell of a SCG, or a PCell. A PSCell may be configured with PUCCH resources. There may be at least one SCG bearer, or one split bearer, for a SCG that is configured. After or upon detection of a physical layer problem or a random access problemon a PSCell, after or up on reaching a number of RLC retransmissions associated will the SCG, and/or after or upon detection of an access problem on a PSCell associated with (e.g., during) a SCG addition or a SCGchange: an RRC connection re-establishment procedure may notbe triggered, UL transmissions towards cells ofa SCG may be stopped, and/or a master base station may be informed by a wireless device ofa SCG failure type and DLdata transfer over a masterbase stationmay be maintained.

A MAC sublayer may provide services such as data transfer and radio resource allocation to upper layers (e.g., 1310 or 1320). A MAC sublayer may comprise a plurality of MAC entities (e.g., 1350 and 1360). A MAC sublayer may provide data transfer services on logical channels. To accommodate different kinds of data transfer services, multiple types of logical channels may be defined. A logical channel may support transfer of a particular type of information. A logical channel type may be defined by what type of information (e.g., control or data) is transferred. BCCH, PCCH, CCCH and/or DCCHmay be control channels, and DTCHmay be a traffic channel A first MAC entity (e.g., 1310) may provide services on PCCH, BCCH, CCCH, DCCH, DTCH, and/or MAC control elements. A second MAC entity (e.g., 1320) may provide services on BCCH, DCCH, DTCH, and/or MAC control elements.

A MAC sublayer may expect from a physical layer (e.g., 1330 or 1340) services such as data transfer services, signaling of HARQ feedback, and/or signaling of scheduling request or measurements (e.g., CQI). In dual connectivity, two MAC entities may be configured for a wireless device: one for a MCG and one for a SCG. A MACentity of a wireless device may handle a plurality of transport channels. A first MAC en tity may handle first transport channels comprising a PCCH of a MCG, a first BCH of the MCG, one or more first DL-SCHs of the MCG, one or more first UL-SCHs of the MCG, and/or one or more first RACHs of the MCG. A second MAC entity may handle second transport channels comprising a second BCH of a SCG one or more second DL-SCHs of the SCG, one ormore second UL-SCHs ofthe SCG, and/or one or more secondRACHs ofthe SCG.

If a MAC entity is configured with one or more SCells, there may be multiple DL-SCHs, multiple UL-SCHs, and/or multiple RACHs per MAC entity. There may be one DL-SCH and/or one UL-SCH on an SpCell. There may be one DL-SCH, zero or one UL-SCH, and/or zero or one RACH for an SCell. A DL-SCH may support receptions using different numerologies and/or TTI duration within a MAC entity. A UL-SCH may support transmissions using different numerologies and/or TTIduration within the MAC entity.

A MAC sublayermay support different functions. The MAC sublayer may control these functions with a control (e.g., Control 1355 and/or Control 1365) element. Functions performed by a MAC entity may comprise one or more of: mapping between logical channels and transport channels (e.g., in uplink or downlink), multiplexing (e.g., (De-) Multiplexing 1352 and/or (De-) Multiplexing 1362) of MAC SDUs from one or different logical channels onto transport blocks (TBs) to be delivered to the physical layer on transport channels (e.g., in uplink), demultiplexing (e.g., (De-) Multiplexing 1352 and/or (De-) Multiplexing 1362) of MAC SDUs to one or different logical channels from transport blocks (TBs) delivered from the physical layer on transport channels (e.g., in downlink), scheduling information reporting (e.g., in uplink), error correction through HARQ in uplink and/or downlink (e.g., 1363), and logical channel prioritization in uplink (e.g., Logical Channel Prioritization 1351 and/or Logical Channel Prioritization 1361). A MACentity may handle a randomaccess process (e.g., RandomAccess Control 1354 and/or RandomAccess Control 1364).

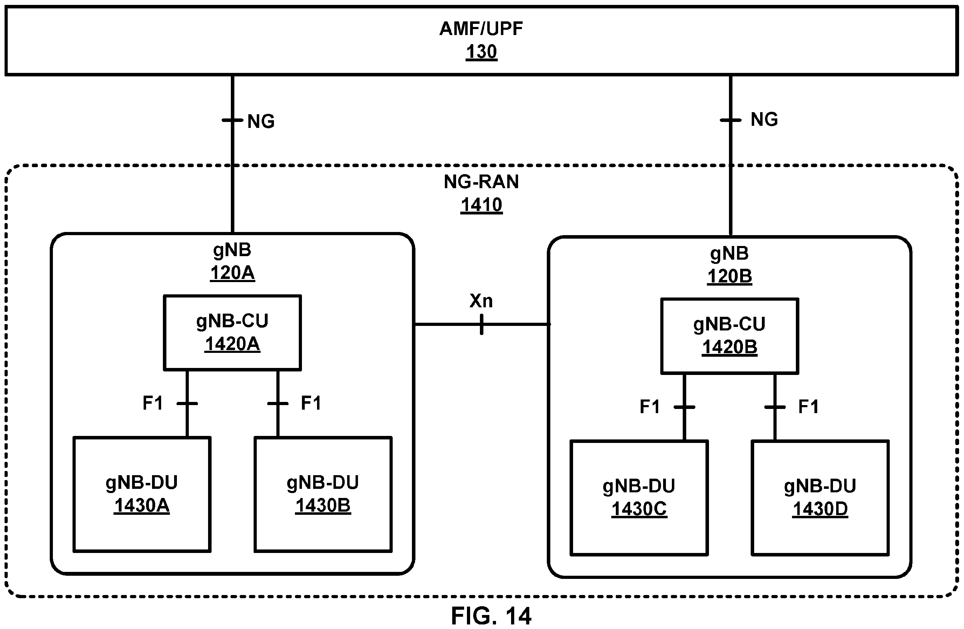

FIG 14 shows an example of a RAN architecture comprising one or more base stations. A protocol stack (e.g., RRC, SDAP, PDCP, RLC, MAC, and/or PHY) may be supported at anode. A base station (e.g., gNB 120A and/or 120B) may comprise a base station central unit (CU) (e.g., gNB-CU 1420A or 1420B) and at least one base station distributed unit (DU) (e.g., gNB-DU 1430A, 1430B, 1430C, and/or 1430D), for example, if a functional split is configured. Upper protocol layers of a base stationmay be located in a base station CU, and lower layers ofthe base station may be located in the base station DUs. An F1 interface (e.g., CU-DU interface) connecting a base station CU and base station DUs may be an ideal or non-ideal backhaul. FI-C may provide a control plane connection over an F1 interface, and F1-U may provide a user plane connection over the F1 interface. An Xn interface may be configured between base stationCUs.

A base station CU may comprise an RRC function, an SDAP layer, and/ora PDCP layer. Base station DUs may comprise an RLC layer, a MAC layer, and/or a PHYlayer. Various functional split options between a base station CU and base station DUs may be possible, for example, by locating different combinations of upper protocol layers (e.g., RAN functions) in a base station CU and different combinations of lower protocol layers (e.g., RAN functions) in base station DUs. A functional split may support flexibility to move protocol layers between a base station CU and base station DUs, for example, depending on service requirements and/or network environments.

Functional split options may be configured per base station, per base station CU, perbase station DU, per wire less device, per bearer, per slice, and/or with other granularities. In a per base station CU split, a base station CU may have a fixed split option, and base station DUs may be configuredto matcha split option of a base station CU. In a perbase station DU split, abase station DUmay be configured with a different split option, and abase station CU may provide different split options for different base station DUs. In a per wireless device split, a base station (e.g., a base station CU and at least one base station DUs) may provide different split options for different wireless devices. In a per bearer split, different split options may be utilized for different bearers. In a per slice splice, different split options may be used for different slices.

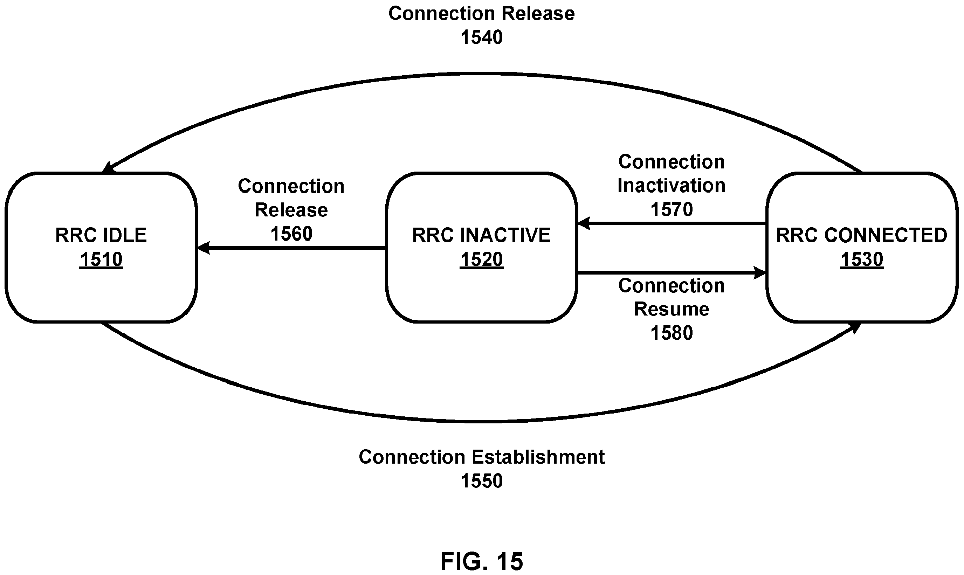

FIG. 15 shows example RRC state transitions of a wireless device. A wireless device may be in at least one RRC state among an RRC connected state (e.g., RRC Connected 1530, RRC_Connected, etc.), an RRC idle state (e.g., RRC Idle 1510, RRC Idle, etc.), and/or an RRC inactive state (e.g., RRC Inactive 1520, RRC Inactive, etc.). In an RRC connected state, a wireless device may have at least one RRC connection with at least one base station (e.g., gNB and/or eNB), which may have a context of the wireless device (e.g., UEcontext). A wireless device context (e.g., UE context) may comprise at least one of an access stratum context, one or more radio link configuration parameters, bearer (e.g., data radio bearer (DRB), signaling radio bearer (SRB), logical channel, QoS flow, PDU session, and/or the like) configuration information, security information, PHY/MAC/RLC/PDCP/SDAP layer configuration information, and/or the like configuration information for a wireless device. In an RRC idle state, a wireless device may not have an RRC connection with a base station, and a context of the wireless device may not be stored in a base station. In an RRC inactive state, a wireless device may not have an RRC connection with a base station. A context of a wireless device may be stored in a base station, which may comprise an anchor base station (e.g., a last servingbase station).

A wireless device may transition an RRC state (e.g., UE RRC state) between an RRC idle state and an RRC connected state in both ways (e.g., connection release 1540 or connection establishment 1550; and/or connection reestablishment) and/or between an RRC inactive state and an RRC connected state in both ways (e.g., connection inactivation 1570 or connection resume 1580). A wireless device may transition its RRC state from an RRC inactive state to an RRC idle state (e.g., connection release 1560).

An anchor base station may be a base station that may keep a context of a wireless device (e.g., UE context) at least at (e.g., during) a time period that the wireless device stays in a RAN notification area (RNA) of an anchor base station, and/or at (e.g., during) a time period that the wireless device stays in an RRC inactive state. An anchor base station may comprise abase station that a wireless device in an RRC inactive state was most recently connected to in a latest RRC connected state, and/or a base station in which a wireless device most recently performed an RNA update procedure. An RNA may comprise one or more cells operated by one or more base stations. A base station may belongto one or more RNAs. A cell may belong to one or more RNAs.

A wireless device may transition, in a base station, an RRC state (e.g., UE RRC state) from an RRC connected state to an RRC inactive state. The wireless device may receive RNA information from the base station. RNA information may comprise at least one of an RNA identifier, one ormore cell identifiers of one ormore cells of an RNA, abase station identifier, an IP address of the base station, an AS context identifier ofthe wireless device, a resume identifier, and/or the like.

An anchor base station may broadcast a message (e.g., RAN paging message) to base stations of an RNA to reach to a wireless device in an RRC inactive state. The base stations receiving the message from the anchor base station may broadcast and/or multicast another message (e.g., paging message) to wireless devices in their coverage area, cell coverage area, and/or beam coverage area associated with the RNA via an air interface.

A wireless device may perform an RNA update (RNAU) procedure, for example, if the wireless device is in an RRC inactive state and moves into anew RNA. The RNAU procedure may comprise a random access procedure by the wireless device and/or a context retrieve procedure (e.g., UEcontext retrieve). A context retrieve procedure may comprise: receiving, by a base station from a wireless device, a random access preamble; and requesting and/or receiving (e.g., fetching), by a base station, a context ofthe wireless device (e.g., UEcontext) from an old anchor base station. The requesting and/or receiving (e.g., fetching) may comprise: sending a retrieve context request message (e.g., UE context request message) comprisinga resume identifier to the old anchor base station and receiving a retrieve context response message comprising the context of the wireless device from the old anchor base station.

A wireless device in an RRC inactive state may select a cell to camp on based on at least a measurement result for one or more cells, a cell in which a wireless device may monitor an RNA paging message, and/or a core network paging message from a base station. A wireless device in an RRC inactive state may select a cell to perform a random access procedure to resume an RRC connection and/or to send (e.g., transmit) one or more packets to a base station (e.g., to a network). The wireless device may initiate a random access procedure to perform an RNA update procedure, for example, if a cell selected belongs to a different RNA from an RNA for the wireless device in an RRC inactive state. The wireless device may initiate a random access procedure to send (e.g., transmit) one or more packets to a base station of a cell that the wireless device selects, for example, if the wireless device is in an RRC inactive state and has one or more packets (e.g., in abuffer) to send (e.g., transmit) to a network. A random access procedure may be performed with two messages (e.g., 2-stage or2-step random access) and/or four messages (e.g., 4-stage or 4-step random access) between the wireless device and the base station.

A base stationreceiving one or more up link packets from a wireless device in an RRC inactive state may request and/or receive (e.g., fetch) a context of a wireless device (e.g., UE context), for example, by sending (e.g., transmitting) a retrieve context request message for the wireless device to an anchor base station of the wireless device based on at least one of an AS context identifier, an RNA identifier, a base station identifier, a resume identifier, and/or a cell identifier received fromthe wireless device. A base stationmay send (e.g., transmit) a path switch request for a wireless device to a core network entity (e.g., AMF, MME, and/or the like), for example, after or in response to requesting and/or receiving (e.g., fetching) a context. A core network entity may update a downlink tunnel endpoint identifier for one or more bearers established for the wireless device between a user plane core network entity (e.g., UPF, S-GW, and/or the like) and a RAN node (e.g., the base station), such as by changing a downlink tunnel endpoint identifier from an address of the anchor base station to an address of the base station).

Random access (RA) procedures may be used to establish wireless communications, for example, between a wireless device and/or a base station in a cell. A base station may send/transmit one or more control messages (e.g., RRC messages) to configure the wireless device with one or more parameters of a RA configuration (e.g., RACH configuration), for example, based on or prior to initiation of a RA procedure. The base station may send/transmit (e.g., broadcast and/or multicast) the one or more control messages (e.g., RRC messages), for example, to one or more wireless devices. The one or more control messages (e.g., RRC messages) may be wireless device-specific messages (e.g., dedicated RRC messages sent/transmitted toawireless device in various states (e.g., RRC INACTIVE 1520 and/or RRC CONNECTED 1530)). The one ormore control messages (e.g., RRC messages) may comprise one or more parameters. The parameters may comprise parameters for sending/transmitting at least one preamble via one or more RA resources. The one or more parameters may indicate at least one ofthe following: PRACH resource allocation, preamble format, SSB information (e.g., total number of SSBs, downlink resource allocation of SSB transmission, transmission power of SSB transmission, and/or other information), and/or uplink radio resources for one ormore transport block transmissions.

A base station may send/transmit via one or more downlink reference signals. The one or more downlink reference signals may comprise one or more discovery reference signals. A wireless device may determine/select a first downlink reference signal among the one or more downlinkreference signals. The first downlink reference signal may comprise one or more synchronization signals and/or a broadcast channel (e.g., SS/PBCH). The wireless device may adjust a downlink synchronization based on the one or more synchronization signals. The one or more downlinkreference signals may comprise one ormore reference signals (e.g., CSI-RS).

One or more control messages (e.g., RRC messages) may comprise one or more parameters indicating one or more downlink control channels (e.g., PDDCH). Each of the one or more downlink control channels may be associated with at least one of the one or more downlink reference signals. The first downlink reference signal may comprise one ormore system information (e.g., MIB and/or SIB). A base stationmay send/transmit the one or more system information, for example, via a broadcast channel (e.g., PBCH), a downlink control channel (e.g., PDCCH), and/or a downlink shared channel (e.g., PDSCH).

System information may comprise at least one information element (e.g., PDCCH-Config, PDCCH-ConfigSIB1, PDCCH-ConfigCommon). The at least one information element may be used to configure a wireless device, for example, based on one or more control parameters. The one or more control parameters may comprise parameters of one or more CORESETs. The one or more control parameters may comprise the parameters of a first common CORESET (e.g., CORESET#0 or controlResourceSetZero), and/or a second common CORESET (e.g., commonControlResourceSet). The one or more control parameters may comprise one or more search space sets. The one ormore control parameters may comprise parameters of a first search space for the system information (e.g., SIB or searchSpaceSIB1), a first common search space (e.g., space#0 or searchSpaceZero), a first RA search space (e.g., ra-SearchSpace), and/or a first paging search space (pagingSearchSpace). The wireless device may use the one or more control parameters to determine/acquire the one or more downlink control channels.

A wireless device may monitor a set of candidate downlink monitoring occasions (e.g., PDCCH monitoring occasions) for the one or more downlink control channels indicated by the one or more control resource sets. The one or more control resource sets may be on a first active downlink frequency band (e.g., an active BWP, on a first activated serving cell). The first activated serving cell may be configured with the one or more control parameters, for example, basedon the one ormore search space sets. The wireless device may decode each of the one or more downlink control channels indicated by the set of candidates for the one or more downlink control channels, for example, basedon a first format of a first DCI. The set of candidates for the one or more downlink control channels may be defined in terms ofthe one or more search space sets. The one or more search space sets may be one ormore common search space sets (e.g., Type0-PDCCH, Type0A-PDCCH, Type1-PDCCH, Type2-PDCCH, Type3-PDCCH), and/or one or more wireless device-specific search space sets.

A wireless device may monitor a set of candidates for the one or more downlink control channels in a common search space set (e.g., Type0-PDCCH common search space set). A common search space set (e.g., Type0-PDCCH) may be configured by at least one information element (e.g., PDCCH-ConfigSIBl in a MIB). The common search space set (e.g., Type0-PDCCH) may be configured by one or more search space sets (e.g., a searchSpaceSIB1 in PDCCH-ConfigCommon, or searchSpaceZero in PDCCH-ConfigCommon). The common search space set (e.g., Type0-PDCCH) may be configured for a first format of a first DCI scrambled by a first radio network temporary identifier (e.g., a SI-RNTI).

A wireless device may monitor a set of candidates for one or more downlink control channels in a common search space set (e.g., Type1-PDCCH). the common search space set (e.g., Type1-PDCCH) may be configured by one or more search space sets (e.g., a ra-searchSpace in a PDCCH-ConfigCommon). The common search space set (e.g., Type1-PDCCH) may be configured for a second format of a second DCI scrambled by a second radio network temporary identifier (e.g., aRA-RNTI, ora TC-RNTI).

A wireless device may determine, for example during a cell search, that a first control resource set for a first common search space (e.g., Type0-PDCCH) is present. The first controlresource setmay comprise one ormore resource blocks and/or one or more symbols. One ormore controlmessages (e.g., RRC messages) may comprise one or more parameters indicating one or more monitoring occasions of the one or more downlink control channels. The wireless device may determine a number/quantity of consecutive resource blocks and/or a number/quantity of consecutive symbols for the first controlresource set ofthe first common search space. One or more bits (e.g., a four most significant bits or any other bits) of the at least one information element (e.g., PDCCH-ConfigSIB1) may indicate the number/quantity of consecutive resource blocks and/or the number/quantity of consecutive symbols. The wireless device may determine the one or more monitoring occasions of the one ormore downlink control channels from one ormore bits (e.g., a four least significant bis or any other bits) of the at least one information element (e.g., PDCCH-ConfigSIB1). The one or more monitoring occasions of the one ormore downlink control channels associated with the first downlink reference signal may be determined, for example, based on one or more system frame numbers and/or one ormore slot indexes ofthe first control resource set. The first downlink reference signal with a first index may overlap in time with the first frame number and/or the first slotindex

A wireless device may determine afirst downlink channelamong the one or more downlink control channels, for example, based on a first downlink reference signal. The first downlink channel may be a first downlink control channel, and/or a first system information block (e.g., SIB1). The wireless device may determine/assume that a demodulation reference signal antenna port associated with a reception of the first downlink channel is quasi co-located (QCL) with the first downlink reference signal. The demodulation reference signal antenna port associated with the reception of the first downlink channel and/or the first downlink reference signal (e.g., the corresponding SS/PBCH block) may be quasico-located with respect to: an average gain, QCL-TypeA, and/or QCL-TypeD.

A physical layer of the wireless devicemay receive from higher layers one or more blockindexes (e.g., SS/PBCH block indexes). The physical layer may receive one or more configuration parameters of one or more RA transmission parameters (e.g., PRACH transmission parameters that may indicate PRACH preamble format, preamble index, a corresponding RA-RNTI, time resources, and/or frequency resources for PRACH transmission), and/or parameters for determining one or more sequences (and/or the shifts in the PRACH preamble sequence set (e.g., set type)). The physical layer may provide to higher layers one or more corresponding sets of reference signal received power (RSRP) measurements.

A RA procedure may comprise one or more transmissions of a RA preamble (e.g., Msg 1) in one ormore PRACH occasions. The RA procedure may comprise one or more transmissions of one or more RA response (RAR) messages, for example, with one or more physical downlink channels (e.g., Msg2). The RA procedure may comprise one ormore uplinkmessages (e.g., Msg3)via one ormore uplink channels (e.g., PUSCH), and/or one or more downlink channels (e.g., PDSCH) for contention resolution. The RA procedure may be basedone (e.g., triggered upon) request of one ormore RA messages (e.g., PRACH transmissions). The request may be received via higher layers and/or via one ormore controlorders (e.g., PDCCH order).

A wireless device (e.g., a MAC entity ofthe wireless device) may determine/select one ormore RA resources for a RA procedure initiated. The wireless device (e.g., a MAC entity of the wireless device) may determine/select a first downlink reference signal. the wireless device (e.g., a MAC entity of the wireless device) may determine/select the first downlink reference signal (e.g., a first SS/PBCH block (SSB), and/or a CSI-RS) with the first indicator above a first threshold (e.g., RSRP above a first RSRP threshold). The first threshold (e.g., RSRP threshold) may be defined pera type ofreference signal(e.g., rsrp-ThresholdSSB may for a SSB, and/or rsrp-ThresholdCSI-RS for a CSI-RS). The first threshold (e.g., RSRP threshold) may be broadcast, semi-statically configured, and/or predefined. The wireless device (e.g., a MAC entity of the wireless device) may determine/select the first downlink reference signal for contention-free RA procedure, for example, based on beam failure recovery, and/or system information request. The wireless device (e.g., a MAC entity of the wireless device) may determine/select the first downlink reference signal for contention-based RA procedure.

A wireless device may determine/select one or more RA resources. The one or more RA resources may, for example, comprise one or more RA preambles, one or more time resources, and/or one or more frequency resources for RA message (e.g., PRACH transmission). The one ormore RA resources may be predefined. The one or more RA resources may be indicated by one or more control message (e.g., RRC messages). The one or more RA resources may be indicated by one or more downlink control orders (e.g., PDCCH order). The one or more RA resources may be determined based on the first downlink reference signal. The wireless device may set a first preamble indexto a parameter (e.g., ra-PreambleIndex) corresponding to the first downlink reference signal

A wireless device may send/transmit at least one RA preamble via one or more RA resources. The wireless device may send/transmit a first preamble based on a first preamble index The first preamble may be sent/transmitted via a first format (e.g., PRACH format) with a first transmission power on one ormore RA resources (e.g., PRACH resources). The one or more RA resources (e.g., PRACH resources) may comprise one or more RA occasions (e.g., PRACH occasions).

One or more control messages (e.g., RRC messages) may comprise one ormore RA parameters. A cell specific RA configuration message (e.g., RACH-ConfigCommon and/or RACH-ConfigGeneric) may comprise: a total number/quantity of RA preambles (e.g., totalNumberOfRA-Preambles), one or more PRACH configuration indexes (e.g., prach-ConfigurationIndex), an amount of PRACH occasions that may be multiplexed in frequency domain in a time instance (e.g., msg1-FDM), an offset of a lowest PRACH occasion in frequency domain with respect to a first resource block (e.g., msg1-Frequency Start), a power ramping step for PRACH (e.g., powerRampingStep), a target power level at the network receiver side (preambleReceivedTargetPower), a maximum number/quantity of RA preamble transmission that may be performed (e.g., preambleTransMax), a window length for a RARe.g., Msg2) (e.g., ra-ResponseWindow), a number/quantity of SSBs per RA channel (e.g., RACH) occasion, and/or an amount of contention-based preambles per SSB (e.g., ssb-perRACH-OccasionAndCB-PreamblesPerSSB). The total number/quantity of RA preambles may be a multiple of the number/quantity of SSBs per RACH occasion. The window length for RAR may be in an amount of slots. A dedicated RA configuration message (e.g., RACH-ConfigDedicated) may comprise, among other parameters, one or more RA occasions (e.g., RACH occasions) for contention-free RA (e.g., occasions), and/or one or more PRACH mask index for RA resource selection (e.g., ra-ssb-OccasionMaskIndex).

One or more RA parameters (e.g., ssb-perRACH-OccasionAndCB-PreamblesPerSSB) may comprise a first number/quantity (e.g., N) of one or more downlink reference signals (e.g., SS/PBCH blocks) that may be associated with a first PRACH occasion. The one ormore RA parameters (e.g., ssb-perRACH-OccasionAndCB-PreamblesPerSSB)may comprise a second number/quantity (e.g., R) ofthe one ormore RA preambles forafirst downlink reference signal and/or for a first PRACH occasion. The one ormore RA preambles may be contention-based preambles. The first downlink reference signal may be a first SS/PBCH block. The first SS/PBCH block may be mapped to at least one (e.g., 1/N) consecutive valid PRACH occasions, for example, based on the first number (e.g., if N<1). At least one preamble with consecutive indexes associated with the first SS/PBCH block may start from the first preamble index for the first valid PRACH occasion, for example, based on the second number/quantity (e.g.,R).

One or more configuration indexes (e.g., PRACH configuration indexes or prach-ConfigurationIndex), may indicate a preamble format, a periodicity for one or more PRACH time resources, one or more PRACH subframe numbers, a number/quantity of PRACH slots within the one or more PRACH subframes, a PRACH starting symbol number, and/or a number/quantity of time domain PRACH occasions within first PRACH slot. One or more RA parameters may comprise an association period for mapping one or more SS/PBCH blocks to one or more PRACH occasions. One or more SS/PBCH block indexes may be mapped to the one or more PRACH occasions, for example, based on an order. The order may be: increasing order of indexes of at least one preamble in a first PRACH occasion, increasing order of indexes of one or more frequency resources (e.g., for frequency multiplexed PRACH occasions), increasing order of indexes of one or more time resources (e.g., for time multiplexed PRACH occasions) in the first PRACH slot, and/or increasing order of indexes for one or more PRACH slots.

A base stationmay cause/triggera PRACH transmission, for example, based on sending/transmitting one or more control orders (e.g., PDCCH order). One or more mask indexes (e.g., PRACH mask indexes or ra-ssb-OccasionMaskIndex) may indicate one or more RA occasions (e.g., PRACH occasions). The one or more RA occasions (e.g., PRACH occasions) may be associated with a first block index (e.g., SS/PBCH block index) indicated by the one or more control orders. The one or more RA occasions (e.g., PRACH occasions) may be mapped (e.g., consecutively) for the first block index (e.g., SS/PBCH block index). The wireless device may determine/select a first RA occasion (e.g., PRACH occasion indicated) by a first mask index(e.g., PRACH mask index value), for example, based on the first block index(e.g., SS/PBCH block index) in the first association period. The first association period may be a first mapping cycle. The wireless device may reset the one or more indexes ofthe one ormore RA occasions (e.g., PRACH occasions) for the first mapping cycle.

A wireless device may determine a first RA occasion (e.g., PRACH occasion) for sending/transmitting a first preamble. The wireless device may determine a RA- temporary identifier (e.g., RA-RNTI) associated with the first RA occasion (e.g., PRACH occasion). The RA-temporary identifier (e.g., RA-RNTI) may be a function of at least one of PRACH symbol, and/or a slot index of a PRACH occasion in a system frame, and/or a frequency index of the PRACH occasion in frequency domain, and/or an uplink carrier index The RA-RNTI may be determined based on: RA-RNTI= 1 + s_id + 14 × t_id + 14 × 80 × f_id + 14 × 80 × 8 × ul_carrier_id.s_id may be a PRACH starting symbol. t_id may be an index of a first slot of a first PRACH occasion I, a system frame. f_id may be an index of the first PRACH occasion in frequency domain. ul_carrier_id may be an uplink carrier index

A wireless device may determine a parameter indicating a first preamble target power (e.g., PREAMBLE_RECEIVED _TARGET_POWER). The wireless device may send/transmit a first preamble via a first RA occasion (e.g., PRACH occasion), with a first preamble transmission power (e.g., *P*_{PRACH,*b*, *f,c*}(*i*)). The first preamble transmission power may be determined based on the first preamble target power.

A wireless device may receive one or more RARs (e.g., Msg2), for example, based on a PRACH transmission. The one ormore RARs may be scrambled by a radio network temporary identifier (e.g., RA-RNTI). The wireless device may monitor a search space set (e.g., the Type1-PDCCH common search space) for afirst DCI (e.g., DCI format 1_0). The first DCI may comprise the one or more RARs. A base station may send/transmit the one or more RARs in a form of DCI format 1_0, for example, based on a RA procedure initiated by PDCCH order, MAC layer, and/or RRC layer. The DCI format 1_0 may comprise: one ormore RA preamble index, SS/PBCH index PRACH mask index, UL/SUL indicator, frequency resource assignments, time domain resource assignments, modulation schemes, and/or coding schemes.

A wireless device may monitor for a first DCI (e.g., DCI format 1_0) during a time window. The time window may be indicated by the one ormore controlmessages (e.g., RRC messages). Thetime windowmay start at a first symbol of a first control resource set. The wireless device may be configured by the one or more parameters in the one ormore controlmessages (e.g., RRC messages) to receive the first DCI on the first controlresource set. The wireless device may determine a length ofthe time windowbased on the one ormore parameters in the one or more controlmessages (e.g., RRC messages such as ra-ResponseWindow). The length of the time window may be in a number/quantity of slots.

A wireless device may stop a time window, for example, based on a reception of one or more RARs being determined as successful. A reception of the one or more RARs may be determined as successful, for example, based on the one or more RARs comprising a preamble index (e.g., a RA preamble identity: RAPID) corresponding to a preamble that the wireless device sends/transmits to a base station. The RAPID may be associated with a RA message (e.g., PRACH transmission). The one ormore RARs may comprise an uplink grant indicating one or more uplink resources granted for the wireless device. The wireless device may send/transmit one ormore transport blocks (e.g., Message 3) via the one or more uplink resources.

A base station (e.g., gNB or any other base station) may send/transmit DCI via a control channel (e.g., PDCCH) for at least one of: scheduling assignment/grant, slot format notification, pre-emption indication, and/or power-control commands. The DCI may comprise: an identifier of a DCI format; downlink scheduling assignment(s); uplink scheduling grant(s); a slot format indicator; a pre-emption indication; power-control indication for PUCCH/PUSCH; and/or power-control indication for SRS. A downlink scheduling assignment DCI may comprise parameters indicating: a DCI format, a PDSCH resource, a transport format, HARQ information; control information related to multiple antenna schemes, and/or a command for power control of the PUCCH. An up link scheduling grant DCI may comprise parameters indicating: a DCI format, PUSCH resource, transport format, HARQ related information, and/or a power control command ofthe PUSCH.

Different types of control information may correspond to different DCI message sizes. A larger scheduling message may be used, for example, based on supporting multiple beams, spatial multiplexing in the spatial domain, and/or non contiguous allocation of RBs in the frequency domain. An up link grant enabling/allowing for frequency-contiguous allocationmay be smallerthan the larger scheduling message. DCI may be categorized into different DCI formats, for example, based on a format corresponding to a certain message size and/or usage.

A wireless device may monitor one or more PDCCHs for detecting one or more DCI with one or more DCI format, in a common search space and/or a wireless device-specific search space. A wireless device may monitor PDCCH with a limited set of DCI formats, for example, based on reducing power consumption. The wireless device may consume more power, for example, based on a number/quantity of DCI formats for detection (e.g., more DCI formats may result in more power consumed).

Information in the DCI formats for downlink scheduling may comprise: an identifier of a DCI format, a carrier indicator, a frequency domain resource assignment, a time domain resource assignment, a BWP indicator, a HARQ process number, one or more MCS, one or more NDI, one or more RV, MIMO information, Downlink assignment index (DAI), PUCCH resource indicator, PDSCH-to-HARQ_feedback timing indicator, TPC for PUCCH, SRS request, and/or padding. The MIMO information may comprise: PMI; precoding information, transport block swap flag, power offset between PDSCH and/or reference signal, reference-signal scrambling sequence, number/quantity of layers, antenna ports for the transmission, and/or Transmission Configuration Indication (TCI). The information in the DCI formats for uplink scheduling may comprise: an identifier of a DCI format, carrier indicator, BWP indication, resource allocation type, frequency domain resource assignment, time domain resource assignment, MCS, NDI, Phase rotation of the uplink DMRS, precoding information, CSIrequest, SRS request, Uplink index/DAI, TPC for PUSCH, and/or padding based on necessary.

A base station (e.g., gNB) may perform CRC scrambling for DCI, before sending/transmitting the DCI via a controlchannel(e.g., PDCCH). The base station (e.g., gNB) may perform CRC scrambling by binary addition of multiple bits of at least one wireless device identifier (e.g., C-RNTI, CS-RNTI, TPC-CS-RNTI, TPC-PUCCH-RNTI, TPC-PUSCH-RNTI, SP CSI C-RNTI, and/or TPC-SRS-RNTI) and/or the CRC bits of the DCI. The wireless device may check the CRC bits ofthe DCI, for example, based on detecting the DCI. The wireless device may receive the DCI for example, based on the CRC being scrambled by a sequence ofbits that is the same as the at least one wireless device identifier.

A base station (e.g., gNB or any other base station) may send/transmit one or more PDCCH in different CORESETs, for example, based on supporting wide bandwidth operation. A base station (e.g., gNB) may send/transmit one or more controlmessages (e.g., RRC messages) comprising configuration parameters of one or more CORESETs. A CORESET may comprise:a first OFDM symbol, a number/quantity of consecutive OFDM symbols, a set of resource blocks, and/or a CCE-to-REG mapping. A base station (e.g., gNB or any other base station) may send/transmit a PDCCH in a dedicated CORESET a, for example, based on a situation (e.g., for beam failure recovery confirmation, etc.). A wireless device may monitor PDCCH for detecting DCI in one or more configured CORESETs, for example, based on a reduction in power consumption.

A DCI format (e.g., DCI format 1_0) may be used for a scheduling of PDSCH in a DL cell. The DCI format for downlink scheduling may comprise CRCbits scrambled by at least one wireless device identifier (e.g., C-RNTI, CS-RNTI, and/or MCS-C-RNTI). The information in the DCI format for downlink scheduling may comprise: an identifier of a DCI format, frequency domain resource assignment, time domain resource assignment, VRB-to-PRB mapping, a modulation and/or coding scheme, a new data indicator, a redundancy version, a HARQ process number, a downlink assignment index, a TPC command for scheduled PUCCH, a PUCCH resource indicator, and/or a PDSCH-to-HARQ_feedback timing indicator.

A receive and/or a send/transmit bandwidth of a wireless device may not be as large as a bandwidth of a cell, for example, based on Bandwidth Adaptation (BA). The receive bandwidth and/or the send/transmit bandwidth of the wireless device may be adjusted. The width of the receive bandwidth and/or the send/transmit bandwidth may be ordered to change (e.g. and/or to shrink during period of low activity to save power). The location ofthe receive bandwidth and/or the send/transmit bandwidth may move in the frequency domain (e.g. to increase scheduling flexibility). The subcarrier spacing of the receive bandwidth and/or the send/transmit bandwidth may be ordered to change (e.g. enabling different services). A subset of the total cell bandwidth of a cell may be a BWP or any other wireless resource. The BA may be enabled/achieved by configuring the wireless device with one or more BWPs and/or indicating to the wireless device which of the configured one or more BWPs is currently the active BWP.

A base station may configure a wireless device (e.g., UE) with UL BWPs and/or DL BWPs to enable BA on a PCell. based on The base stationmay configure the wireless device with at least DL BWP(s) (e.g., there may be no UL BWPS in the UL) to enable BA on an SCell, for example, basedon carrier aggregation being configured.

An initial BWP may be aBWP used for initial access,for example,by the PCell. the wireless device may operate on the initial BWP (e.g., initial UL/DL BWP) during the initial access. An initial BWP may be a BWP configured for the wireless device to first operate at the SCell for example, based on the SCell being activated. the SCell being activated, the wireless device may operate on the initialBWP.

A base station may configure a wireless device with one ormore BWPs. A wireless device may switch a first DL BWP and/or afirst UL BWP of the one ormore BWPs independently, for example, using paired spectrum (e.g. FDD). A wireless device may switch a second DL BWP and/or a second UL BWP of the one or more BWPs simultaneously, for example, using unpaired spectrum (e.g. TDD). Switching between the configured one or more BWPs may happen based on DCI and/or based on an inactivity timer (e.g., BWP inactivity timer). An expiry of the inactivity timer associated to the serving cell may switch an active BWP ofthe serving cell to a default BWP, for example, based on the inactivity timer being configure dfor a serving cell. The default BWP may be configured by the network.

One UL BWP for eachuplink carrier (e.g., SUL, NUL) and/or one DLBWP may be active at a time, for example, based on being configured with BA, for FDD systems, and/or in an active serving cell. BWPs other than the one configured UL BWP and/or the one configured DL BWP may be deactivated, one DL/UL BWP pair may be active at a time in an active serving cell, for example, based on using TDD systems. BWPs, other than the one DL/UL BWP pair that the wireless device configured, may be deactivated. Operating on the one ULBWP and/or the one DL BWP (or the one DL/UL pair) may reduce wireless device battery consumption. The wireless device may not monitor PDCCH, may not send/transmit via PUCCH, may not send/transmit via PRACH and/or may not send/transmit via UL-SCH, for example via deactivated BWPs.

A wireless device may monitor a first PDCCH on an active BWP of a serving cell, for example, based on being configured with BA. The wireless device may not monitor a second PDCCH on an entire DL frequency/bandwidth of the cell. The wireless device may not monitor the second PDCCH on deactivated BWPs. A BWP inactivity timer may be used to switch the active BWP to a default BWP of the serving cell. The wireless device may start/restart the BWP inactivity timer, for example, based on successful PDCCH decodingon the serving cell. The wireless device may switch to the default BWP based on (e.g., in response to) an expiry of the BWP inactivity timer.

A wireless device may be configured with one ormore BWPs fora serving cell (e.g., PCell, SCell). The serving cell may be configured with up to amaximum amount of BWPs (e.g., four orany other number/quantity). There may be one active BWP at a time, for example, based on an activated serving cell.

A BWP switching for a serving cell may be used to activate an inactive BWP and/or deactivate an active BWP. The BWP switching may be controlled by a PDCCH message indicating a downlink assignment and/or an uplink grant. The BWP switching may be controlled by an inactivity timer (e.g., bwp-InactivityTimer). The BWP switching may be controlled by the serving cell (e.g., MAC entity of the serving cell), for example, based on initiating a RA procedure. The BWP switching may be controlled by RRC signaling.

A wireless device may perform an RRC (re-)configuration of BWPs (e.g., firstActiveDownlinkBWP-Id (e.g., included in RRC signaling) and/or firstActiveUplinkBWP-Id (e.g., included in RRC signaling)), for example, based on a serving cell (e.g., SpCell). The wireless device may activate a DL BWP indicated by the indications of BWPs (e.g., firstActiveDownlinkBWP-Id and/or an UL BWP indicated by the firstActiveUplinkBWP-Id) for example, based on not receiving a PDCCH message indicating a downlink assignment and/or an uplink grant. The wireless device may activate a DL BWP indicated by the BWP indications (e.g., firstActiveDownlinkBWP-Id and/oran UL BWP indicated by the first ActiveUplinkBWP-Id), for example, basedonan activation of an SCell and/or not receiving a PDCCH indicating a downlink assignment and/or an uplink grant. An active BWP for a serving cellmay be indicated by RRC signaling and/or PDCCH messaging. A DLBWP may be paired with a UL BWP, for example basedon unpaired spectrum(e.g., time-division-duplex(TDD)). BWP switching may switch the UL BWP and/or the DL BWP, for example, based ona common instruction and/or in a common manner (e.g., simultaneous or substantially simultaneous).

An active BWP of an activated serving cell (e.g., PCell, SCell) may be configured with one or more BWPs. A wireless device may perform, via the active BWP: sending/transmitting via UL-SCH, sending/transmitting via RACH based on PRACH occasions being configured, monitoring a PDCCH, sending/transmitting via PUCCH, reporting CSI for the active BWP, sending/transmitting via SRS, receiving DL-SCH, initializing/reinitializing any suspended configured up link grants of configured grant Type 1 based on a stored configuration, and/or start via a symbol. A deactivated BWP of an activated serving cell may be configured with one ormore BWPs. A wireless device may not perform on a deactivated BWP: sending/transmitting via UL-SCH, sending/transmitting via RACH, monitoring a PDCCH, sending/transmitting a PUCCH message, reporting CSI for the deactivated BWP, s ending/transmitting via SRS, receiving a DL-SCH message. A deactivated BWP of an activated serving cell may be configured with one or more BWPs. A wireless device may clear a configured downlink assignment and/or configured uplink grant (e.g., of configured grant Type 2) via the deactivated BWP. The wireless device may suspend any configured uplink grant (e.g., of configured Type 1) via the deactivated (or inactive) BWP. A wireless device may initiate a RA procedure (e.g., contention-based RA, contention-free RA) via a serving cell (e.g., PCell, SCell).

The base stationmay configure PRACH occasions for an active ULBWP of the serving cell of the wireless device. The active UL BWP may be indicated by (e.g., identified by) an uplink BWP ID (e.g., bwp-Id configured by higher layers (RRC)). The serving cellmay be an SpCell. An active DL BWP of the serving cell of the wireless device may be identified with a downlink BWP ID (e.g., bwp-Id configured by higher layers (e.g., RRC)). The uplink BWP ID may be different from the downlink BWP ID. The wireless device may initiate a RA procedure. The base station may configure PRACH occasions for the active UL BWP. The serving cell may be an SpCell The downlink BWP ID ofthe active DL BWP may be different from the uplink BWP ID of the active ULBWP. A wireless device (e.g., a MAC entity of the wireless device) may switchfromthe active DL BWP to a DL BWP, of the serving cell. The switched-to DLBWP may be identified with a second downlink BWP ID. The switching from the active DLBWP to the DL BWP may comprise setting the DLBWP as a second active DLBWP of the serving cell. The second downlink BWP IDmay be the same as the uplink BWP ID. The wireless device (e.g., a MAC entity ofthe wireless device) may perform the RA procedure on the DL BWP (e.g., the second active DL BWP) of the serving cell (e.g., SpCell) and/or the active UL BWP of the serving cell. The wireless device may stop a BWP inactivity timer (e.g., bwp-Inactivity Timer configured by higher layers (e.g., RRC)). The BWP inactivity timer may be associated with the DL BWP ofthe serving cell.

The base station may configure PRACH occasions for an active UL BWP ofthe serving cell ofthe wireless device. The serving cell may not be an SpCell. The servingcellmay be an SCell. The wireless device may initiate the RA procedure. The base station may configure PRACH occasions for the active ULBWP. The serving cellmay not be an SpCell. A wireless device (e.g., a MAC entity ofthe wireless device) may perform the RA procedure on a first active DL BWP of an SpCell (e.g., PCell) and/or the active UL BWP of the servingcell. The wireless device may stop a second BWP inactivity timer (e.g., bwp-Inactivity Timer configured by higher layers (RRC)), for example, based on being associated with a second active DL BWP of the serving cell and/or initiating the RA procedure. The wireless device may initiate the RA procedure. The serving cellmay be the SCell. The wireless device may stop a first BWP inactivity timer (e.g., bwp-Inactivity Timer configured by higher layers (RRC)) associated with the first active DL BWP of the SpCell.

The base station may not configure PRACH occasions for an active ULBWP of the serving cell of the wireless device. The wireless device may initiate the RA procedure on the serving cell. The PRACH occasions may not be configured for the active ULBWP ofthe serving cell. A wireless device (e.g., a MAC entity of the wireless device) may switch from the active ULBWP to an uplink BWP (e.g., initial up link BWP) of the servingcell. The up link BWP may be indicated by RRC signaling (e.g., initialUplinkBWP). The switching from the active UL BWP to the uplink BWP may comprise setting the uplink BWP as a current active ULBWP ofthe serving cell. The serving cell may be an SpCell. The wireless device may initiate the RA procedure on the serving cell. The PRACH occasionsmay notbe configured for the active UL BWP of the servingcell. The serving cellmay be an SpCell. The wireless device (e.g., a MAC entity of the wireless device) may switch from an active DL BWP of the serving cell to a downlink BWP (e.g., initial downlink BWP) of the serving cell. The downlink BWP may be indicated by RRC signaling (e.g., initialDownlinkBWP). The switching fromthe active DL BWP to the downlink BWP may comprise setting the downlink BWP as a current active DL BWP of the serving cell. The wireless device (e.g., a MAC entity of the wireless device) may perform the RA procedure via the uplink BWP of the serving cell and/or the downlink BWP of the serving cell. The wireless device may stop a BWP inactivity timer (e.g., bwp-Inactivity Timer configured by higher layers (RRC)), for example, based on the initiating the RA procedure. The BWP inactivity timermay be associated with the downlinkBWP (e.g., the current active DLBWP) ofthe serving cell.

The base stationmay not configure PRACH occasions for an active UL BWP of the serving cell (e.g., SCell) of the wireless device. The wireless device may initiate the RA procedure on the serving cell. The PRACH occasions may not be configured for the active UL BWP of the serving cell. A wireless device (e.g., a MAC entity of the wireless device) may switch from the active UL BWP to an uplinkBWP (initial uplink BWP) of the serving cell. The uplinkBWP may be indicated by RRC signaling (e.g., initialUplinkBWP). The switching from the active UL BWP to the uplinkBWP may comprise setting the uplinkBWP as a current active UL BWP of the serving cell. The serving cell may not be an SpCell. The serving cell may be an SCell. The serving cell may not be the SpCell. The wireless device (e.g., a MAC entity of the wireless device) may perform the RA procedure on the uplink BWP of the serving cell and/or an active downlink BWP of an SpCell. The wireless device may initiate the RA procedure. The wireless device may stopa second BWP inactivity timer (e.g., bwp -InactivityTimer configured by higher layers (RRC)) associated with a second active DL BWP of the serving cell. The wireless device may stop, a first BWP inactivity timer (e.g., bwp-InactivityTimer configured by higher layers (RRC)) associated with the active DLBWP ofthe SpCell, for example, based on the initiating the RA procedure and/or the serving cell being the SCell.

A wireless device (e.g., a MAC entity of the wireless device) may receive a PDCCH message for a BWP switching (e.g., UL BWP and/or DL BWP switching) of a serving cell. There may not be an ongoing RA procedure associated with the serving cell. The wireless device (e.g., a MAC entity ofthe wireless device) may receive the PDCCH message. There may not be an ongoing RA procedure associated with the serving cell for example, based on the wireless device (e.g., a MAC entity of the wireless device) receiving the PDCCH message for the BWP switching of the serving cell. The wireless device (e.g., a MAC entity of the wireless device) may perform the BWP switching to a BWP ofthe serving cell, for example, based onan indicationvia the PDCCH.

A wireless device (e.g., a MAC entity of the wireless device) may receive a PDCCH message for a BWP switching (e.g., UL BWP and/or DL BWP switching) of a serving cell. The PDCCH message may be addressed to an identifier (e.g., C-RNTI) of the wireless device. There may be an ongoing RA procedure associated with the serving cell. The wireless device may complete the ongoing RA procedure associated with the serving cell, for example, based on (e.g., in response to) receiving the PDCCH addressed to the identifier (e.g., C-RNTI). The wireless device (e.g., a MAC entity of the wireless device) may perform the BWP switching to a BWP of the serving cell, for example, basedon (e.g., in response to) an indication via a the PDCCH message.

A wireless device (e.g., a MAC entity ofthe wireless device) may receive a PDCCH for a BWP switching (e.g., UL BWP and/or DLBWP switching) for a serving cell. There may be an ongoing RA procedure associated with the serving cell in the wireless device (e.g., a MAC entity of the wireless device) for example, based on the wireless device (e.g., a MAC entity of the wireless device) receiving the PDCCH. The Wireless device (e.g., a MAC entity of the wireless device) may receive the PDCCH for the BWP switching of the serving cell, for example, based an ongoing RA procedure associated with the serving cell. The wireless device implementation may determine whether to perform the BWP switching and/or ignore the PDCCH for the BWP switching.

The wireless device (e.g., a MAC entity of the wireless device) may perform the BWP switching, for example, based on receiving the PDCCH message for the BWP switching (other than successful contention resolution for the RA procedure). The BWP switching may comprise switching to a BWP indicated by the PDCCH message. The wireless device (e.g., a MAC entity ofthe wireless device) may stop the ongoing RA procedure and/or may initiate a second RA procedure, for example, based on (e.g., in response to) and/or after performing the BWP switching.

The wireless device (e.g., a MAC entity of the wireless device) may ignore the PDCCH message for the BWP switching. The Wireless device (e.g., a MACentity of the wireless device) may continue with the ongoing RA procedure on the serving cell (e.g., based on ignoring the PDCCH for the BWP switching). A base station may configure an activated serving cell of a wireless device with a BWP inactivity timer. The base station may configure the wireless device with a default DL BWP ID for the activated serving cell (e.g., via RRC signaling including defaultDownlinkBWP-Id parameter). An active DL BWP of the activated serving cell may not be a BWP indicated by the default DLBWP ID.

The base stationmay not configure the wireless device with a default DL BWP ID for the activated serving cell (e.g., via RRC signaling including defaultDownlinkBWP-Id parameter). An active DL BWP of the activated serving cell may not be an initial downlink BWP (e.g., via RRC signaling including initialDownlinkBWP parameter) ofthe activated serving cell. The base station may configure the wireless device with the default DL BWP ID. The active DLBWP ofthe activated serving cell may not be the BWP indicated by the default DLBWP ID. The base station may not configure the wireless device with the default DL BWP ID. The active DL BWP may not be the initial downlink BWP. The wireless device may start and/or restart the BWP inactivity timer associated with the active DL BWP of the activated serving cell, for example, based on receiving a PDCCH message via the active DL BWP that may indicate a downlink assignment and/or an uplink grant. The PDCCH message may be addressedto an identifier (e.g., C-RNTI or CS-RNTI).

The base station may configure the wireless device with the default DL BWP ID. The active DL BWP of the activated serving cell may not be the BWP indicated by the default DL BWP ID. The base station may not configure the wireless device with the default DLBWP ID. The active DL BWP may not be the initial downlink BWP. The wireless device may start and/or restart the BWP inactivity timer associated with the active DLBWP of the activated serving cell, for example, based on receiving a PDCCH message, for the active DL BWP, indicating a downlink assignment and/or an up link grant. The PDCCH message may be addressed to an identifier (e.g., C-RNTI or CS-RNTI.

The wireless devicemay receive the PDCCH message for example, based on no ongoing RA procedure associated with the activated serving cell. The wireless device may receive the PDCCH message for example, based on an ongoing RA procedure associated with the activated serving cell and/or the ongoing RA procedure being completed successfully. The PDCCH message addressed to an identifier (e.g., C-RNTI) of the wireless device may be received.

The base station may configure the wireless device with the default DL BWP ID. The active DL BWP of the activated serving cell may not be the BWP indicated by the default DL BWP ID. The base station may not configure the wireless device with the default DLBWP ID. The active DL BWP may not be the initialdownlink BWP. The wireless device may start and/or restart the BWP inactivity timer associated with the active DLBWP ofthe activated serving cell, for example, based on sending/transmitting a first MAC PDU in a configured up link grant and/or receiving a second MAC PDU in a configured downlink as signment.

The wireless device may send/transmit the first MAC PDU and/or receive the second MAC PDU, for example, based on no ongoing RA procedure associated with the activated serving cell. The BWP inactivity timer as sociated with the active DL BWP of the activated serving cell may expire. The base station may configure the wireless device with the default DLBWP ID. The base station may configure the wireless device with the default DLBWP ID, for example, based on the BWP inactivity timer expiring. A wireless device (e.g., a MAC entity ofthe wireless device) may perform BWP switching to a BWP indicated by the default DLBWP ID.

The base station may not configure the wireless device with the default DL BWP ID. The base station may not configure the wireless device with the default DL BWP ID, for example, based on the BWP inactivity timer expiring. A wireless device (e.g., a MAC entity ofthe wireless device) may perform BWP switching to the initial downlinkBWP (e.g., initialDownlinkBWP in RRC signaling). A wireless device may initiate a RA procedure on a secondary cell (e.g., SCell). The wireless device may monitor for a RA response for the RA procedure on a SpCell. The wireless device may initiate the RA procedure via the secondary cell. The secondary cell and/or the SpCell may be associated with the RA procedure, for example, based on the monitoring the RA response to the SpCell.

A wireless device may receive a PDCCH message for a BWP switching (e.g., UL and/or DL BWP switching). A wireless device (e.g., a MACentity ofthe wireless device) may switch from a first active DL BWP ofthe activated serving cell to a BWP (e.g., DL BWP) ofthe activated serving cell, for example, based on receiving the PDCCH message. The switching from the first active DL BWP to the BWP may comprise setting the BWP as a current active DL BWP of the activated serving cell. The wireless device may deactivate the first active DL BWP, for example, based on the switching.

The base station may configure the wireless device with a default DL BWP ID. The BWP may not be indicated (or identified) by the default DLBWP ID. The base station may configure the wireless device with the default DL BWP ID. The wireless device (e.g., a MAC entity of the wireless device) may switch from the first active DL BWP of the activated serving cell to the BWP. The wireless device may start and/or restart the BWP inactivity timer as s ociated with the BWP (e.g., the current active DLBWP), for example, based on the BWP not being the default DL BWP (or the BWP not being indicated by the default DLBWP ID).

The base station may not configure the wireless device with a default DL BWP ID. The BWP may not be the initial downlinkBWP of the activated serving cell. The base station may not configure the wireless device with the default DLBWP ID. The wireless device (e.g., a MACentity ofthe wireless device) may switch from the first active DL BWP of the activated serving cell to the BWP. The wireless device may start and/orrestart the BWP inactivity timer associated with the BWP (e.g., the current active DLBWP), for example, based on the BWP not being the initial downlink BWP.

A base station may configure a wireless device with a secondary cell (e.g., SCell), for example, based on being configured for carrier aggregation (CA). A wireless device may receive an SCell Activation/DeactivationMAC CE message activating the secondary cell. The secondary cell may be deactivated prior to the receiving the SCell Activation/Deactivation MAC CE message. A wireless device may receive the SCell Activation/Deactivation MAC CE message, and may activate the secondary cell. The wireless device may activate a downlink BWP of the secondary cell and/or activate an uplink BWP ofthe secondary cell, for example, based on the secondary cell being deactivated prior to the receiving the SCellActivation/Deactivation MAC CE message. The downlink BWP may be indicated by the DLBWP ID (e.g., firstActiveDownlinkBWP-Id). The uplinkBWPmay be indicated by the UL BWP ID (e.g., firstActiveUplinkBWP-Id).

The base station may configure a wireless device with a BWP inactivity timer for the activated secondary cell A deactivation timer (e.g., sCellDeactivationTimer) associated with the activated secondary cell may expire. The deactivation timer (e.g., sCellDeactivationTimer) may expire. The wireless device may stop the BWP inactivity timer as sociated with the activated secondary cell. The wireless device may deactivate an active downlink BWP (e.g., and/or an active ULBWP basedon exists) associated with the activated secondary cell, for example, based on the deactivation timer (e.g., sCellDeactivationTimer) expiring.

A wireless device may be configured for operation in bandwidth parts (BWPs) of a serving cell. The wireless device (e.g., a UE) may be configured, by higher layers with a parameter BWP-Downlink, a first set of BWPs (e.g., at most four BWPs) for receptions, by the wireless device, (e.g., DLBWP set) in a downlink (DL) bandwidth for the serving cell. The wireless device (e.g., a UE) may be configured, by higher layers with a parameter BWP-Uplink, a second set of BWPs (e.g., at most four BWPs) for transmissions, by the wireless device, (e.g., ULBWP set) in an uplink(UL) bandwidth for the serving cell.

The base station may not send/transmit via a DL BWP (e.g., a higher layer parameter initialDownlinkBWP). An initial active DL BWP may be defined, for example, based on a location, an amount of contiguous PRBs, a subcarrier spacing (SCS) and/or a cyclic prefix for PDCCH reception in a CORESET for a common search space (CSS) set (e.g., Type0-PDCCH common search space set). The contiguous PRBs may start from a first PRB with a lowest indexamong PRBs ofthe CORESET forthe CSS set (e.g., Type0-PDCCH CSS set).

The base stationmay send/transmit BWP parameter (e.g., higher layerparameterinitialDownlinkBWP). An initial active DL BWP may be indicated via a DL BWP parameter (e.g., the higher layer parameter initialDownlinkBWP). A base station may send/transmit an initial active UL BWP by a higher layer parameter (e.g., initialUplinkBWP), for example, based on operation via a cell (e.g., primary cell, secondary cell). The base station may send/transmit second initial active uplinkBWP on the supplementary uplink carrier by a second higher layer parameter (e.g., initialUplinkBWP in supplementaryUplink), for example, based on a supplementary uplink carrier (SUL).

A wireless device may have a dedicated BWP configuration. The wireless device may be indicated by a higher layer parameter (e.g., firstActiveDownlinkBWP-Id). The higher layer parameter may indicate a first active DL BWP for receptions. The wireless device may have a dedicated BWP configuration. The wireless device may be indicated by a higher layer parameter (e.g., firstActiveUplinkBWP-Id). The higher lay erparameter may indicate a first active UL BWP for transmissions on a carrier (e.g., SUL or NUL) of a serving cell (e.g., primary cell or secondary cell).

A base station may configure a DL BWP in a first set of BWPs and/or an ULBWP in a second set of BWPs. A base station may configure a wireless device for a serving cell with : a subcarrier spacing indicated via a spacing parameter (e.g., higher layer parameter subcarrierSpacing), a cyclic prefix indicated via a cyclic prefix parameter (e.g., a higher layer parameter cyclicPrefix), an index in the first set of BWPs and/or in the second set of BWPs by a BWP parameter (e.g., higher layer parameter bwp-Id), a third set of BWP-common and/or a fourth set of BWP-dedicated parameters via a BWP parameter (e.g., a higher layer parameter bwp-Common), and/or BWP dedicated parameter (e.g., ahigher layerparameter bwp-Dedicated). The base stationmay configure the wireless device for the serving cell with a common RB and/or a number/quantity of contiguous RBs indicated via a location parameter (e.g., a higher layer parameter locationAndBandwidth). The location parameter (e.g., higher layer parameter locationAndBandwidth) may indicate an offset and/or a length for example, based on a resource indicator value (RIV) setting, and/or a value indicated by an offset parameter (e.g., a higher layer parameter offsetToCarrierfor the higher layer parameter subcarrierSpacing).

A DL BWP, from a first set of BWPs, with a DL BWP index indicated via a BWP ID parameter (e.g., a higher layer parameter bwp-Id) may be linked with an ULBWP. The UL BWP may be from a second set of BWPs, with an UL BWP index indicated by a BWP ID parameter (e.g., a higher layer parameter bwp-Id) for example, based on the DL BWP index of the DL BWP being the same as the ULBWP indexofthe UL BWP. A DL BWP index of a DL BWP may be same as an UL BWP index of an UL BWP. A wireless device in unpaired spectrum operation may notexpectto receive a configuration (e.g., RRC configuration), for example, based on a first center frequency for the DLBWP being different from a second center frequency for the UL BWP. The DL BWP index of the DL BWP may be the same as the ULBWP index of the UL BWP.

A DL BWP may be in a first set of BWPs of a serving cell (e.g., primary cell). A base station may configure a wireless device with one or more CORESETs for types of common search space (CSS) sets and/or for UE-specifu search space (USS). The wireless device may not be (or may not expect to be) configured without a common search space set on a primary cell (or on the PSCell), for example, based on an active DLBWP.

A base station may send/transmit a control resource set parameter (e.g., a higher layer parameter controlResourceSetZero), a search space parameter (e.g., a higher layer parameter searchSpaceZero in a higher layer parameter PDCCH-ConfigSIB1), and/or a control configuration parameter (e.g., a higher layer parameter PDCCH-ConfigCommon). The wireless device may determine a CORESET for a search space set from the control resource set parameter (e.g., the higher layer parameter controlResourcesetZero), and/or may determine corresponding PDCCHmonitoringoccasions. AnactiveDLBWP of a serving cellmay not bean initialDLBWP of the serving cell. The active DL BWP may not be the initial DL BWP ofthe serving cell. The wireless device may determine the PDCCH monitoring occasions for the search space set, for example, based on a bandwidth of the CORESET being within the active DLBWP, the active DLBWP having the same SCS configuration, and/or a same cyclic prefix as the initial DL BWP.

An ULBWP may be in a second set of BWPs ofaservingcell(e.g.,primary cell and/or PUCCH SCell). Abase stationmay configure a wireless device with one or more resource sets (e.g., time -frequency resources/occasions) for control transmissions (e.g., PUCCH transmissions.) A wireless device may receive PDCCH and/or PDSCH in a DLBWP, for example, basedon a configured subcarrier spacing and/or CP length for the DLBWP. A wireless device may send/transmit PUCCH messages and/or PUSCH messages in an UL BWP, for example, based on a configured subcarrier spacing and/or CP length for the ULBWP.

A BWP indicator field may be configured using a DCI format (e.g., DCI format 1_1). A value of the BWP indicator field may indicate an active DL BWP, from a first set of BWPs, for one or more DL receptions. The BWP indicator field may indicate a DL BWP different from the active DL BWP. The BWP indicator field may indicate the DL BWP that may be different from the active DL BWP. The wireless device may set the DLBWP as a current active DLBWP. The setting the DLBWP as a current active DLBWP may comprise activating the DL BWP and/or deactivating the active DLBWP.

A BWP indicator field may be configured using a DCI format (e.g., DCI format 0_1). A value of the BWP indicator field may indicate an active UL BWP, from a second set of BWPs, for one or more UL transmissions. The BWP indicator field may indicate an UL BWP different from the active ULBWP. The BWP indicator field may indicate the UL BWP as different from the active ULBWP. The wireless device may set the ULBWP as a current active UL BWP. Setting the UL BWP as a current active UL BWP may comprise activating the UL BWP and/or deactivating the active ULBWP.

A DCI format (e.g., DCI format 1_1) may indicate an active DLBWP change and may comprise a time domain resource assignment field. The time domain resource assignment field may comprise a slot offset value for a PDSCH reception. The slot offset value may be smallerthan a delay fora wireless device to make the activeDL BWP change. The wireless device may not expectto detect the DCI format indicating the active DL BWP change.

A DCI format (e.g., DCI format 0_1) may indicate an active ULBWP change and/or may comprise a time domain resource assignment field. The time domain resource assignment field may comprise a slot offset value for an uplink message (e.g., PUSCH transmission). The slot offset value may be smaller than a delay required by a wireless device for the active UL BWP change. The wireless device may not (or may not expect to) detect the DCI format indicating the active ULBWP change.

A wireless device may receive a PDCCH transmission in a slot of a scheduling cell. The wireless device may detect a DCI format (e.g., DCI format 1_1) in the PDCCH transmission of the scheduling cell. The DCI format may indicate an activeDLBWP change for a serving cell. The DCI format may comprise a time domain resource assignment field. The time domain resource assignment field may comprise a slot offset value for a downlink message (e.g., PDSCH transmission). The slot offset value may indicate a second slot. Detecting theDCI format may indicate the active DL BWP change. The wireless device may notreceive and/or send/transmit via the serving cell, for example, based on a time duration from the end of a third symbol of the slot until (or at least until) the beginning of the seconds lot.

A wireless device may receive a PDCCH in a slot of a scheduling cell. The wireless device may detect a DCI format (e.g., DCI format 0_1) in the PDCCH transmission ofthe scheduling cell. The DCI format may indicate an active UL BWP change for a serving cell. The DCI format may comprise a time domain resource assignment field. The time domain resource assignment field may comprise a slot offset value for a PUSCH transmission. The slot offset value may indicate a second slot. Detecting the DCI format may indicate the active UL BWP change. The wireless device may not be required to receive and/or send/transmit in the serving cell during a time duration fromthe end of a third symbol of the slot until the beginningofthe second slot.

A wireless device may not detect (or may not expect to detect) a DCI format 0_1 indicating active UL BWP change/switch, and/or a DCI format 1_1 indicating active DL BWP change/switch. A corresponding PDCCH message for the detected DCI format 0_1 and/or the detected DCI format 1_1 may be received within afirst three symbols of a slot (or any other quantity of symbols of a slot, or other duration). A wireless device may notdetect (or may not expect to detect) a DCI format 0_1 indicating active UL BWP change/switch, and/or a DCI format 1_1 indicating active DL BWP change/switch, for example, based on a corresponding PDCCH message being received after a first three symbols of a slot (or any other quantity of symbols of a slot, or other duration).

An active DL BWP change may comprise switching fromthe active DL BWP of a serving cell to a DL BWP of the serving cell. The switching fromthe active DLBWP to the DL BWP may comprise setting the DLBWP as a current active DL BWP and/or deactivating the active DL BWP. An active UL BWP change may comprise switching from the active UL BWP of a serving cell to a UL BWP of the serving cell. The switching from the active UL BWP to the UL BWP may comprise setting the UL BWP as a current active UL BWP and/or deactivating the active ULBWP.

A base station may send/transmit a default DL BWP parameter (e.g., a higher layer parameter defaultDownlinkBWP-Id), for example, based on a serving cell (e.g., PCell, SCell). The default DL BWP parameter (e.g., higher layer parameter defaultDownlinkBWP-Id) may indicate a default DL BWP among the first set of (configured) BWPs ofthe serving cell. A base station may not send/transmit a default DL BWP parameter (e.g., a higher layer parameter defaultDownlinkBWP-Id). Thewireless device may set the initial active DL BWP as a default DL BWP. The default DLBWP may be the initial active DL BWP.

A base station may send/transmit a BWP inactivity timer parameter (e.g., a higher layer parameter BWP-InactivityTimer). The BWP inactivity timer parameter (e.g., higher layer parameter BWP-InactivityTimer) may indicate a BWP inactivity timer with a timer value for a serving cell (e.g., primary cell, secondary cell). The BWP inactivity timer may be running. The wireless device may decrement the BWP inactivity timer at the end of a subframe forfrequency range 1 (e.g.,FR1, sub-6 GHz) and/or at the end ofa half subframe forfrequency range 2 (e.g.,FR2, millimeter-waves)., for example, based on not restarting the BWP in activity timer during an interval of the subframe forthe frequency range 1 and/or an interval of the half subframe forthe frequency range 2.

A wireless device may perform an active DL BWP change for a serving cell, for example, based on an expiry of a BWP inactivity timer associated with the serving cell. The wireless device may notbe required to receive and/or send/transmit in the serving cell, for example, based on a time duration from the beginning of a subframe for frequency range 1 and/orof half of a subframe forfrequency range2. The time duration may start/begin after the expiry ofthe BWP inactivity timer. The time duration may lastuntil (or at leastuntil) the beginning of a slot where the wireless device can receive and/or send/transmit.

A base station may send/transmit a first active DL BWP parameter (e.g., a higher layer parameter firstActiveDownlinkBWP-Id) of a serving cell (e.g., secondary cell). The first active DL BWP parameter (e.g., higher layer parameter firstActiveDownlinkBWP-Id) may indicate a DLBWP on the serving cell (e.g., secondary cell). The wireless device may use the DLBWP as a first active DLBWP on the servingcell. A base station may send/transmit a first active UL BWP parameter (e.g., a higher layer parameter firstActiveUplinkBWP-Id) on a carrier (e.g., SUL, NUL) of a serving cell(e.g., secondary cell). The first active ULBWP parameter (e.g., higher layer parameter firstActiveUphnkBWP-Id) may indicate an ULBWP. The wireless device may use the ULBWP as a first active UL BWP on the carrier of the servingcell.

A wireless device using paired spectrum operation may not expect to send/transmit a PUCCH message with HARQ-ACKinformation via a PUCCH resource indicated by a DCI format (e.g., DCI format 1_0 and/or a DCI format 1_1). The wireless device may change its active ULBWP on a primary cell between a time of a detection of the DCI format (e.g., DCI format 1_0 and/or the DCI format 1_1) and/or a time of a corresponding uplink message (e.g., PUCCH transmission) with the HARQ-ACK information. A wireless device may not monitor PDCCH for example, based on the wireless device performing RRM measurements over a bandwidth that is not within the active DLBWP for the wireless device.

A DL BWP index (e.g., ID) may be an identifier for a DLBWP. One ormore parameters in an RRC configuration may use the DL BWP-ID to associate the one or more parameters with the DL BWP. The DL BWP ID = 0 (or any other number/quantity) may be associated with the initial DL BWP. An UL BWP index (ID) may be an identifier for an ULBWP. One ormore parameters in an RRC configuration may use the ULBWP-ID to associate the one or more parameters with the UL BWP. The UL BWP ID = 0 (or any other number/quantity) may be associated with the initial UL BWP.

A first active DL BWP parameter (e.g., higher layer parameter firstActiveDownlinkBWP-Id) may be configured for an SpCell. A first active DL BWP parameter (e.g., a higher layer parameter firstActiveDownlinkBWP-Id) may indicate an ID of a DL BWP to be activated upon performing the reconfiguration. A first active DL BWP parameter (e.g., a higher layer parameter firstActiveDownlinkBWP-Id) may be configured for an SCell. A first active DL BWP parameter (e.g., a higher layer parameter firstActiveDownlinkBWP-Id) may indicate an ID of a DL BWP to be used upon MAC-activation of the SCell. A first active UL BWP parameter (e.g., a higher layer parameter firstActiveUplinkBWP-Id) may be configured for an SpCell. A first active UL BWP parameter (e.g, higher layer parameter firstActiveUplinkBWP-Id) may indicate an ID of an UL BWP to be activated upon performing the reconfiguration. A first active UL BWP parameter (e.g., a higher layer parameter firstActiveUplinkBWP-Id) may be configured for an SCell. A first active ULBWP parameter (e.g., a higher layer parameter firstActiveUplinkBWP-Id) may indicate an ID of an UL BWP to be used upon MAC-activation of the SCell. A wireless device, to execute a reconfiguration with sync, may determine an uplink BWP indicated in a first active UL BWP parameter (e.g., a higher layer parameter firstActiveUplinkBWP-Id) to be an active uplink BWP. A wireless device, to execute a reconfiguration with sync, may determine a downlink BWP indicated in a first active DL BWP parameter (e.g., a higher layer parameter firstActiveDownlinkBWP-Id) to be an active downlink BWP.

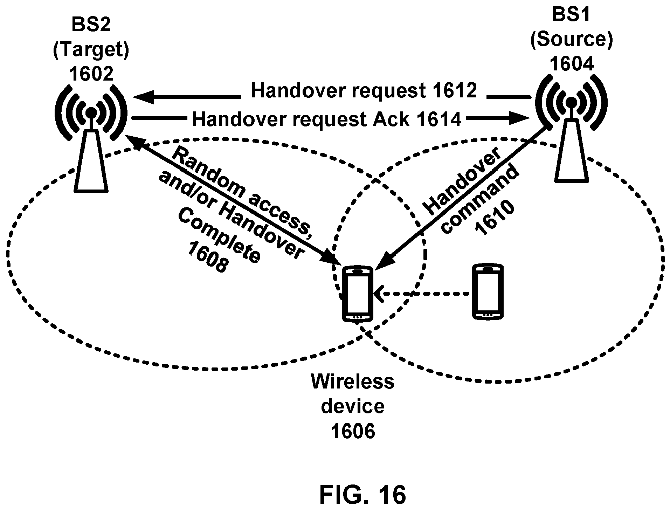

FIG. 16 shows an example of a handover procedure. A wireless device 1606 may move from a single cell coverage of a source base station 1604 to cell coverage of both the source base station 1604 and a target base station 1602. The source base station 1604 may send a handover request 1612 to the target base station 1602. The target base station 1602 may respond to the handover request with a handover request acknowledgement 1614. The source base station 1602 may send a handover command 1610 to the wireless device 1606. The wireless device 1606 may perform a random access procedure 1608 with the source base station 1604, for example, to complete the handover from the source base station 1604 to the target base station 1602.

A network may control wireless device mobility, for example, based on a RRC_CONNECTED state. The network may determine the timing of the wireless device connectingto a determined cell(s) (e.g., E-UTRA cell(s), and/or NRcell(s), and/or inter-RATcell(s)). Cell level mobility may require explicit RRC signaling to be triggered (e.g., handover). The PCellmay be changed via an RRC Connection Reconfiguration message, for example, based on network controlled mobility of cell level in RRC_CONNECTED. The SCell(s) may be changed via the RRC Connection Reconfiguration message. Signaling procedure may comprise at least one of the following: a handover request 1612, a handoverrequest acknowledgement 1614, a handover command 1610, RA 1608, and/or a handover complete message 1608, for example, based on inter-base station handover. A source base station 1604 (e.g., BS1) may initiate handover and/or send, to a target base station 1604 (e.g., BS2), a handoverrequest 1612 over a network interface (e.g., Xn and/or X2). The target base station 1602 may perform an admission control and/or send/transmit an RRC configuration, for example, based on the handover acknowledgement 1614. The source base station 1604 may send/transmit the RRC configuration to the wireless device 1606 via the handover command 1610. The handover command message 1610 may comprise cell ID and/or information to access the target cell. The wireless device 1606 may access the target cell and/or may not need to read the system information of the target cell. The information for contention-based and/or contention-free RA can be included via the handover command message 1610. The access information to the target cell may comprise beam specific information. The wireless device 1606 may move the RRC connection to the target base station 1602 via initiating a RA procedure 1608. The wireless device 1606 may send/transmit/reply to the handover complete message 1610 to the target base station 1602. The wireless device 1606 may also send user data, for example, based on a grant being available.

A radio access network handover may perform the preparation and/or execution phase of the handover without involvement of the core network. Preparation messages may be directly exchanged between base stations. The target base station may trigger the release of the resources at the source base station during the handover completion phase.

A network may trigger the handover, for example, based on radio conditions, load, QoS, wireless device category/capability, and/or the like. The network may configure the wireless device to perform measurement reporting Configuration of measurement reporting may comprise configuration of measurement gaps. The network may initiate handover blindly, for example, based on without having received measurement reports from the wireless device.

A source base station may prepare one or more target cells, for example, before sending the handover message to the wireless device. The source base station may determine/select the target PCell. The source base stationmay also send/transmit to the target base station a list of best cells on frequencies for which measurement information is available, for example, in order of decreasing RSRP. The source base station may also include available measurement information for the cells indicated in the list. The target base station may determine which SCells are configured for use after hand over. The target base station may determine which may include cells other than the ones indicated by the source base station.

A target base station may generate a message used to configure the wireless device for the handover. The message may comprise the access stratum configuration to be used in the target cell(s). The source base station may transparently (e.g., does not alter values/content) forward the handover message/information received from the target base station to the wireless device. The source base stationmay initiate data forwarding forthe dedicated radio bearers and/or a subset ofthe dedicated radio bearers. The wireless device may attempt to access the target PCell at the available RACH occasion, for example, based on receiving the handover message and/or a RA resource selection. The network may allocate a dedicated preamble for the RA in the target Pcell. The network (e.g., NR and/or E-UTRA) may ensure the preamble is available from the first RACH occasion the wireless device may use. The wireless device may send a message used to confirm the handover to the target base station, for example, basedon successful completion ofthe handover.

The target base station may not support the release of RRC protocol which the source base station may use to configure the wireless device. The target base station may beunable to determine the wireless device configuration indicated by the source base station. The target base station may use the full configuration option to reconfigure the wireless device for handover and/orre-establishment. Full configuration option may include an initialization ofthe radio configuration., The procedure may be independent of the configuration used in the source cell(s). The security algorithms may be continued for the RRC re-establishment.

The handover triggered by RRC may cause the wireless device to reset the wireless device (e.g., a MAC entity of the wireless device) and/or re-establish RLC. RRC managed handovers with and/or without PDCP entity re-establishment may be supported. PDCP SDUs may be re-sent/transmitted in the targetcell(s), for example, based on successful completion of handover. This resending may apply for dedicated radio bearers using RLC-AM mode and/or for handovers not involving full configuration option. PDCP may be re-established together with a security key change and/or initiate a data recovery procedure without a key change, for example, based on DRBs using RLC AM mode. PDCP may either be re-established together with a security key change and/or remain as it is without a key change, for example, based onDRBs using RLC UM mode and/or for SRBs. Data forwarding, in-sequence delivery and/or duplication avoidance at handover may be guaranteed, for example, based on the target base station using the same DRB configuration as the source base station. The sequence number) and/or the hyper frame number (HFN) may be reset for some radio bearers, for example, based on the successful completion of handovernot involving a full configuration option. Dedicated radio bearers using RLC-AM mode may continue to use both sequence number and/or HFN. The PDCP entities may be newly established (sequence number and/or HFN may not continue) for dedicated radio bearers irrespective of the RLC mode, for example, based on reconfigurations involving the full configuration option. The wireless device behavior to be performed upon handover may be the same regardless of the handover procedures used within the network (e.g., whether the handover includes X2/Xn and/or N2/S1 signaling procedures).

The network may support timer based handover failure. RRC connection re-estabhshment procedure may be used for recovering from handover failure. The source base station may maintain a context to enable the wireless device to return in case of handover failure. The wireless device may attempt to resume the RRC connection either in the source PCell and/or in another cell via the RRC re-establishment procedure, for example, based on having detected handover failure. This connection resumption may succeed based on the accessed cell being prepared. The access cell may be a cell of the source base station and/or of another base station towards which handover preparation has been performed. The cell in which the re-establishment procedure succeeds may become the Pcell. SCells may be released.

Normal measurement and/ormobility procedures may be usedto support handover to cells broadcasting a cbsed subscriber group (CSG) identity. A network (e.g., E-UTRAN/NR) may configure the wireless device to report that it is entering and/or leaving the proximity of cell(s) included in its CSG whitelist. A network (e.g., E-UTRAN/NR) may request the wireless device to send/transmit additional information broadcast by the handover candidate cell (e.g. cell globalidentity, CSGidentity, CSG member ship status). A network (e.g., E-UTRAN/NR) may use the proximity report to configure measurements as well as to determine whether to request additional information broadcast by the handover candidate cell. The additional information may be used to verify whether the wireless device is authorized to access the target PCell and/or may be used to identify handover candidate cell. This verifying may involve resolving PCI confusion. The physical layer identity that is included in the measurement report may notuniquely identify the cell.

An RRC connection reconfiguration procedure may be used to modify an RRC connection (e.g. to establish, modify and/orrelease RBs, to perform handover, to setup, modify, and/or release measurements, to add, modify, and/or release SCells). NAS dedicated information may be transferred from a network (e.g., E-UTRAN/NR) to the wireless device. The received RRC Connection Reconfigurationmessage may include a release list parameter (e.g., sCellToReleaseList). The wireless device may perform SCell release. The received RRC Connection Reconfiguration message may include an add and/or modify parameter (e.g., the sCellToAddModList). The wireless device may perform SCell additions and/or modification.

The wireless device context within the source base station may comprise information regarding roaming/handover/access restrictions which may be indicated either at connection establishment and/or at the last TA (registration/tracking area) update process. The source base station may configure the wireless device measurement procedures, for example, based on at least one RRC connection reconfiguration message. The wireless device may be triggered to send at least one measurement report, for example, based on the rules set by system information, RRC configuration, and/or the like. The source base stationmay make a handover decision, for example, based on the measurement reports, RRM information, traffic and/or load, a combination of the above, and/orthe like. The source base station may initiate the handover via a handover request message to one or more potential targetbase stations. The sourcebase stationmay send thehandoverrequest message. The message may cause a handover preparation timer to start/restart. The source base station may stop the handover preparation timer, for example, based onreception ofthe handoverrequest acknowledgement message.

The source base station (e.g. eNB or gNB) may send/transmit a handoverrequest message to one or more potential target base stations to initiate the handover, for example, based on a network interface (e.g., X2 or Xn) handover process. The handover request message may comprise a transparent RRC container comprising information to prepare the handover at the target side. A handover request message may comprise: a target cell ID, a C-RNTI of the wireless device in the source base station, RRM-configurationincluding wireless device inactive time, basic AS-configuration including antenna information and/or DL carrier frequency, the current QoS flow to DRB mapping rules applied to the wireless device, the SIB1 from source base station, the wireless device capabilities for different RATs, and/or PDU session related information. A handover request message may comprise the wireless device reported measurement information and/or beam-related information. The source base station may not reconfigure the wireless device, for example based on is suing a handover request.

A core network interface (e.g., S1/N2, and/or NGinterface that may comprise an NG user-plane part and/or an NG control-plane part) handover process may be performed without AMF/MME relocation. The source base station may send/transmit a handover required message to an AMF/MME for one or more potential target base stations. The AMF/MME may send/transmit a handover request mes sage to the potential target base stations. The handover required message and/orthe handoverrequest message may pass information to prepare the handover at the target side. A core network interface (e.g., S1/N2, and/or NG interface) may use a handover process for relocating an AMF/MME. A source base station may send/transmit a handover required message to a source AMF/MME for one or more potential target base stations. The source AMF/MME may send/transmit a forward relocation request message to one or more potential target AMFs/MMEs serving the potential target base stations. The potential target AMFs/MMEs may send/transmit a handover request message to the potential target base stations. The handover required mes sage, the forward relocation request mes sage, and/or the handover request message may pass information to prepare the handover at the target side. The serving base station may send/transmit the handover request message to one or more potential target base stations, for example, basedon the handover preparation phase. The potential target base station may use the information to configure the wireless device after completing the handover.

A target base stationmay employ admission control, for example, to prepare for the wireless device to connect to the target base station. Handover admission control may be performed by the target base station, for example, based on QoS required for wireless device bearers, wireless device capabilities, wireless device configuration, target base station load, a combination of the above, and/or the like. The target base station may configure the required resources, for example, based on the received information from the serving (source) base station. The target base station may reserve a C-RNTI and/or a RACH preamble. The access stratum configuration to be used in the target cell may be specified independently (for example, as an establishment) and/or as a delta compared to the access stratum-configuration used in the source cell (e.g., as a reconfiguration). Slice-aware admission control may be performed, for example, based on the slice information being sent to the target base station. The target base station may reject PDU sessions, for example, based on the PDU sessions being associated with non-supported slices.

A target base station may prepare handover with L1/L2 and/or may send the handover request acknowledge message to the source base station. The handover request acknowledge message may include a transparent containerto be sentto the wireless device as a control message (e.g., RRCmessage) to perform the handover, for example, basedon an X2/Xn handover. The handover request acknowledge message fromthe target base station to the MME/AMF and/or the handover command message from the MME/AMF to the source base station may include a transparent container to be sent to the wireless device as a control message (e.g., RRC message) to perform the handover, for example, based on an S1/N2 handover without MME/AMF relocation. The handover request acknowledge message from the target base station to the target MME/AMF, the forward relocation response message from the target MME/AMF to the source MME/AMF, and/or the handover command message from the source MME/AMF to the source base station may include a transparent container to be sentto the wireless device as a control message (e.g., RRC message) to perform the handover, for example, based on an S1/N2 handover relocating an MME/AMF. The container may include a new C-RNTI, target base station security algorithm identifiers for the selected security algorithms, a dedicated RACH preamble, access parameters, SIBs, and/or other configuration parameters. The target base station may generate the control message (e.g., RRC message) to perform the handover, for example, based on an RRC connection reconfiguration message including the mobility control information. The control message (e.g., RRC message) may be sent by the source base station towards the wireless device.

The source base station may trigger the wireless device handover by sending an RRC reconfiguration message to the wireless device. The RRC reconfiguration message may comprise information required to access the target cell (e.g., target cell ID, new C-RNTI, target base station security algorithm identifiers for the selected security algorithms). The RRC reconfiguration message may also comprise: a set of dedicated RACH resources, the association between RACH resources and/or SSB(s), the association between RACH resources and/or wireless device-specific CSI-RS configuration(s), common RACH resources, and/or system information of the target cell.

The source base station may send SN status transfer message to the target base station. The source base station may perform the integrity protection and/orcipheringofthe message. The wireless device may receive the RRC connection reconfiguration message fromthe source base station and/or may start performing the handover. The wireless device may not delay the handover execution for delivering the HARQ/ARQ responses to the source base station.

The wireless device may perform synchronization to the target base station and/or access the target cell via RACH on the primary cell, for example, based on receiving the RRC connection reconfiguration message that may include the mobility control information. The wireless device RA procedure may employ a contention-free procedure, for example, based on a dedicated RACH preamble indicated in the RRC connection reconfiguration message. The wireless device RA procedure may employ a contention-based procedure, for example, based on no dedicated preamble being indicated. The wireless device may derive target base station specific keys and/or may configure the selected security algorithms to be used in the target cell. The target base station may respond with uplink allocation and/or timing advance.

The wireless device may successfully access the target cell. The wireless devicemay complete the RRC handover procedure by sendingan RRC connection reconfiguration complete message (C-RNTI) to the target base station to confirm the handover and/or to indicate that the handover is completed for the wireless device. The wireless device may send/transmit a MAC uplink Buffer Status Report (BSR) Control Element (CE) along with the uplink RRC Connection Reconfiguration Complete message. The wireless device may send/transmit a MAC uplink BSR CE to the target base station, for example, when possible. The target base stationmay verify the C-RNTI sent in the RRC Connection Reconfiguration Complete message. The target base station may begin sending data to the wireless device and/or receiving datafromthe wireless device.

The target base station may send a path switchrequest message to AMF/MMEto trigger the core network (e.g., 5GC) to switch the DL data path to the target base station and/orto establish an interface (e.g., NG-C interface) to the target base station. The core network may switch the DLdata path to the target base station. The UPF may send one or more end marker packets on the old path to the source base station per PDU session/tunnel and/or may release any U-plane/TNL resources to the source base station. The AMF/MMEmay confirm the path switch request message with a path switch request acknowledgement message. The target base station may send the wireless device context release to inform the source base station indicating the success of the handover. The source base station may then release radio and/or C-plane related resources associated to the wireless device context. Any ongoing data forwarding may continue.

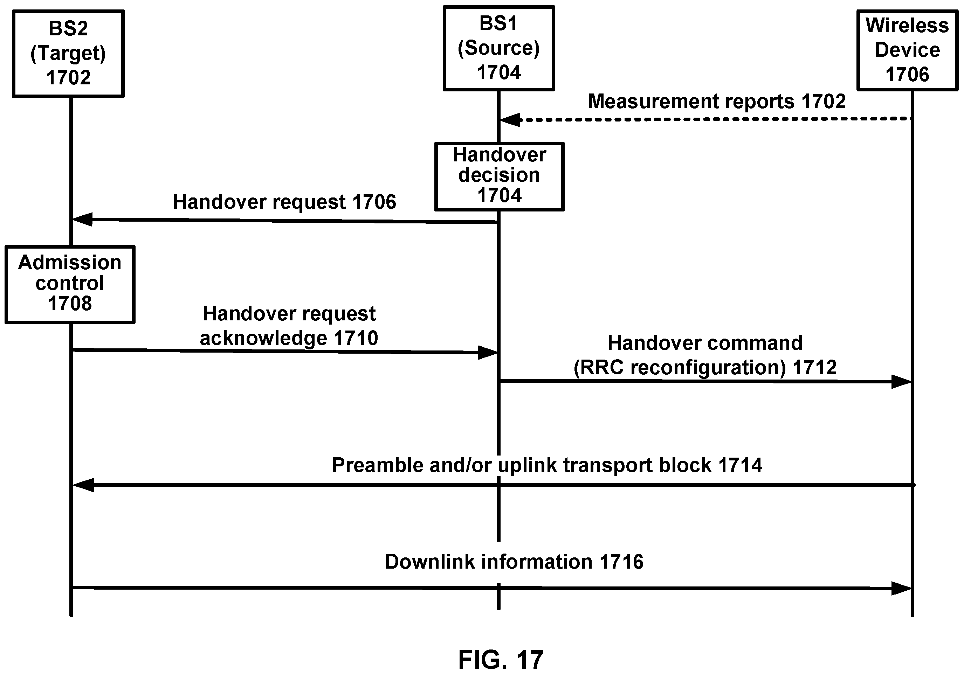

FIG. 17 shows example signaling between a wireless device 1706 and two base stations 1702 and 1704 during a handover. A source base station 1704 may determine 1704 to perform a handover for the wireless device 1706, for example, based on the received measurement control and/or reports 1702. The source base station 1704 may send/transmit a handover request message 1706 comprising the RRC configurations of the source cell for the wireless device, and/or the wireless device category/capability information to the target base station 1702. A target base station 1702 may perform admis sion control 1708. The target base station 1702 may send/transmit a handover request acknowledgment 1710 to the source base station 1704. The handover request acknowledgment may comprise the handover command that indicates the RRC reconfiguration parameters for the wireless device 1706 to connect to the target base station 1702. The source base station 1704 may forward the handover command 1712 to the wireless device 1706. The wireless device 1706 may initiate a RA procedure. The wireless device 1706 may send/transmit a preamble and/or one or more uplink transport blocks 1714 to the target base station 1702. The target base station 1702 may send/transmit a response message (e.g., downlink information) 1716 to the wireless device 1706. The response message may comprise a timing advance value and/or one or more uplink grants. The response message may be scrambled by a new radio network identifier (e.g. C-RNTI) of the wireless device 1706 in the new cell ofthe target base station 1702. The handover command may indicate the new radio network identifier to the wireless device 1706.

The RRM configuration may include beam measurement information (for layer 3 mobility) associated to SSB(s) and/or CSI-RS(s) for the reported cell(s), for example, based on measurements that are available. The RRM configuration may comprise the list of best cells on each frequency for which measurement information is available, for example, based on CA being configured. The RRM measurement information may comprise the beam measurement for the listed cells thatbelongto the targetbase station.

The common RACH configuration for beams in the target cell may be associated to the SSB(s). The network may have dedicated RACH configurations associated to the SSB(s) and/or have dedicated RACH configurations associated to CSI-RS(s) within a cell. The target base stationmay include RACH configurations in the Handover Command to enable the wireless device to access the target cell: common RACH configuration, Common RACH configuration and Dedicated RACH configuration associated with SSB, Common RACH configuration and Dedicated RACH configuration associated with CSI-RS. The dedicated RACH configuration may allocate RACH resource(s) with a quality threshold. RACH resources may be prioritized by the wireless device 1706, for example, based on dedicated RACH resources being provided. The wireless device 1706 may not switch to contention-based RACH resources, for example, based on the quality threshold of those dedicated resources being met. The order to access the dedicated RACH resources may be up to wireless device implementation.

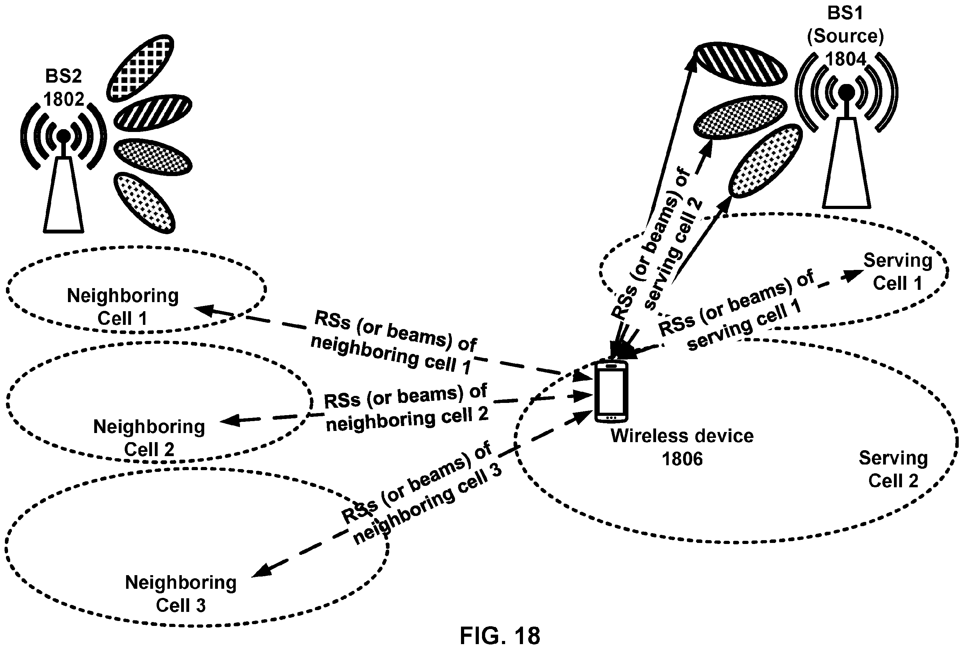

FIG. 18 shows an example of cell and/or beam measurements. The wireless device 1806 may measure a signal strength and/or a quality of at least one beam of a cell (e.g., serving cells of a source base station 1804 and/or neigh boring non-serving cell(s) of otherbase stations 1802). The wireless device 1806 may be configured with at least one reference signal associated with the at least one beam. The wireless device 1806 may receive a message comprising configuration parameters (e.g., time/frequency location, and/orreference powerto be used by abase station to send/transmit the at least one reference signal) ofthe at least one reference signal. The wireless device 1806 may measure the signal strength (e.g., RSRP) and/or the quality (RSRQ) ofthe at least one reference signal The measurement results (e.g., RSRP, RSRQ, and/or SNR values) may be averaged to derive the cell quality. The wireless device 1806 may be configured to measure one or more beams (e.g., one or more reference signals). The wireless device 1806 may perform filtering at different levels (e.g., at a physical layer to derive beam quality and/or at RRC level to derive cell quality from the at least on beam ofthe one or more beams). Cell quality from beammeasurements may be determined (or quantified) in the same way forthe serving cell(s) and/orforthe non-serving cell(s). Measurement reports may comprise the measurementresults of a determined amount of best beams (e.g., reference signals), for example, based on the wireless device being configured by the base station.

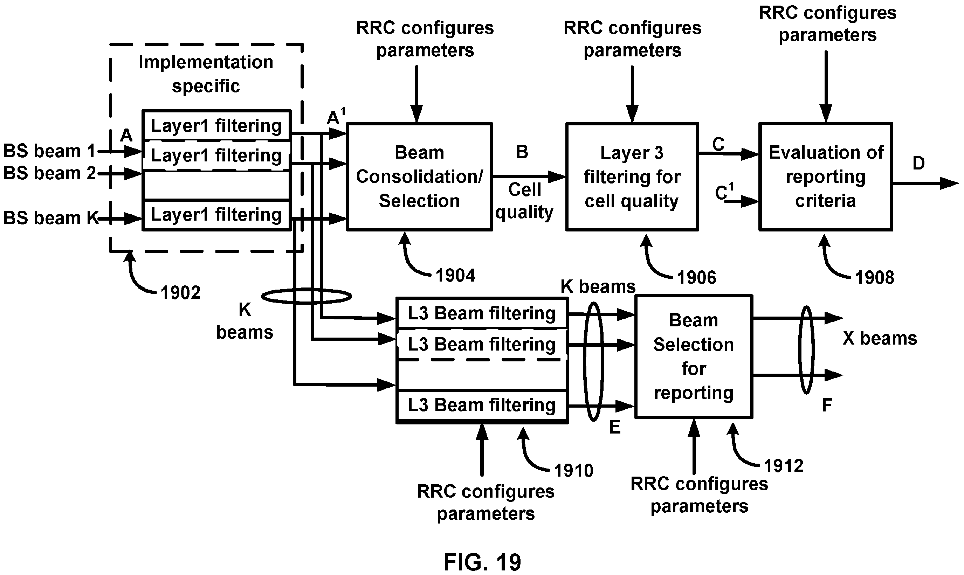

FIG. 19 shows an example beam-based measurement model. K beams may correspond to the measurements on SSB and/orCSI-RS resources configured forL3 mobility by base station and/or detected by the wireless device at L1. Point A measurements (e.g., beam specific samples) may be delivered to the physical layer. The inputs measures at point A may be delivered layer 1 filtering 1902. Filtering may be implementation dependent. Measurements (e.g., beam specific measurements) may be reported by layer 1 to layer3, for example, after layer 1 filtering at point A1. Beam specific measurements may be consolidated to derive cell quality. The behavior of the beam consolidation/selection 1904 may be standardized and/or the configuration of the module may be indicated by RRC signaling.

Reporting period at B may equal one measurement period at A1. A measurement (e.g. cell quality) derived from beam-specific measurements may be reported to layer 3, for example, after beam consolidation/selection at point B. Filtering may be performed on the measurements indicated at point B. The behavior ofthe Layer 3 filters 1906 may be standardized and/or the configuration of the layer 3 filters 1906 may be indicated by RRC signaling. Filtering reporting period at C may equal one measurement period at B.

A measurement afterprocessing in the layer 3 filter may be at point C. The reporting rate may be identical to (or substantially similar to) the reporting rate at point B. This measurement may be used as input for one or more evaluation of reporting criteria 1908. The one or more evaluation of reporting criteria 1908 may determine whether measurement reporting is indicated at point D. The evaluation may be based on more than one flow of measurements at reference point C (e.g. to compare between different measurements), as is shown by input C and/or C1. The wireless device may evaluate the reporting criteria, for example, based on a new measurement result being reported at point C and/or C1. The reporting criteria may be standardized and/or the configuration indicated by RRC signaling (e.g., wireless device measurements). Measurement report information (e.g., a message) may be sent on the radio interface at point D. Filtering performed on the measurements (e.g., beam specific measurements) may be indicated at point A1. The behavior of the beam filters 1910 may be standardized and/or the configuration of the beam filters 1910 may be indicated by RRC signaling. A filtering reporting period at E may equal one measurementperiod at A1. A measurement (e.g. beam-specific measurement) after processing in the beamfilter may be at point E. The reporting rate may be identical to (or substantially similar to) the reporting rate at point A1. This measurement may be used as input for selecting the X measurements to be reported. Beam Selection 1912 for beam reporting may determine/select the X measurements from the measurements indicated at point E. The behavior of the beam selection 1912 may be standardized and/or the configuration of this module may be indicated by RRC signaling. Beam measurement information may be included in measurement report (which may be sent) on the radio interface at point F.

Layer 1 filtering may introduce a certain level ofmeasurement averaging. Performing the measurements may be implementation specific. An output at B may fulfil the performance of the measurements. Layer 3 filtering for cell quality and/orrelated parameters used may not introduce delay in the sample availability between B and/or C. Measurement at point C and/or C1 may be the input used in the event evaluation. L3 Beam filtering and/or related parameters usedmay not introduce delay in the sample availability between E and/or F.

Measurement reports may comprise the measurement identity of the associated measurement configuration that triggered the reporting. Cell and/or beam measurement quantities to be included in measurement reports may be configured by the network. The number/quantity of non-serving cells to be reported may be limited through configuration by the network. Cells belongingto an exclude list (e.g., a blacklist) configured by the network may not be used in event evaluation and/or reporting. An include list (e.g., whitelist) may be configured by the network. The cells belonging to the include list (e.g., whitelist) may be used in event evaluation and/or reporting. Beam measurements to be included in measurement reports may be configured by the network (beam identifier only, measurement result and/or beam identifier, and/orno beamreporting).

Intra-frequency neighbor (cell) measurements and/or inter-frequency neighbor (cell) measurements may be defined. An SSB based intra-frequency measurement may be defined as given that the center frequency of the SSB of the serving cell, the center frequency ofthe SSBof the neighbor cell are the same, and/orthe subcarrier spacing of the two SSBs is also the same. SSB based inter-frequency measurement may be defined as an SSB based inter-frequency measurement given that the center frequency of the SSB of the serving cell and/or the center frequency ofthe SSB of the neighbor cell are different, and/or the subcarrier spacing of the two SSBs is different. One measurement object may correspond toone SSB and/or the wireless device may determine different SSBs as different cells. A CSI-RS based intra-frequency measurement may be defined as a CSI-RS based intra-frequency measurement given that the bandwidth ofthe CSI-RS resource on the neighbor cell configured for measurement is within the bandwidth of the CSI-RS resource on the serving cell configured for measurement, and/or the subcarrier spacing ofthe two CSI-RS resources is the same. A CSI-RS based inter-frequency measurement may be defined as a CSI-RS based inter-frequency measurement giventhatthe bandwidth ofthe CSI-RS resource on the neighbor cell configured for measurement is not with in the bandwidth ofthe CSI-RS resource on the serving cell configured for measurement, and/or the subcarrier spacing ofthe two CSI-RS resources is different.

Handover in high radio frequency range with beamforming may increase mobility interruption time due to beam sweep delay. Mobility interruption time may refer to a time (e.g., a shortest time) duration that the network may support during which a wireless device may not exchange user plane packets with any base station during transitions. It may be of interest to minimize the mobility interruption time (e.g., to 0ms). Reliability of communications may be reduced due to beamforming characteristics causing smaller coverage. The wireless device may experience very fast signal degradation for example, based on moving and/or rotating. Channel condition may vary significantly in high frequency. Pathloss fluctuation may be tens of dB different in signal strength in beams, between line of sight(LoS) and/ornon-LoS. Pathloss fluctuation may result in higher handover failure and/or large ping-pongrate.

Mobility performance may be a performance metric for access technologies (e.g., LTE, NR, other 3GPP access technologies, satellite, other non-3GPP access technologies, and/or any other access technologies). Handover solutions may achieve high handover performance with low mobility interruption time (e.g., 0ms), low latency (e.g., an average time between a transmis sion of a packet and/or a reception of an acknowledgement), and/or high reliability to enable seamless and/or near-seamless handover experience for the wireless device. Low mobility interruption time may be aided by using intra-cell beam mobility and/or addition/release of SCell(s) for CA operation. These techniques may reduce mobility interruption time. Further reducing mobility interruption time in many instances (e.g., for ultra-reliable low-latency communications (URLLC) type of service) may be desirable, which may require low end-to-end delay (e.g., 1ms). Access technologies may use technologies for reduced handover/SCG change mobility interruption time and/or improved handover reliability. The mobility enhancement may be applied to inter-/intra-frequency handover/SCGchange. The mobility enhancements may not be limited to high frequency range. Solutions to reduce handover/SCGchange mobility interruption time and/or to improve handover reliability may also be beneficial to high speed trains and/or aerial use case where channel situation becomes challengingin terms of handover performance. At least some systems thatmay reduce mobility interruption time during handover may comprise: handover with dual connectivity with source cell and/or target cell, make-before-break, RACH-less (also known as RACH-skip) handover. At least some wireless communications may be designed to improve handover reliability and/or robustness may comprise: conditional handover, and/or fast handover failure recovery.

A wireless device may receive an RRC reconfiguration message indicating a make -before-break handover. The wireless device connection to the source base stationmay be maintained, for example, afterreception of the RRC reconfiguration message and/or before the wireless device executes an initial uplink transmission to the target base station. The source base station may determine a timing of stopping sending/transmitting to the wireless device. The wireless device may be configured with make-before-break handover and/or RACH-less handover simultaneously.

A wireless device may perform a RACH procedure to obtain a timing advance (TA) value and/or an UL grant for PUSCH transmission (e.g., RRC reconfiguration complete message) to the target cell, for example, based on or during a handover. The wireless device may skip the RACH procedure during handover, for example, based on a RACH-less (e.g., RACH-skip) handover. A RACH-less handover may be usedto reduce and/or eliminate RACH related latencies during handover and/or reduce mobility interruption time. RACH-less handover may be used, for example, based on the source cell knowing the TA of the target cell (e.g., in synchronous deployments, scenarios having the target cell TA be zero and/or negligible, and/or scenarios having the target cell TA being the same as the source cell TA).

Solution(s) for reducing mobility interruption time may comprise dual-connectivity (DC)-basedhandover and/or non-DC-basedhandover (e.g., MBB handover). The masternode (MN) of the MCG (source base station), in the DC-based handover, may add the secondary node (SN) and/or SCG. The SCG may comprise a target cell associated with a target base station. The master node may change the role of the MCG and/or the SCG. The masternode may release the new SCG. The role-change may be conducted separately fromthe SN addition. RA procedure may be performed in the SN addition phase, resulting in a quickrole-change. A network may avoid an issue (e.g., too-early handover and/or too-late handover) because there are two legs which may be used to send/transmit the role-change message and/or the user data. The handover time point may be determined more accurately. The communication between network and/or the wireless device may be maintained without role-change for example, based on the MN leg not being valid. Controlmessages (e.g., RRC messages and/or DRB) may be sent/transmitted via SN leg. The use oftwo legs may indicate that the role-change (e.g., handover) may not depend solely on the signal of the source base station.

DC-based and/or non-DC-based (e.g., MBB) solutions may be based on simultaneous connectivity (or near/substantially simultaneous connectivity) ofthe wireless device to a source base station and/or a target base station. The wireless device may be able to simultaneously (or near/substantially simultaneously) send/transmit and/or receive to/from both base stations. The interruption time during which the wireless device cannot send/transmit and/or receive to/from any base station may bereduced (e.g., a reduction of interruption time and/or 0 ms interruption time may be achievable). The ping-pongrate and/orthe handoverfailure rate may be reduced, that may result in reduced mobility failures. Higher data throughput and/or better user experience may be achieved during the handover. The MBB handover may be adopted, for example based on the DC feature not being supported in a network. MBB may not be applicable for DC deployment scenario.

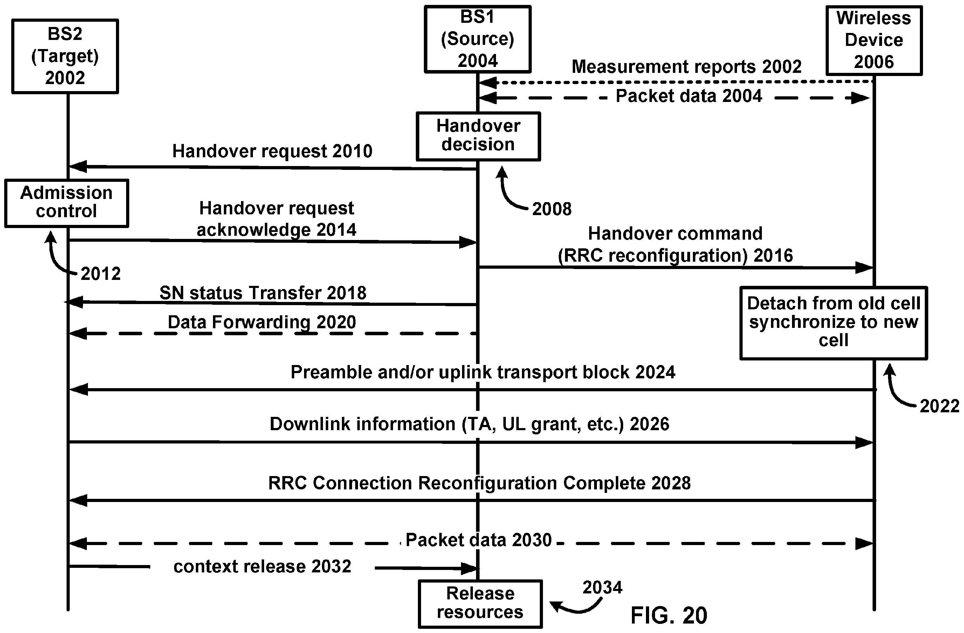

FIG 20 shows an example of high level signaling during a handover procedure. A wireless device 2006 may send/transmit measurement reports 2004 while connected to a source base station 2004. The source base station 2004 may determine to perform a handover of the wireless device 2006 to the target base station 2002. The wireless device 2006 may detach fromthe source base station2004, for example, before connected to the target base station2002 and as part ofthe handover. This detachment may be a source ofmobility interruption time in which the wireless device may not send/transmit and/or receive packet data from either base station.

A wireless device 2006 may send measurement reports to a source base station 2004. Packet data 2004 may be exchanged between the source base station 2004 and the wireless device 2006. The source base station 2004 may determine to perform a handover (e.g., make a handover decision 2008) for the wireless device 2006, for example, based on the measurement reports 2002. The source base station 2004 may send a handoverrequest 2010 to the target base station 2002. The targetbase station 2002 may perform admission control 2012. The target base station may send a handover request acknowledge 2014 to the source base station 2004. The source base station 2004 may send a handover command (e.g., RRCconfigurationmessage) 2016to the wireless device 2006. The wireless device 2006 may detach from a cell ofthe source base station 2004 and synchronize to the new cell of the target base station 2002. The source base station 2004 may send a SN status transfer message 2018 to the target base station 2002. The source base station 2004 may forward data 2020 for the wireless device 2006 to the target base station 2002. The wireless device 2006 may send preamble and/or uplink transport block(s) 2024 to the target base station 2002. The target base station may send downlink information (e.g., TA, UL grant, etc.) 2026 to the wireless device 2006. The wireless device 2006 may send a RRC connection complete message 2028 to the target base station 2002. The wireless device 2006 and the target base station 2002 may exchange packet data 2030. The target base station 2002 may send a context release message 2032 to the source base station 2004. The source base station 2004 may release resources 2034 related to the wireless device 2006.

High level signaling during an example handover is shown without simultaneous connectivity. The wireless device may not be able to send/transmit and/orreceive packet data during the handover to/from any ofthe base stations. The wireless device may not support packet data transmis sion and/or reception, for example, during the mobility interruption time. The mobility interruption time may comprise a time duration from the wireless device receiving a handover command from the source base station until a first uplink transmission to the target base station (e.g., a preamble and/or transport block). The mobility interruption time may refer to a time gap during which a wireless device cannot communicate packet data with the two base stations.

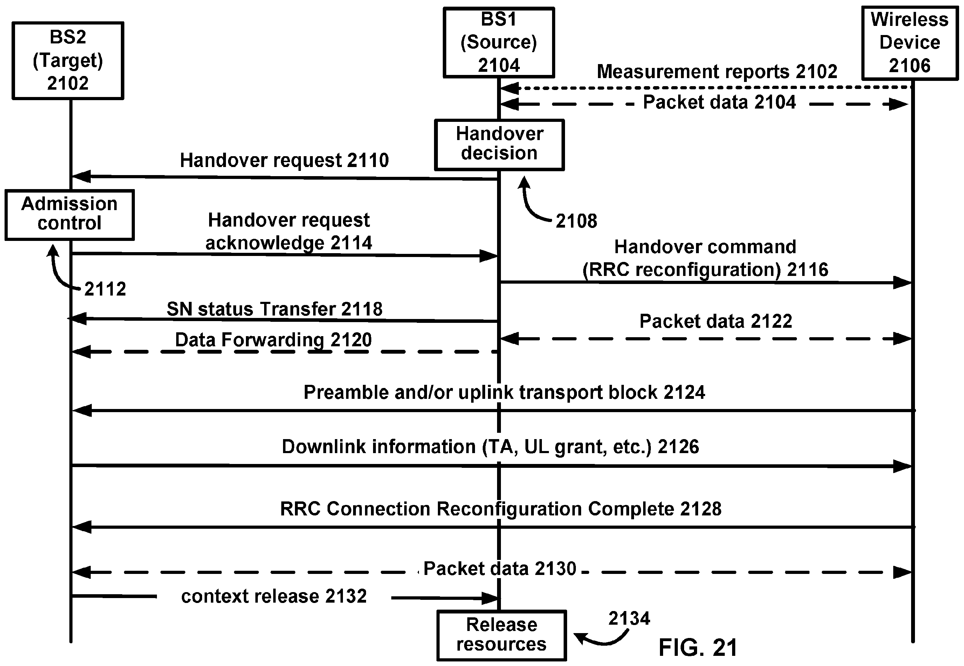

FIG. 21 shows an example of high level signaling during a handover with simultaneous connectivity. A wireless device 2106 may send/transmit measurement reports 2104 while connected to a source base station 2104. The source base station 2104 may determine to perform a handover of the wireless device 2106 to the target base station 2102. The wireless device 2106may connect to the targetbase station 2102while being connected to the source base station 1064, for example, as part of the handover. This simultaneous connectivity may reduce mobility interruption time in which the wireless device may not send/transmit and/or receive packet data from eitherbase station.

A wireless device 2106 may send measurement reports to a source base station 2104. Packet data 2104 may be exchanged between the source base station 2104 and the wireless device 2106. The source base station 2104 may determine to perform a handover (e.g., make a handover decision 2108) for the wireless device 2106, for example, based on the measurement reports 2102. The source base station 2104 may send a handoverrequest 2110 to the target base station 2102. The targetbase station 2102 may perform admission control 2112. The targetbase station may send a handover request acknowledge 2114 to the source base station 2104. The source base station 2104 may send a handover command (e.g., RRC configuration message) 2116to the wireless device 2106. The wireless device 2106 may continue to exchange packet data 2122 with the source base station 2104 while synchronizing to the new cell ofthe target base station 2102. The source base station 2104 may send a SN status transfer message 2118 to the target base station 2102. The sourcebase station 2104may forward data 2120for the wireless device 2106 to the targetbase station 2102. The wireless device 2106 may sendpreamble and/or uplink transport block(s) 2124 to the target base station 2102. The target base station may send downlink information (e.g., TA, UL grant, etc.) 2126 to the wireless device 2106. The wireless device 2106 may send a RRC connection complete message 2128 to the target base station 2102. The wireless device 2106 and the target base station 2102 may exchange packet data2130. The target base station 2102 may send a context release message 2132 to the source base station 2104. The source base station 2104 may release resources 2134 related to the wireless device 2106.

A handover may use simultaneous connectivity (e.g., make-before-break, and/or DC-based handover). The wireless device 2106 may be able to send/transmit and/or receive packet data from the source base station 2104 afterreceiving the handover command and/orbefore completely connecting to the target base station 2102 (e.g., before sending RRC connection reconfiguration complete message 2128 to the target base station 2102). A mobility interruption time during which the wireless device 2106 may not communicate packet data may be reduced.

Simultaneous connectivity may be supported for inter-frequency and/or intra-frequency handover. The DC-based handover and/or the MBBhandovermay have same L1 (PHY layer) requirements for intra-frequency handover. Simultaneous connectivity may be supported for inter-band inter-frequency mobility. Wireless devices may support simultaneous transmission and/or reception for synchronous and/or asynchronous scenarios (e.g., based on the source cell and/or the target cell being synchronous and/or not synchronous), for example, based on having dual transmission/reception(Tx/Rx) chains.

Simultaneous reception may be used forintra-bandinter-frequency synchronous mobility scenarios, for example, based on wireless devices supporting intra-band downlink carrier aggregation (CA) on frequencies that may be supported for CA serving cells. Simultaneous transmission may be used for intra-band inter-frequency synchronous mobility scenarios, for example, based on wireless devices supporting intra-band UL CA on frequencies that may be supported for CA serving cells. Simultaneous transmission may be dependent on some conditions, for example, based on a TAG of the source cell and/or a TAGof the target cell (e.g., a maximum transmission timing difference (MTTD) requirement), sub-carrier spacing ofthe source cell and/or the target cell, power control constraints (e.g., maximum transmit power limit), contiguous and/or non-contiguous transmission, etc.

Simultaneous reception may be used for intra-band intra-frequency synchronous mobility scenarios for some wireless devices. Simultaneous reception may be used based on some conditions. The source cell bandwidth and/or the target cell bandwidth may be the same. The received signal power difference from the source base station and/or the target base station may be between a certain range (for example, the linear range of the wireless device receiver). The SCS may be configuredto be the same for the wireless device on the two cells. The wireless device may be configured with the same waveform (e.g., CP-OFDM and/or DFT-s-OFDM) on the two cells. An SSB centerfrequency ofthe two cells may be the same.

Simultaneous transmission may be used for intra-band intra-frequency synchronous mobility scenarios for some wireless devices, for example, based on multiple RF chains and/or a single RF chain. Simultaneous transmission with a single RF chain may be used under some conditions. The source and/or target base stations may be in the same power control group and/or same TAG. The SCS configured for the wireless device on the two cells may be the same. The wireless device may be configured with the same waveform (e.g., CP-OFDM and/or DFT-s-OFDM) via the two cells. SSB centerfrequency ofthe two cells may be the same. Common PRB grid between the cells may be aligned to enable simultaneous transmission and/or reception.

Simultaneous reception may be used for intra-band intra-frequency asynchronous mobility for some wireless devices, for example, based on multiple RF chains and/or a single RF chain. Simultaneous transmission with a single RF chain may be used under some conditions. The received signalpower difference fromthe source base station and/or the targetbase station may be between a certain range. The SCS configured forthe wireless device on the two cells may be the same. The wireless device may be configured with the same waveform (e.g., CP-OFDM and/or DFT-s-OFDM) via the two cells. The SSB center frequency of the two cells may be the same. Common PRB grid between the cells may be aligned for simultaneoustransmission and/or reception.

Simultaneous transmission and/or reception may not be used. Some techniques (e.g., TDM at the physical layer) may be applied to allow for simultaneous connection to the source and/or the target cells. Some wireless device resources may need to be released in the source cell (e.g., number/quantity of CC and/or bands and/or MIMO layers) to support simultaneous Tx/Rx with the target base station.

BWP configurations of two cells (e.g., source and target) may play a role in determining whether to enable simultaneous connectivity and/or connection (e.g., simultaneous transmission and/or reception to/frombothbase stations) for a wireless device, for example, based on intra-band inter-frequency and/or intra-frequency with synchronous and/or asynchronous cells. Not all wireless devices may be able to support simultaneous connectivity and/or connection, for example, based on a band combination. A simultaneous connectivity and/or connection may refer to a simultaneous transmission to a plurality of base stations from a wireless device and/or a simultaneous reception by a wireless device from a plurality of base stations. Supporting a simultaneous connectivity and/or connection may referto a wireless device capability that supports simultaneous transmission and/or simultaneous reception.

Wireless devices may have different capabilities. A wireless device may (ormay not) support make-before-break and/or RACH-less handover. A first wireless device may support simultaneous connections to more than one base station. A second wireless device may not support simultaneous connections to more than one base station. A wireless device with a single RF chain may simultaneously (or substantially simultaneously) send/transmit to and/or receive from two base stations (e.g., a source and/or a target base station, and/or an MN and/or an SN). The wireless device single RF chain may need to cover the entire bandwidthoftwo cells associated with the two base stations. The location and/or the bandwidth of the two cells (e.g., source and/or target cells, and/or PCell and/or SCell) in frequency domain may or may not overlap.

The location and/or bandwidths of the two cells may overlap, at least partially, in the frequency domain, for example, in an intra-frequency scenario. Thewireless device transmitter and/or receiver may not be able to support simultaneous transmission and/or reception. The wireless device may notbe able to manage interference between the two simultaneous sending/transmitting and/or receiving signals. The wireless device may not be able to enable transmission power for two transmissions at the same time. The received signal power difference from the two base stations may not be supported in an operation range (e.g., the filters linear range) of the wireless device receiver. The SCS and/or the waveform configured for the wireless device on the two cells may not be the same. The two base stations may not belongto the same power group and/or TAG.

A wireless device 2106 may be able to simultaneously send/transmit to and/or receive fromtwo base stations, for example, basedon an intra-frequency scenario. Locations and/or bandwidths of the two cells associated with the two base stations may at least partially overlap in the frequency domain. The wireless device may have single and/or multiple RF chains. The wireless device 2106 may be able to manage the interference of the two simultaneous sending/transmitting signals and/or receiving signals. The wireless device 2106 may be able to enable transmission power for two transmissions at the same time. The received signal power difference from the two base stations may be supportedin an operation range (e.g., filters dynamic range of RF components, automatic gain controller) of the wireless device receiver. The SCS and/or the waveform configured for the wireless device 2106 on the two cells may be the same. The two base stations may belong to the same cell group and/or TAG The wireless device may employ TDM schemes at the physicallayer.

An increased latency for a wireless device 2106 may occur based on a change to an RF chain, for example, based on supporting non-overlapped locations/bandwidths in frequency domain. An RF chain adjustment for a BWP switching may take long (e.g., severalmilliseconds). An RF chain adjustment for a BWP switching of a first cell may create an interruption time to a second cell in a same frequency band. A wireless device 2106 with a single RF chain may perform parameter adjustment (e.g., switching) of the single RF chain for/during simultaneous connectivity. The wireless device may be configured with a second cell (e.g., based on receiving a handover command, and/or SCGaddition), and/or releasing a first cell. RF switching may take 2 OFDM symbols (e.g., with 15 KHz SCS and/or about 1 ms). RF switching may increase an interruption time during which simultaneous connectivity may not be possible. BWP switchingmay be required by the physical layer. BWP switching may be associated with large latency (e.g., up to 3 ms). The BWP switching delay may result in an increased power consumption by wireless device and/or increased mobility interruption time. Increased mobility interruption time may lead to handoverfailure and/or RLF. Reducing the long delay in preparing simultaneous connection to two base stations may be beneficial, for example during a handover, and/or SCG change, and/or dual connectivity.

A location and/or bandwidth of a first cell (e.g., source cell and/or PCell) of a first base station (e.g., source base station and/or MN) may at least partially overlap with a location and/or bandwidth of a second cell (e.g., target cell and/or SCell) of a second base station (e.g., target base station and/or SN). This overlap may be beneficial for simultaneous connection. The wireless device may be capable of supporting simultaneous connections (transmissions and/or receptions), for example, in an intra-frequency scenario. Enabling configuring BWPs of two cells for a simultaneous connectivity may be beneficial, while accounting for differing wireless device capabilities, such that a latency associated with sending/transmitting and/or receiving in the BWPs of the two cells at the same time may be reduced.

A BWP management mechanism may be used for a wireless device during simultaneous connectivity. The network and/or the wireless device may determine/select BWPs (DLBWPs and/or UL BWPs) via two cells based on a wireless device capability. The capability may be selected, for example, based on an interference and/or collision likelihood at the wireless device, a latency and/or an interruption time in simultaneous transmission and/or reception being reduced. One ormore procedures and/or parameters may be sent/received/used to enhance sending/transmitting to and/or receiving from two base stations in a wireless network at the same time. These procedures and/or parameters may improve a likelihood thatan interruption time is reduced closerto and/or equal to 0 ms. The procedures and/or parameters may improve a likelihood of successful handover, SCGchange, and/or dual connectivity procedure in a timely manner. The procedure may result in an enhanced mobility performance with low mobility interruption time, low latency, and/or high reliability. A battery consumption of the wireless device may be improved.

A wireless device 2106 may support simultaneous connectivity to more than one base station., The wireless device may use an active BWP of a source cell substantially similar to (e.g., same BWP-ID and/or at least partially overlapped in frequency domain) a first active BWP of a target cell, for example, during a handover from a source base station 2104 to a target base station2102. This approach may simplify simultaneous connectivity (e.g., MBB handover and/or DC-based handover), for example, because it may not require the wireless device 2106 to switch frequencies (e.g., location and/or bandwidth) that may cause RF chain adjustments.

A wireless device 2106 may not support simultaneous connectivity, for example, based on a certain band combination. The wireless may not have a reasonable advantage using a similar BWP (even in part) between a source base station 2104 and/or a target base station 2102. The wireless device capability may not support simultaneous connection in similar bandwidth. The source base station 2104 and/orthe target base station 2102 may use different BWPs. The BWPs may not overlap in location and/or bandwidth in frequency domain Destructive interference and/or collision during simultaneous connectivity may be avoided, for example, based on the lack of overlap of BWPs. Techniques for mobility, handover, SCGchange, and/or dual connectivity may base decisions on the capabilities of each individual wireless device in configuring and/or activating BWPs.

Several techniques for efficient simultaneous connectivity for handover, SCGchange, and/or DC may be used. The techniques may improve simultaneous connectivity, for example, based on determining whether a wireless resource suchas a BWP (e.g., a DLBWP and/or aULBWP) ofthe first cell (e.g., source cell and/or PCell) and/or the second cell (e.g., target cell and/or SCell) are the same (and/or aligned and/or overlapped at least in part in frequency domain). The determination may be based on the capabilities of the wireless device that is simultaneously connected to both cells. The second base station may have several BWPs (or other wireless resources) configured, and/or may determine which BWP (or other wireless resource) is activated (e.g., as a first active BWP). This determination may be based on the wireless device capabilities (e.g., whether the wireless device is capable of simultaneous connection to an indicated band combination and/or under indicated configurations). The determination may be based on the active BWPon the first (source) cell currently beingused by the wireless device and/or the first base station. This information may be obtained via the second base station from the first base station and/or used to facilitate efficient simultaneous connectivity. At least some wireless communication configurations may not share all of this information, for example, prior to a handover. The above procedures may not be performed, which may cause difficulties during the handover. RRC configuration parameters may be shared for DLand/orUL BWPs. The L1/L2 information about a current active BWP in a cell may not be shared. Wireless device capability may be shared with respect to whether it can support MBB and/or RACH-less handover. but they may not indicate whether the wireless device is capable of simultaneous connectivity for an indicated band combination (e.g., intra/inter-frequency).

The first base station (source base station 2104 and/or MN) may obtain information about the configured first active BWP that the second base station (target base station 2102 and/or SN) may use for simultaneous connectivity (e.g., handover and/or SCG change). The first base station may determine the wireless device capabilities and/or the information about the first active BWP determined by the second base station. The first base station may switch the active BWP ofthe first cell (source cell and/or PCell) for the wireless device 2106. The wireless device 2106 may not be capable of simultaneous connection (e.g., intra-frequency). The secondbase stationmay select a BWP thatis the same as/aligned/overlapped with the active BWP currently configured for the wireless device 2106. The first base station may switch the wireless device to a different active BWP. A single BWP may be activated in a cell at a time. The wireless device may be capable of simultaneous connection (e.g., intra-frequency). The second base station may select a BWP that is different and/ornot aligned/overlapped with the active BWP currently configured forthe wireless device 2106. The first base station may switch the wireless device to a BWP that is the same as/aligned/overlapped with the first active BWP determined by the second base station.

The wireless device 2106 may obtain information about the first active BWP ofthe second cell that the second base stationhas configured for the wireless device 2106to use (e.g., during a handover, via a handover command). The wireless device 2106 may switch to a different BWP on the first cell (source cell/PCell), for example, prior to and/or during a handover and/or based on the information and/or the information of its own capabilities. The wireless device 2106 may send/transmit information to the first base station about the BWP switching (e.g., via an uplink information signal on the newly activated BWP). The handover command (RRC reconfiguration message) may trigger the BWP switching for the simultaneous connectivity wireless device.

A source (or first) base station 2104 serving a wireless device 2106 via a source cell may receive one or more measurement reports and/or control messages from the wireless device 2106. The one or more measurement reports may comprise RSRP of one or more neighboring cells. The source base station 2104 may determine to perform a handover and/or a SCG change for the wireless device 2106, for example, based on the received measurement reports 2102 and/or traffic load level of the source cell. The source base station 2104 may send/transmit a handover request 2110 to one or more target base stations 2102 comprising: wireless device capabilities, and/or RRC configuration parameters of the wireless device 2106 in the source cell.

A target (or second) base station 2102 may receive, from the source base station 2104, a handover request message 2110 comprising wireless device capability information and/or RRC configuration parameters of the wireless device 2106 in the source cell. The wireless device capability information may comprise mobility capability parameters (e.g.,amake-before-breakcapability indicator, a RACH-less handover capability indicator, and/or a capability indicator indicating whether the wireless device 2106 is capable of simultaneous connection to more than one base station (e.g., the source base station 2104 and/or the target base station 2102)). The capability indicatormay associate to a band combination (e.g., inter/intra-frequency in FR1 and/or FR2, and/or inter/intra-band). The RRC configuration parameters of the wireless device 2102 in the source cellmay comprise parameters of BWP configurations. The BWP configurations may indicate one ormore configured DLBWPs and/or one or more configured ULBWPs. The parameters of BWP configurations may comprise a location and/or a bandwidth, a sub-carrier spacing, a cyclic prefix indicator for each ofthe one ormore configured DLBWPs, and/or a cyclic prefix indicator for each of the one or more configured UL BWPs. The bandwidth of a BWP may comprise a number/quantity of contiguous PRBs according to the configured SCS of the BWP. The RRC configuration parameters may indicate common and/or dedicated DL/UL resources configured on each of the one or more configured DLBWPs and/or each ofthe one ormore configured ULBWPs. The RRC configuration parameters may indicate an initial DL/UL BWP (e.g., initialDownlinkBWP, initialUplinkBWP), ID of a first active DL/UL BWP (e.g., firstActiveDownlinkBWP-Id, firstActiveUplinkBWP-Id), ID of a default DL BWP (e.g., defaultDownlinkBWP-Id), and/or a BWP inactivity timer (e.g., bwp-InactivityTimer). The BWP inactivity timer (e.g., bwp-InactivityTimer) may indicate the duration after which the wireless device 2106 may fall back to the default BWP. The RRC configuration parameters may indicate a current active BWP (e.g., DL BWP and/or UL BWP) ofthe wireless device 2106 in the source cell. The RRC configuration parameters may indicate the location and/or bandwidth of the current active BWP and/or the ID of the current active BWP. A wireless device may expect that a center frequency for a DL BWP may be same as a center frequency for a UL BWP, for example, in unpaired spectrumoperation.

The target base station 2102 may perform admission controlto determine whetherto admit the handover request from a source base station 2104 for a wireless device 2106. The target base station 2104 may determine based on the wireless device capabilities, configurations on source cell, and/or the traffic load levelin the target cell. The target base station 2102 may determine admission control 2112, for example, based on wireless device simultaneous connectivity capability indicated by the capability indicator, the one or more configured BWPs, and/or the active BWP for the wireless device 2106 in the source cell. The target base station 2102 may configure a plurality of DL/UL BWPs forthe wireless device 2106 in the target cell, for example, based on wireless device simultaneous connectivity capability indicated by the capability indicator, the one or more configured BWPs, and/or the active BWP for the wireless device in the source cell.

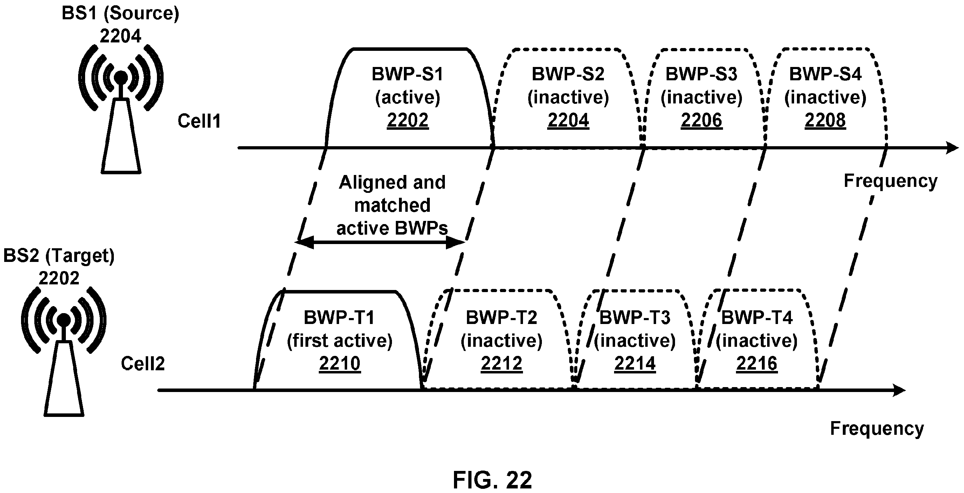

FIG. 22 shows an example of a BWP configuration of a source cell and a target cell with aligned/matched active BWPs. Matched BWP configurations may reduce a complexity of a wireless device communicating in simultaneous connectivity with two or more base stations. RF chain(s) of the wireless device may not be reconfigured to send/transmit and/or receive fromthe source base station 2202 and target base station 2204, for example, based on the active source BWPs being matched/overlapped/aligned with the active target BWPs. The BWP configurations described herein may be replaced with other wireless resources (e.g., other time and/or frequency-based resources) for wireless communications.

One or more ofthe configured BWPs (DLBWPs and/or ULBWPs) in the source may be aligned (e.g., matched with fully overlapped resources in the frequency domain) with one ormore ofthe configured BWPs in the target cell. The location and/or bandwidth of configured BWPs in the two cells may be the same. Four BWPs may be configured forthe wireless device on a source cell (cell1) with BWP-IDs: BWP-S1 2202, BWP-S2 2204, BWP-S3 2206, and/or BWP-S4 2208. The four BWPs may be DL BWPs. The four BWPs may be UL BWPs. Four BWPs may be configured for the wireless device on a targetcell (cell2) with BWP-IDs: BWP-T1 2210, BWP-T2 2212, BWP-T3 2214, and/or BWP-T4 2216. The four BWPs may be DL BWPs. The four configured BWPs in the source cell and/or the target cell may be aligned (fully overlapped resources in frequency domain). The IDs of the aligned BWPs may match. BWP-S1 2202 may be aligned with BWP-T1 2210. BWP-S2 2204 may be aligned with BWP-T2 2212. BWP-S3 2206 may be aligned with BWP-T3 2214. BWP-S4 2208 may be aligned with BWP-T4 2216. The active BWPs may be aligned (e.g., BWP-S12202 and BWP-T12210).

A first active BWP-ID of the target cell (BWP-T1 2210) may be matched to a current active BWP-ID ofthe source cell(BWP-S1 2202). The first active BWP ofthe target cell and/or the current active BWP of the source cell may be matched and/or have the same ID (BWP-X1). BWP-S1 2202 and/or BWP-T1 2210 may be aligned (fully overlapped) in the frequency domain. A first active BWP of the target cell (BWP-T12210) may be aligned (e.g., fully overlapped, have the same/similar location, and/or bandwidth) with the current active BWP of the source cell (BWP-S1 2202).

The target base station 2202 may determine/select the first active BWP, for example, based on the first active BWP not matching, aligning, and/or partially overlapping with the current active BWP of the source cell. The target base station 2202 may select, from among the plurality of configured BWPs on the target cell, the first active BWP having a first active BWP-ID different from the ID of the current active BWP of the source cell. The capability indicator may indicate that the wireless device is not capable of simultaneous connectivity (or substantially simultaneous connectivity). The first active BWP of the target cell may have different ID from the current active BWP of the source cell. The location and/or the frequency of the two BWPs may or may not overlap. The target base station 2202 may determine/select, from among the plurality of configured BWPs on the target cell, the first active BWP having a location and/or bandwidth different from the location and/or bandwidth of the current active BWP on the source cell. The capability indicator may indicate that the wireless device is not capable of simultaneous connectivity. The first active BWP ofthe target cell may have different location and/or bandwidth from the current active BWP ofthe source cell. The ID of the two BWPs may or may not be the same. The first active BWP of the target cell and/or the current active BWP of the source cell may partially overlap.

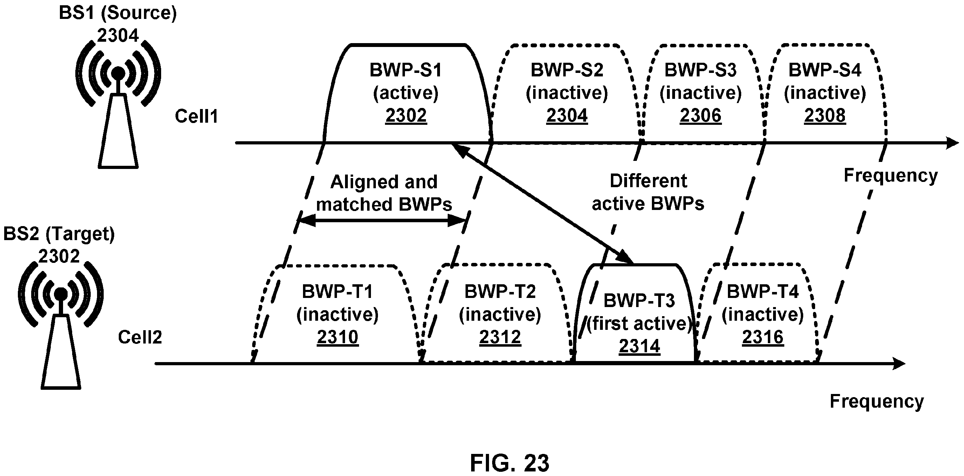

FIG. 23 shows an example of a BWP configuration of a source cell and a target cell with different active BWPs. One or more of the configured BWPs in the source cell and/or the target cell may not be aligned. Four (or another quantity of) BWPs may be configured for the wireless device on a source cell (e.g., cell1) with BWP-IDs: BWP-S1 2302, BWP-S2 2304, BWP-S3 2306, and/or BWP-S4 2308. The four BWPs may comprise DL BWPs. The four BWPs may comprise UL BWPs. The four BWPs may comprise DL/UL BWP pairs. Four BWPs may be configured for the wireless device on a target cell (cell2) with BWP-IDs: BWP-T1 2310, BWP-T2 2312, BWP-T3 2314, and/or BWP-T4 2316. The four BWPs may comprise DL BWPs. BWP-S1 2302 may be aligned with BWP-T12310. BWP-S2 2304 may be aligned with BWP-T22312. BWP-S3 2306 may be aligned with BWP-T3 2314. BWP-S4 2308 may be aligned with BWP-T4 2316. The active BWPs may not be aligned (e.g., BWP-S1 2202 and BWP-T3 2214).

One or more of the configured BWPs (e.g., DL BWP and/or UL BWP) in the source cell may have the same and/or different locations, and/or the same and/or different bandwidths with one or more of the configured BWPs (e.g., DL BWP and/or ULBWP) in the target cell. One or more of the configured BWPs in the source cell may partially overlap (e.g., in the frequency domain) with one or more ofthe configured BWPs in the target cell.

BWP-S12302 may be the current active BWP for the wireless devicein the source cell. BWP-S22304, BWP-S3 2306, and/or BWP-S4 2308 may be inactive. The target base station 2302 may configure BWP-T3 2314 as the first active BWP for the wireless device in the target cell. BWP-T1 2310, BWP-T2 2312, and/or BWP-T4 2316 may be inactive. Active BWPs of the two cells may not be aligned/matched. Active BWPs may have different locations, bandwidths, and/or IDs. The target cell first active BWP-ID (BWP-T3) may be different from the source cell active BWP-ID (BWP-S1 2302). The first active BWP of the target cell and/or the current active BWP ofthe source cellmay not be matched and/or may not have the same ID. BWP-S1 2302 and/or BWP-T3 2314 may not overlap in the frequency domain. The first active BWP of the target cell (BWP-T3 2314) may not have the same/similar location and/orbandwidth as the current active BWP ofthe source cell (BWP-S1 2302).

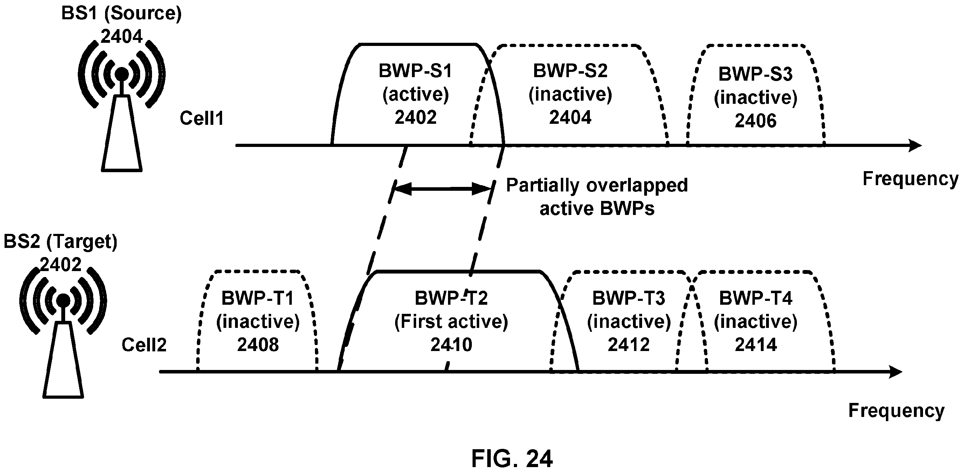

FIG. 24 shows an example of a BWP configuration of a source cell and a target cell with different BWPs. Three BWPs (e.g., DLBWPs and/or UL BWPs) may be configured for the wireless device in the source cell using BWP-IDs: BWP-S1 2402, BWP-S2 2404, and/or BWP-S3 2406. Four BWPs (e.g., DL BWPs and/or UL BWPs) may be configured for the wireless device in the target cell using BWP-IDs: BWP-T12408, BWP-T2 2410, BWP-T3 2412, and/or BWP-T4 2414. The configured BWPs in the source cell and/or the target cell may partially overlap. BWP-S1 2402 may not be aligned (e.g., not fully overlapped) with BWP-T1/T2/T3/T4 2408/2410/2412/2414. BWP-S2 2404 may not be aligned with BWP-T1/T2/T3/T4 2408/2410/2412/2414.BWP-S3 2406 may not be aligned (e.g., not fully overlapped) with BWP-T1/T2/T3/T4 2408/2410/2412/2414. BWP-S1 2402 may partially overlap (e.g., in frequency) with BWP-T12 408 and/or BWP-T2 2410. BWP-S2 2404 may partially overlap (e.g., in frequency) with BWP-T2 2410 and/or BWP-T3 2412. BWP-S3 2406 may partially overlap (e.g., in frequency) with BWP-T3 2412 and/or BWP-T4 2414.

A target base station 2402 may configure a first active BWP of a target cell for the wireless device. The target base station 2402 may configure the first active BWP of the target cell for the wireless device, for example, by indicating the ID of one of the configured BWPs (e.g., firstActiveDownlinkBWP-Id and/or firstActiveUplinkBWP-Id). The target base station 2402 may determine the first active BWP of the target cell, for example, based on the wireless device simultaneous connectivity capability (or substantially simultaneous capability) indicated by the capability indicator, and/or the current active BWP of the source cell. The target base stationmay send/transmit the handover request acknowledgmentcompris ing the RRC reconfiguration message to a source base station 2404. The RRC reconfiguration message may comprise one ormore parameters indicating the BWP configurations of the wireless device in the target cell. The BWP configurations may indicate a location and/or bandwidth and/or identifier ofthe first active UL/DL BWP. The wireless device may receive a handover command from the source base station 2402 comprising the RRC reconfiguration message. The wireless device may (or may not) expect the first active BWP configured on the target cell to be similar (e.g., matched to and/or overlapped with) the current active BWP on the source cell, for example, depending on the wireless device's capabilities. The wireless device may not expect the first active BWP configured on the target cellto be similar to the current active BWP on the source cell, for example, based on the wireless device capability not supporting simultaneous connectivity. The wireless device may expect the first active BWP configured on the target cell to be similar to the current active BWP on the source cell, for example, based on the wireless device capability supporting simultaneous connectivity.

The target base station 2402 may determine the first active BWP of the target cell based on the wireless device simultaneous connectivity capability indicated by the capability indicator, and/or the current active BWP of the wireless device in the source cell. The target base station 2402 may determine/select the first active BWP such that it is matched (same ID), aligned, and/orpartially overlapped with the currentactive BWP of the source cell. The wireless device capability indicator may indicate that it can support simultaneous connection with the two base stations. The target base station 2402 may select, from among the plurality of configured BWPs on the target cell, the first active BWP having a first active BWP-ID similar to the ID of the current active BWP of the source cell. The capability indicator may indicate that the wireless device is capable of simultaneous connectivity. The first active BWP of the target cell may have the same ID as the current active BWP of the source cell, but the location and/or the frequency of the two BWPs may be the same (aligned) and/or overlapped. The target base station 2402 may select, from among the plurality of configured BWPs on the target cell, the first active BWP having a location and/or bandwidth similar to the location and/or bandwidth of the current active BWP on the source cell, for example, based on the capability indicator indicating that the wireless device being capable of simultaneous connectivity. The first active BWP ofthe target cell may have the same location and/or bandwidth as the current active BWP of the source cell, but an ID of the two BWPs may or may not be the same. The first active BWP ofthe target cell and/or the current active BWP ofthe source cellmay partially overlap.

BWP-S1 2402 may be the current active BWP for the wireless device in the source cell. BWP-S2 2404 and/or BWP-S3 2406 may be inactive. The targetbase station 2402 may configure BWP-T2 2410 as the first active BWP for the wireless device in the target cell. BWP-T1 2408, BWP-T3 2412, and/or BWP-T4 2414 may be inactive. Active BWPs of the two cells may not be fully aligned/matched. Active BWPs may have different IDs, and/or their location and/or bandwidth partially overlap. The target cell first active BWP-ID (BWP-T2 2410) may be different from the source cell active BWP-ID (BWP-S1 2402). The first active BWP of the target cell and/or the current active BWP of the source cell may not be matched and/or may nothave the same ID.BWP-S12402 and/or BWP-T2 2410 may partially overlap in the frequency domain.

The source base station 2404 may forward, to the wireless device, a handover command (e.g., received from a target base station) comprising target cell's RRC configuration parameters. The target base station 2402 may receive from the wireless device via the first active ULBWP, a preamble and/or a transport block (e.g., PUSCH). The target base station 2402 may send/transmit, to the wireless device via the first active DLBWP, a RAR. The RAR may comprise a TA value for the wireless device to adjust uplink transmission timing to the target base station 2402. The RAR may comprise at least one uplink grant for wireless device to send/transmit transport block(s) to the target base station 2402. A downlink resource, via which the wireless device receives the RAR, may be indicated by DCI scrambled by a radio network identifier of the wireless device in the target cell (e.g., new C-RNTI). The first active DLBWP and/or the first active ULBWP may be paired (e.g., have same location and/or center frequency and/or ID), for example, basedon an unpaired spectrum operation.

The source base station 2404 may maintain (or keep) the current active BWP of the source cell during the handover. The source base station 2404 may send/transmit one or more downlink messages (e.g., MACCE and/or RRC messages) and/or signals (e.g., DCI) to the wireless device. The one or more downlink messages may indicate a stop to the BWP inactivity timer and/or release of a configured BWP inactivity timerfield value. The wireless device may not switch (e.g., maintain, keep) the active BWP during the handover. The wireless device may not (e.g., expect to) receive controlmessages (e.g., RRC messages) and/or DCI from the sourcebase station 2404 indicating a reconfiguration BWP configuration(s) and/or indicating BWP switching in the source cell during the handover. The one or more downlink messages may comprise one or more RRC parameters of BWP configuration. A field indicating a BWP inactivity timer in the one ormore RRC parameters may be absent. The field absence may indicate no BWP switching from a current active BWP (e.g., non-default BWP) based on the BWP inactivity timer. The source base station 2404 may send/transmit one ormore DCIs (e.g., DCI Format 0_0, DCI Format 0_1, DCI Format 1_0, DCI Format 1_1, DCI Format 2_2, etc. that indicate UL grant ofthe current active UL BWP and/or DL assignment of the current active DLBWP) via the current active DLBWP to the wireless device. The inactivity timer (if running) may be restarted. The current active BWP may remain active during the handover.

Handover performance may be measured using a mobility interruption time (e.g., a time duration during which a wireless device may not exchange user plane packets with any base station during transitions). Target performance may have an ideal goal of 0 ms mobility interruption time. A wireless device may detach from a source base station before transitioning to a target base station (see FIG. 20). The wireless device may synchronize to the target cell, for example, after that detachment. The wireless device may not receive packet data fromthe source base station or the targetbase station (e.g., during the mobility interruption time). This lack of receiving data can cause dropped calls, decreased throughput, delay, latency, ping-pong, and various other problems for wireless communication.

Simultaneous connectivity (or substantially simultaneous connectivity, which may be referred to herein interchangeably as simultaneous connectivity) may reduce and/or eliminate mobility interruption time, for example, during a handover. The wireless device may add the target base station as a communication option while remaining in communication with the sourcebase station, for example, after startinga handover. The source base station and target base station may communicate wireless device capability and configuration information to enable the wireless device to achieve simultaneous connectivity (e.g., by reducing complexity of transmissions). The wireless device may adjust its own configuration to achieve simultaneous connectivity, for example, based on a target base station configuration for the wireless device.

The wireless device may have various capabilities that determine a transmission and/or receiving capability and/or complexity of the wireless device. The wireless device may have a multiple RF chain that may encode/decode multiple messages in parallel. The source base station and target base station may switch active BWPs, for example, to align active BWPs in location and frequency. By aligning active BWPs, a multiple RF chain capable wireless device may be able to communicate with both base stations in simultaneous connectivity. The wireless device may have a single RF chain that may encode/decode messages in series. The source base station and target base station may switch active BWPs to make active BWPs have different locations and/or different frequencies, for example, to reduce interference for a single RF chain capable wireless device to communicate with both base stations in simultaneous connectivity. The wireless device may switch BWPs to align or separate BWPs, for example, basedon wireless device capability and the base stations not performing the alignment.

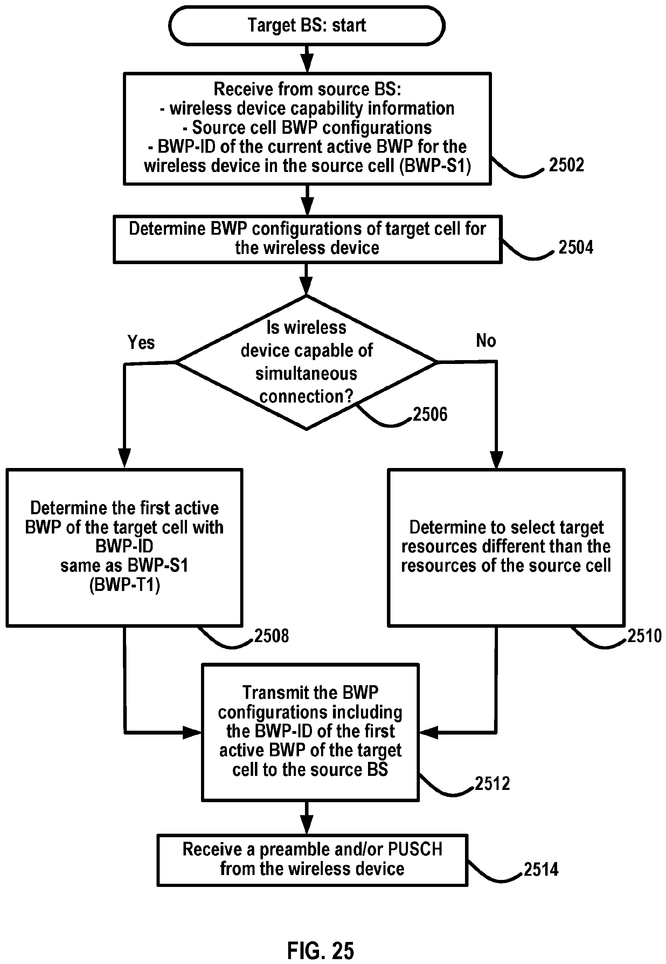

FIG. 25 shows an example of a procedure for a target base station during handover using simultaneous connectivity. A target base station may receive wireless device configuration information and/or wireless capability information from a source base station. The target base station may determine whether to select active BWPs that align with active BWPs of the source base station, for example, based on the wireless device configuration information and wireless device capability information. The wireless device configuration information may indicate active BWPs for the source base station. The wireless device capability information may indicate information about the wireless device capabilities for simultaneous connectivity (or substantially simultaneous connectivity).

In step 2502, a target base station may receive one or more messages from the source base station. The one or more messages may comprise wireless device capability information, source cell BWP configurations, and/or BWP-ID of the current active BWP for the wireless device in the sourcecell (BWP-S1). In step 2504, the target base stationmay determine BWP configurations of target cell for the wireless device. In step 2506, the target base station may determine whether wireless device is capable of simultaneous connection. If yes in step 2506, in step 2508 the target base station may determine the first active BWP ofthe target cell with a BWP-ID to be the same as BWP-S1 (e.g., BWP-T1). In step 2512, the target base station may transmit the BWP configurations to the source base station. The BWP configurations may comprise the BWP-ID ofthe first active BWP ofthe target cell In step 2514, the target base station may receive a preamble and/or a PUSCH transmission from the wireless device. If no in step 2506, in step 2510 the target base station may determine to select target resources different from the resources of the source cell (e.g., different frequencies, location, etc.). The procedure may continue at step 2512, as describedabove.

The target cell may make determinations of BWP configurations of a target cell for example, based on MBB handover/SCGchange and/or DC-based handover/SCGchange. A target base station may receive from a source base station one or more messages comprising wireless device capability information of a wireless device (e.g., indicating whether the wireless device is capable of simultaneous connection). The target base station may receive from the source base station one ormore messages comprising configuration parameters of the BWPs configured to the wireless device forthe source cell. The target base stationmay receive from the sourcebase station one or more messages comprising at least one BWP-ID of the current active BWP (DL BWP and/or UL BWP) of the wireless device in the source cell (e.g., BWP-S1). The target base station may configure a plurality of BWPs (DL BWP(s) and/or UL BWP(s)) for the wireless device in the target cell. The configuration may be based on the wireless device capability information. The configuration may be based on the configuration parameters of the BWPs. The configurationmay be based on the at least one BWP-ID of the current active BWP. The target base station may determine whether the wireless device is capable of simultaneous connection (e.g., simultaneous transmission and/or reception) to the source cell and/or the target cell. The determination may be based on the wireless device capability information. The target base station may determine/select at least one first active BWP (DL BWP and/or UL BWP) of the target cell among the plurality of BWPs for the wireless device. The base station may determine/or assign a BWP-ID (e.g., BWP-T1, as shown in FIG. 22) of the at least one first active BWP same as (and/or matched to) the at least one BWP-ID (e.g., BWP-S1, as shown in FIG. 22) of the current active BWP of the source cell., The wireless device may be capable of simultaneous connection. The target base station may determine/select at least one first active BWP (DL BWP and/or UL BWP) of the target cell among the plurality of BWPs for the wireless device. The determined/selected BWP may be indicated by a BWP-ID (e.g., BWP-T3, as shown in FIG. 23 and/or BWP-T2 in FIG. 24) different from(not matched to) the at least one BWP-ID (e.g., BWP-S1, as shown in FIG. 22) of the current active BWP of the source cell. The wireless device may not be capable of simultaneous connection. The target base station may send/transmit one or more messages to the source base station comprising configuration parameters ofthe plurality of BWPs configuredto the wireless device forthe targetcell. The one ormore messages may comprise one or more parameters indicating the at least one first active BWP of the target cell, (e.g., the BWP-ID of the at least one first active BWP, and/or location and/or bandwidth of the at least one first active BWP). The target base station may receive a preamble and/or a packet data (e.g., PUSCH) from the wireless device via the at leastone first active ULBWP of the target cell.

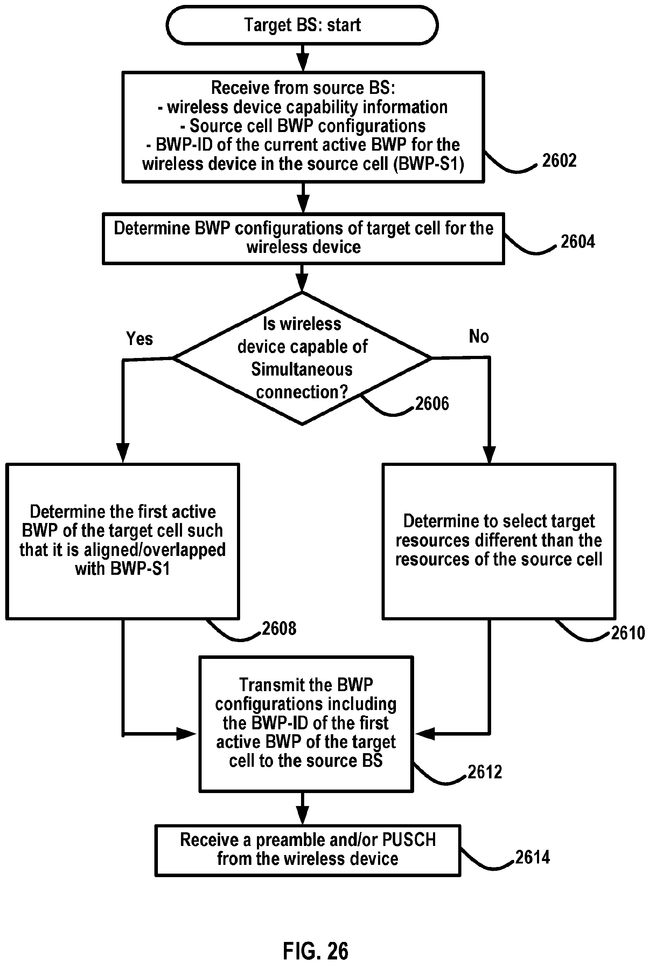

FIG. 26 shows an example of a BWP management procedure for a target base station during handover using simultaneous connectivity. The target base station may receive wireless device configuration information and/or wireless capability information from a source base station. The targetbase station may determine whether to select active BWPs that overlap with active BWPs ofthe source base station, for example, based on the wireless device configuration information and wireless device capability information. The wireless device configuration information may indicate active BWPs for the source base station. The wireless device capability information may indicate information about the wireless device capabilities for simultaneous connectivity.

In step 2602, the target base station may receive one or more messages from the source base station. The one or more messages may comprise wireless device capability information, source cell BWP configurations, and/or BWP-ID of the current active BWP for the wireless device in the sourcecell (BWP-S1). In step 2604, the target base station may determine BWP configurations of target cell for the wireless device. In step 2606, the target base station may determine whether wireless device is capable of simultaneous connection. If yes in step 2606, in step 2608 the target base station may determine the first active BWP of the target cell such that it is aligned/overlapped with BWP-S1. In step 2612, the target base station may transmit the BWP configurations including the BWP-ID of the first active BWP of the target cell to the source base station. In step 2614, the target base station may receive a preamble and/or a PUSCH transmission from the wireless device. If no in step 2606, in step 2610 the target base station may determine to select target resources different than the resources of the source cell (e.g., different frequencies, location, etc.). The procedure may continue at step2612, as describedabove.

The target cell may determine BWP configurations of the target cell (e.g., MBB handover/SCGchange and/or DC-based handover/SCGchange). A target base station may receive from a source base station one or more messages. The one or more messages may comprise the wireless device capability information, of a wireless device, indicating whether the wireless device is capable of simultaneous connection (e.g., simultaneous transmission and/or reception)., The one or more messages may comprise configuration parameters of the BWPs configured to the wireless device for the source cell. The one ormore messages may comprise at least one BWP-ID of the currently active BWP (e.g., DLBWP and/or ULBWP) of the wireless device in the source cell (e.g., BWP-S1). The target base station may configure a plurality ofBWPs (e.g., DL BWP(s) and/orUL BWP(s)) for the wireless device in the target cell, for example, based on the wireless device capability information. The BWPs may be configured for the wireless device in the source cell and/or the at least one BWP-ID ofthe currently active BWP. The target base station may determine whether the wireless device is capable of simultaneous connection (e.g., simultaneous transmission and/or reception) to the source cell and/or the target cell based on the wireless device capability information. The target base station may determine/select at least one first active BWP (e.g., DL BWP and/or UL BWP) of the target cell among the plurality of BWPs for the wireless device. The at least one first active BWP (e.g., BWP-T1 in FIG. 22, and/or BWP-T2 in FIG. 24) may be at least partially overlapped (e.g., in the frequency domain) with the currently active BWP (e.g., BWP-S1 in FIG. 22, and/or BWP-S1 in FIG. 24) of the source cell,

The wireless device may be capable of simultaneous connection. The target base station may determine/select at least one first active BWP (e.g., DLBWP and/or ULBWP) of the target cell among the plurality of BWPs forthe wireless device. The at least one first active BWP (e.g., BWP-T3, as shown in FIG. 23) may not be overlapped (e.g., in the frequency domain) with the currently active BWP of the source cell, for example, based on the wireless device being not capable of simultaneous connection. The target base station may send/transmit one or more messages to the source base station comprising configuration parameters of the plurality of BWPs configured for the wireless device on the target cell. The one or more messages may comprise one or more parameters indicating the at least one first active BWP of the target cell, for example, based on the BWP-ID of the at least one first active BWP, location, and/or bandwidth ofthe at leastone first active BWP. The target base station may receive a preamble and/or a packet data (e.g., PUSCH transmission) from the wireless device via the at least one first active UL BWP of the target cell.

A source (first) base station may configure a wireless device to be served by a source (first) cellassociated with the source base station. The source base station may send/transmit one or more messages comprising RRC parameters to configure the wireless device with a plurality of BWPs. The plurality of BWPs may comprise DL BWPs and/or UL BWPs. The RRC parameters may comprise a plurality of locations, bandwidths, and/or identifiers forthe plurality of BWPs. The plurality of BWPs may comprise an active BWP (e.g., DLBWP and/or UL BWP). The RRC parameters may indicate the ID of the active BWP. The source base station may send/transmit DCI (e.g., DCI Format 0_0, DCI Format 0_1, DCI Format 1_0, DCI Format 1_1, DCI Format 2_2, etc.) to the wireless device on the active DL BWP. The wireless device may send/transmit at least one measurement report of one or more neighboring cells to the source base station. The one or more neighboring cells may comprise a target (second) cell of a target (second) base station. The source base station may receive the at least measurement report of the target cell from the wireless device. The source base station may send/transmit a handover request to the target base station comprising: wireless device capability information, RRC configuration parameters of the BWPs for the wireless device in the source cell, and/or the ID of the active BWP (e.g., active BWP-ID). The source base station may receive from the target base station a handover request acknowledgment message comprising an RRC reconfiguration message (configurations for the wireless device in the target cell). The RRC reconfiguration message may comprise an indication of a first active BWP (DL and/or UL) configured for the wireless device in the target cell. The source base station may decode the RRC reconfiguration message and/or retrieve the indication of the first active BWP. The source base station may receive the indication via the handover request acknowledgment message with and/or without decoding the RRC reconfiguration message. The target base station may send/transmit the indication via a separate field in the handover request acknowledgement message to the source base station. The indication of a first active BWP may comprise a first active BWP-ID and/or a location and/or bandwidth of the first active BWP.

The source base station may determine the wireless device capability, for example, based on whether the wireless device is capable of simultaneous connection to the source cell via the source base station and/or the target cell via the target base station. The wireless device capability may indicate whether the wireless device is capable of simultaneous connection for an indicated band combination (e.g., inter/intra-frequency combination). The wireless device capability may indicate whether the wireless device is capable of simultaneous connection under indicated radio conditions (e.g., same SCS/waveform configured in both cells, and/or both base stations belonging to the same power group/TAG, etc.). The sourcebase stationmay send/transmit to the wireless device a message indicating a BWP switch, for example, based on the determining. The source base stationmay send/transmit the message to switch the active BWP of the source cell based on the first active BWP of the target cell and/or the wireless device capability.

The source base station may determine that the wireless device is capable of simultaneous connection (connectivity), and/or that the first active BWP of the target cell is different from the (currently) active BWP of the source cell. The source base station may determine that the first active BWP-ID do not match (e.g., is not the same as) the active BWP-ID. The source base station may determine that the location and/or bandwidth of the first active BWP in the target cell do not overlap (fully and/or partially) the location and/or bandwidth of the active BWP in the source cell. The source base station may send/transmit a message to the wireless device to switch from the (currently) active BWP to a third BWP on the source cell. The third BWP may become the new active BWP. The third BWP may have the same BWP-ID as the first active BWP-ID. The location and/or bandwidth of the third BWP may overlap (fully and/or partially) with the location and/or bandwidth of the first active BWP.

The message may comprise one or more configuration parameters that indicate switching from the active BWP to the third BWP. The message may be a control message (e.g., RRC message) comprising configuration parameters and/or location and/or bandwidth and/or ID of the third BWP. The control message (e.g., RRC message) may comprise a stop/release of a BWP inactivity timer. The BWP inactivity timer may trigger a switching of the third BWP (e.g. from the third BWP to a default BWP). The control message (e.g., RRC message) may indicate no value for the BWP inactivity timer, which indicates a release of the timer. The wireless device may not switch the (newly) active BWP during the handover. The source base stationmay send/transmit one or more DCIs (e.g., DCI Format 0_0, DCI Format 0_1, DCI Format 1_0, DCI Format 1_1, DCI Format 2_2, etc.) via the third BWP to the wireless device. The third BWP may be activated. The BWP inactivity timer may be restarted. The one or more DCIs may indicate one or more UL grants scheduling one or more UL messages/transmission for the wireless device on the third UL BWP. The one or more DCIs may indicate one or more DL assignments scheduling one or more DL messages/transmissions forthe wireless device on the third DLBWP.

The source base station may determine that the wireless device is not capable of simultaneous connection (connectivity), and/or that the first active BWP of the target cell is similar to the (currently) active BWP of the source cell. The source base station may determine that the first active BWP-ID do match (e.g., is the same as) the active BWP-ID. The source base station may determine that the location and/or bandwidth of the first active BWP in the target cell do overlap (e.g., fully and/or partially) the location and/or bandwidth of the active BWP in the source cell. The source base station may then send/transmit a message to the wireless device to switch from the (currently) active BWP to a third BWP on the source cell. The third BWP may have a different BWP-ID from the first active BWP-ID. The location and/or bandwidth of the third BWP may not overlap (e.g., fully and/or partially) with the location and/or bandwidth of the first active BWP.

The source base station may send/transmit a handover command from to the wireless device comprising the RRC reconfigurationmes sage. The wireless device may expect the first active BWP configured on the target cell to be similar (e.g., matched to and/or overlapped with) the current active BWP on the source cell, for example, based on its capabilities. The wireless device capability may not indicate support for simultaneous connectivity. The wireless devicemay not expect the first active BWP configured on the target cell to be similarto the current active BWP on the source cell. The wireless device capability may indicate support for simultaneous connectivity. The wireless device may expect the first active BWP configured on the target cell to be similar to the current active BWP on the source cell.

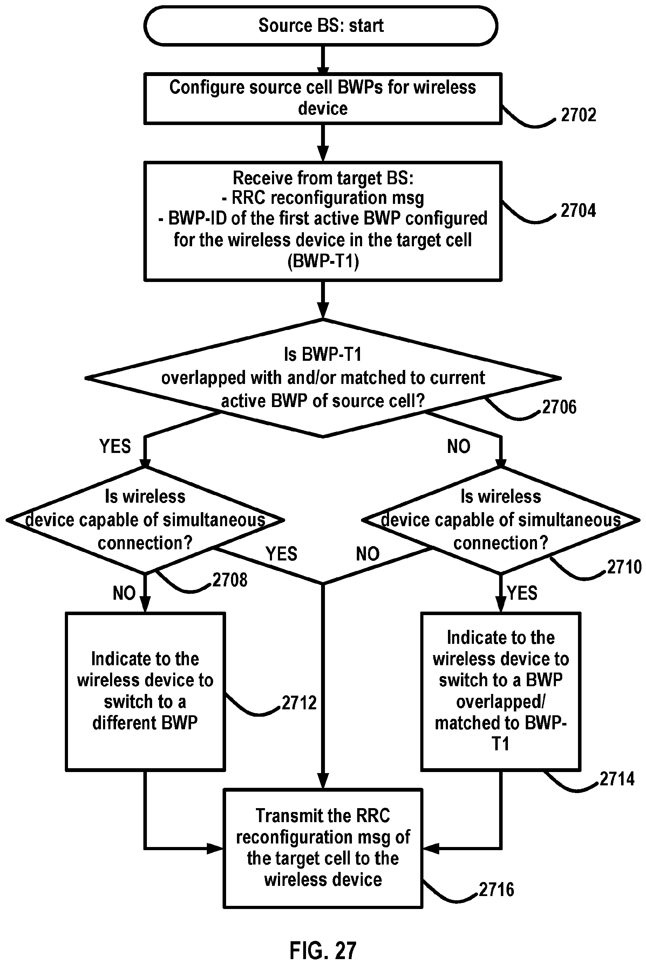

FIG. 27 shows an example of a procedure for a source base station during handover using simultaneous connectivity. A source base station may send/transmit wireless device configuration information and/or wireless capability information to a target base station. The source base station may determine whether to select active BWPs that align with active BWPs of the target base station, for example, based on the wireless device configuration information, wireless device capability information, and/or configuration information received from the target base station (e.g., handover configuration information). The wireless device configuration information may indicate active BWPs for the source base station. The wireless device capability information may indicate information about the wireless device capabilities for simultaneous connectivity.

In block2702, the source base station may configure source cell BWPs fora wireless device. In block2704, the source base station may receive from a target base station a RRC reconfiguration message, and a BWP-ID ofthe first active BWP configured for the wireless device in the target cell (e.g., BWP-T1). In block 2706, the source base station may determine whether the target BWP (BWP-T1) overlaps with and/or matches a current active BWP of the source cell. If yes in block 2706, in block 2708 the source base station may determine whether the wireless device is capable of simultaneous connection. Ifno in block2708, in block2712 the s ourcebase station may indicate to the wireless device to switch to a different BWP. In block 2716, the source base station may transmit the RRC reconfiguration message ofthe target cell to the wireless device. If yes in block2708, the source base station may continue at block2716 as described above. If no in block 2706, in block2710 the sourcebase station may determine whether the wireless device is capable of simultaneous connection. If yes in block 2710, in block2714 the sourcebase station may indicate to the wireless device to switch to a BWP overlapped/matched to a target BWP (e.g., BWP-T1). The source base station may continue at block 2716 as described above. If no in block 2710, the sourcebase station may continue at block2716, as described above.

The source base station may perform a simultaneous connectivity procedure (e.g., MBB handover/SCGchange and/or DC-based handover/SCGchange). The handover may be used to manage the active BWP on the source cell, for example, basedon thewireless device capability and/or the first active BWP ofthe target cell.

A wireless device may receive from a source (first) base station one or more control messages (e.g., RRC messages) comprising parameters to configure a plurality of BWPs (e.g., DLBWPs and/or ULBWPs) on a source cell of the source base station. The plurality ofBWPs may comprise DL BWPs and/or UL BWPs. The RRC parameters may comprise a plurality of locations, bandwidths, and/or identifiers for the plurality of BWPs. The plurality of BWPs may comprise an active BWP (DLBWP and/or UL BWP). The RRC parameters may indicate the ID of the active BWP. The source base station may send/transmit DCI (e.g., DCI Format 0_0, DCI Format 0_1, DCI Format 1_0, DCI Format 1_1, DCI Format 2_2, etc.) to the wire less device via the active DLBWP. The wireless device may send/transmit at least one measurement report of one or more neighboring cells to the source base station. The one or more neighboring cells may comprise a target (second) cell of a target (second) base station. The wireless device may receive from the source base station a handover command comprising one or more second control messages (e.g., RRC messages which may comprise an RRC reconfiguration message of the target cell). The one or more control messages (e.g., RRC messages) may comprise configuration parameters of a plurality of BWPs of the target cell. The configuration parameters may comprise an indication of a first active BWP configured from among the plurality of BWPs for the wireless device on the targetcell. The indication may indicate a location and/or bandwidth and/or ID of the first active BWP. The wireless device may switch the (currently) active BWP of the source cell based on the first active BWP of the target cell. The wireless may send/transmit uplink data to the sourcebase station indicating the switching of the BWP.

The wireless device may be capable of simultaneous connection to the source cell and/or the target cell, for example, based on the existing configurations. The wireless device may determine that the first active BWP of the target cell is similar to (e.g., matched to/overlapped with) the current active BWP of the source cell. The first active BWP and/or the current active BWP may have the same ID. The location and/or bandwidth of the first active BWP may overlap (e.g., fully and/or partially in frequency domain) with the location and/or bandwidth of the current active BWP. The wireless device may not switch the active BWP of the source cell. The wireless device may determine that the first active BWP of the target cell is different from (e.g., not matched to/not overlapped with) the current active BWP of the source cell. The first active BWP and/or the current active BWP may have the different IDs. The location and/or bandwidth of the first active BWP may not overlap (e.g., fully and/or partially in frequency domain) with the location and/or bandwidth of the currentactive BWP. The wireless device may switch the active BWP of the source cell. The wireless device may switch from the current active BWP to a third BWP configured on the source cell. The third BWP may be similarto (e.g., matched to/overlapped with) the first active BWP ofthe target cell.

The wireless device may not be capable of simultaneous connection to the source cell and/or the target cell based on the existing configurations. The wireless device may determine that the first active BWP of the target cell is similar to (e.g., matched to/overlapped with) the current active BWP of the source cell. The first active BWP and/or the current active BWP may have the same ID. The location and/or bandwidth of the first active BWP may overlap (e.g., fully and/orpartially in frequency domain) with the location and/or bandwidth of the currentactive BWP. The wireless device may switch the active BWP ofthe source cell. The wireless device may switch from the current active BWP to a third BWP configured on the source cell. The third BWP may be different from (e.g., not matched to/not overlapped with) the first active BWP of the target cell. The third BWP may be an initial BWP, default BWP, a BWP with lowest index, a BWP with smallest bandwidth, a BWP with largest bandwidth, and/or a BWP with the same SCS as the first active BWP. The third BWP may be different from the first active BWP. The wireless device may determine that the first active BWP of the target cell is different from (e.g., not matched to/not overlapped with) the current active BWP ofthe source cell. The first active BWP and/or the current active BWP may have different IDs. The location and/or bandwidth of the first active BWP may not overlap (e.g., fully and/or partially in frequency domain) with the location and/or bandwidth of the currentactive BWP. The wireless device may not switch the active BWP of the source cell.

The wireless devicemay switch from the (currently) active BWP to the third BWP on the source cell, for example, based on the third BWP being the new active BWP and/or receiving the handover command. The third BWP may or may not have the same BWP-ID as the first active BWP-ID, for example, based on the wireless device capability. The location and/or bandwidth ofthe third BWP may ormay not overlap (e.g., fully and/or partially) with the location and/or bandwidth of the first active BWP, for example, based on the wireless device capability. The wireless device may send/transmit an uplink data comprising an indication of the BWP switching to the source base station (e.g., via the third BWP). The wireless device may send/transmit to the target base station a preamble and/or one or more transport blocks (e.g., PUSCH transmission) via the first active UL BWP of the target cell. The wireless device may receive, from the target base station and via the first active DLBWP on the target cell, one or more DCI. The one or more downlink information may comprise a RAR comprising a TA and/or one or more ULgrants for the wireless device. The one or more DCI may be scrambled by a radio network identifier of the wireless device in/within the targetcell(e.g., a newC-RNTI). The wireless devicemay determine the radio network identifier from the handover command.

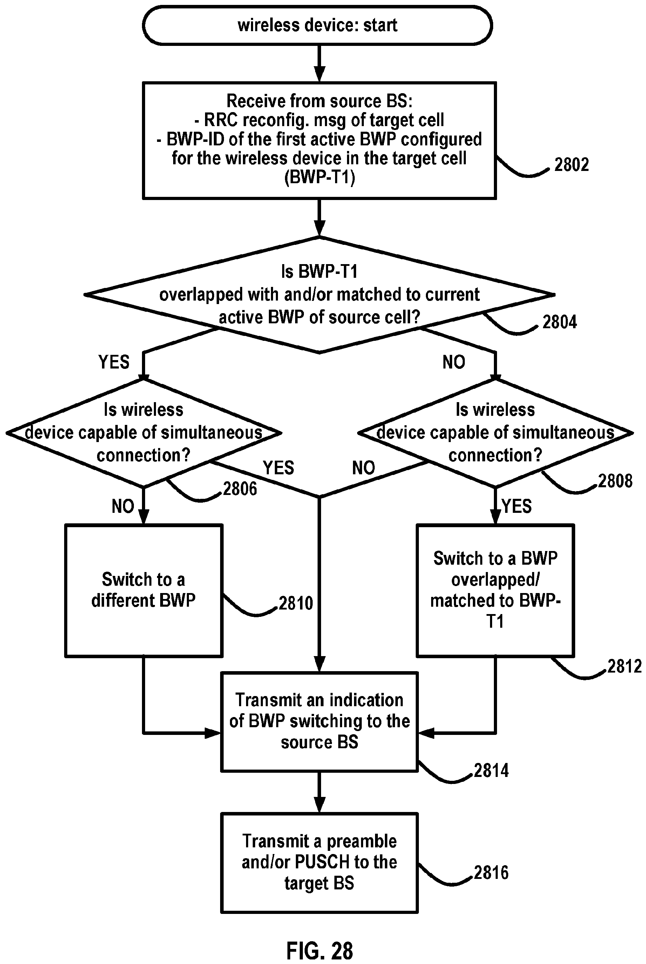

FIG. 28 shows an example of a procedure fora wireless device during handover using simultaneous connectivity. A wireless device may receive, from a source base station, configuration information for a target base station. The wireless may determine whether to switch to active BWPs ofthe source base station that align and/or overlap with active BWPs of the target base station, for example, based on the wireless device configuration information, wireless device capability information, and/or configuration information received about the target base station (e.g., handover configuration information).

In block2802, the wireless device may receive from a source base station an RRC reconfiguration message of a target cell and/or a BWP-ID of the first active BWP configured for the wireless device in the target cell (e.g., BWP-T1). In block 2804, the wireless devicemay determine whether the targetBWP (e.g., BWP-T1) overlapped with and/or matched to current active BWP of source cell. If yes in block 2804, in block2806 the wireless device may determine whether the wireless device capable of simultaneous connection. If no in block 2806, in block 2810 the wireless device may switch to a different BWP. In block 2816, the wireless device may transmit a preamble and/or PUSCH message to the target base station. If yes in block 2806, the wireless device may continue in block2814. If no in block2804, in block2808 the wireless device may determine whether the wireless device capable of simultaneous connection. If no in block2808, the wireless device may continue in block2814. If yes in block 2808, in block 2812 the wireless device may switch to a BWP overlapped/matched to the target BWP (e.g., BWP-T1) and continuein block2814, describedabove.

The wireless device may performa simultaneous connectivity procedure (e.g., MBBhandover/SCGchange and/or DC-based handover/SCGchange). The handover may be used to manage the active BWP on the source cell, for example, basedon the wireless device capability and/or the first active BWP ofthe target cell.

A method may comprise receiving from a first base station by a second base station one or more messages comprising: a capability indicator indicating whether a wireless device, served by a first cell of the first base station, is capable of simultaneous connection (e.g., transmission and/or reception) with the first base station and/or the second base station. First configuration parameters of one or more first BWPs of the first cell may indicate a first active BWP. The second base station may determine a second active BWP of a second cell ofthe second base station, for example, based on the indicator and/orthe first active BWP. The second base station may send/transmit to the first base station an indication ofthe second active BWP.

The first configuration parameters may comprise a first BWP identifier indicating the first active BWP. Determining the second active BWP may comprise selecting, from among a plurality of second BWPs of the second cell, the second active BWP having a second BWP identifier similar to the first BWP identifier. The indicator may indicate that the wireless device is capable ofthe simultaneous connection., Determining the second active BWP may comprise selecting, from among the plurality of second BWPs of the second cell, the second active BWP having the second BWP identifier different from the first BWP identifier. The indicator may indicate that the wireless device is not capable ofthe simultaneous connection.

The method may comprise determining a first location and/or a first bandwidth of the first active BWP based on the first configuration parameters. The determining the second active BWP may comprise selecting, from among a plurality of second BWPs of the second cell The second active BWP may have a second location and/or a second bandwidth similar to the first location. The first bandwidth of the first active BWP may be based on the indicator indicating that the wireless device is capable ofthe simultaneous connection. The determining the second active BWP may comprise selecting, from among the plurality of second BWPs of the second cell, the second active BWP having the second location and/or the second bandwidth different from the first location and/or the first bandwidth of the first active BWP. The indicator may indicate that the wireless device is not capable of the simultaneous connection.

The second location and/or the second bandwidth being similar to the first location and/or the first bandwidth of the first active BWP may comprise the second location and/or the second bandwidth overlapping at least in part in a frequency domain with the first location and/or the first bandwidth of the first active BWP. The second location and/or the second bandwidth being different from the first location and/or the first bandwidth of the first active BWP may comprise the second location and/or the second bandwidth not overlapping in a frequency domain with the first location and/or the first bandwidth of the first active BWP. The sending/transmitting the indication ofthe secondactive BWP may comprise sending/transmitting second configuration parameters of one or more second BWPs of the second cell. The second active BWP may comprise a first active downlink BWP and/or a first active uplink BWP.

The method may comprise receiving, by the second base station from the wireless device via the second active BWP, a preamble and/ora transport block. The method may comprise sending/transmitting, by the second base station to thewireless device via the second active BWP, a DCI. The DCI may comprise a timing advanced value and/or at least one uplink grant, and/or may be scrambled by a radio network identifier ofthe wireless device. The method may comprise sending/transmitting by the first base station to the wireless device a message comprising a configuration parameter that indicates a release of a BWP inactivity timer. The BWP inactivity timer may trigger a switching of the first active BWP.

A method may comprise configuring, by a first base station, a wireless device served by a first cell of the first base station with a first active BWP. The first base station may receive from the wireless device at least one measurement report of a second cell of a second base station. The first base station may receive from the second base station, an indication of a second active BWP for the wireless device. The second active BWP may be associated with the second cell ofthe second base station. The first base station may determine a wireless device capability based on whether the wireless device is capable of simultaneous connection to the first base station and/or the second base station. The first base stationmay send/transmit, to the wireless device, a message to switch the first active BWP, for example, based on a configuration of the second active BWP and/orthe wireless device capability.

A first base station may configure a wireless device served by a first cell with a first BWP as an active BWP of the first cell. A first base station may receive from the wireless device, at least one measurement report of a second cell of a second base station. The first base station may receive from the second base station, an indication indicating a second BWP as a second active BWP for the wireless device. The second active BWP may be associated with the second cell ofthe second base station. The first base station may determine a wireless device capability, for example, based on whether the wireless device is capable of simultaneous connection to the first base station and/or the second base station. The first base station may send/transmit, to the wireless device, a message comprising an indicator indicating BWP switching of the first BWP to a third BWP as the active BWP. The BWP switching may be determined based on the second active BWP and/or the wireless device capability.

The first active BWP may correspond to afirst BWP identifier. The indication of the second active BWP for the wireless device may comprise a second BWP identifier. The determining the wireless device capability may comprise determining that the wireless device is capable of simultaneous connection. Sending/transmitting the message to switch BWPs may be based on a determination that the second BWP identifier is different from a first BWP identifier of the first active BWP.

Determining the wireless device capability may comprise determining that the wireless device is not capable of simultaneous connection. The sending/transmitting the message to switch BWPs may be based on a determination that the second BWP identifier is similar to a first BWP identifierofthe first active BWP.

The first active BWP may correspond to a first location, and/or a first bandwidth. The second active BWP may correspond to a second location and/or a second bandwidth. The determining the wireless device capability may comprise determining that the wireless device is capable of simultaneous connection. The sending/transmitting the message to switch BWPs may be based on a determination that the second location and/or the second bandwidth of the second active BWP do not overlap the first location and/or the first bandwidth of the first active BWP.

Determining the wireless device capability may comprise determining that the wireless device is not capable of simultaneous connection. The sending/transmitting the message to switch BWPs may be based on a determination that the second location and/or the second bandwidth of the second active BWP overlap at least in part the first location and/or the first bandwidth of the first active BWP.

The message may comprise configuration parameters that indicate: switching from the first active BWP to a third BWP of the first cell, and/or stopping (or suspending) a BWP inactivity timer. The message may be DCI indicating a downlink as signment scheduling a downlink transmission on a third BWP of the first cell. The message may be DCI indicating an uplink grant scheduling an uplink transmission on a third BWP of the first cell.

A wireless device may receive from a first base station one ormore messages indicating a first active BWP of a first cell of the first base station. The wireless device may send/transmit to the first base station at least one measurement report of a second cell of a secondbase station. The wireless device may receive from the first base station one or more second mes sages indicating an indication of a second active BWP for the wireless device. The second active BWP may be associated with the second cellofthe second base station. The wireless device may switch the first active BWP based on the second active BWP, and/or send/transmit to the first base station an indication ofthe switching.

Awireless devicemay receive from a first base station one or more messages indicating: a first active BWP of a first cell of the first base station, and/or configuration parameters of at least one measurement report of a second cell of a second base station. The wireless device may send/transmit, to the first base station, the at least one measurement report ofthe second cell of the secondbase station. The wireless device may receive from the first base station one or more second messages indicating an indication of a second active BWP for the wireless device. The second active BWP may be associated with the second cell of the second base station. The wireless device may switch the first active BWP based on the second active BWP, and/or send/transmit to the first base station an indication of the switching.

The wireless device may be capable of simultaneous connection to the first base station and/or the second base station. The switching the first active BWP based on the second active BWP may comprise switching the first active BWP, for example, based on a determination that a second BWP identifier received in the indication of the second active BWP is different from a first BWP identifier of the first active BWP. The switching the first active BWP based on the second active BWP may comprise switching the first active BWP, for example, based on a determination that a second location and/or a second bandwidth ofthe second active BWP does not overlap with a first location and/or a first bandwidth of the first active BWP.

The wireless devicemay not be capable of simultaneous connection to the first base station and/or the second base station. The switching the first active BWP based on the second active BWP may comprise switching the first active BWP, for example, based on a determination that a second BWP identifier received in the indication ofthe second active BWP is similar to a first BWP identifier ofthe first active BWP. The switching the first active BWP based on the second active BWP may comprise switching the first active BWP, for example, based on a determination that a second location and/or a second bandwidth of the second active BWP overlaps with a first location and/or a first bandwidthofthe first active BWP.

The wireless device may switch from the first active BWP to a third active BWP of the first cell, for example, based on the second active BWP of the second cell. The wireless device may send/transmit to the first base station via the third active BWP an indication of the switching. The wireless device may send/transmit, to the second base station and via the second active BWP, a preamble and/or one or more transport blocks. The wireless device may receive, from the second base station via the second active BWP, a response to the preamble and/or the one or more transport blocks. The response may comprise a timing advance value, comprise at least one uplink grant, and/or be scrambled by a radio network identifier ofthe wireless device.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.
Clause 1. A method comprising receiving, by a wireless device from a first base station, one or more first messages comprising configuration parameters of one or more bandwidth parts (BWPs) of a first cell associated with the first base station.
Clause 2. The method of clause 1, further comprising activating, as an active BWP, a first BWP of the one or more BWPs forthe first cell;
Clause 3. The method of any one of clauses 1 - 2, further comprising receiving, from the first base station an indication of a handover from the first cell to a second cell associated with a second base station, and an indication of a second BWP, as a second active BWP, associated with the second cell.
Clause 4. The method of any one of clauses 1 - 3, further comprising activating, based on the second BWP overlapping with the active BWP ofthe first cell, the second BWP ofthe secondcell; and
Clause 5. The method of any one of clauses 1 - 4, further comprising sending using the second BWP, an indication of the handover of the wireless device to the second cell.
Clause 6. The method of any one of clauses 1 - 5, wherein the first cell and the second cell are configured to operate in a same frequency band.
Clause 7. The method of any one of clauses 1 - 6, wherein the second BWP fully overlaps with the active BWP.
Clause 8. The method of any one of clauses 1 - 7, further comprising sending, to the first base station, an indication of a capability of parallel connection using a frequency band combination comprising frequencies ofthe first cell and the secondcell.
Clause 9. The method of any one of clauses 1 - 8, further comprising deactivating, based on performing the handover, the active BWP of the first cell.
Clause 10. The method of any one of clauses 1 - 9, wherein the activating the first BWP is based on receiving, from the first base station, a radio resource control (RRC) message indicating an identifier ofthe first BWP.
Clause 11. The method of any one of clauses 1 - 10, wherein a second identifier of the second BWP is a same identifier as a first identifier of the active BWP ofthe first cell.
Clause 12. A wireless device comprising one or more processors; and memory storing instructions that, when executed, cause the computing deviceto perform the method of any one of clauses 1 - 11.
Clause 13. A system comprising: a wireless device configured to perform the method of any one of clauses 1 - 11; and a base station configured to send the indication of a handover of the wireless device.
Clause 14. A computer-readable medium storing instructions that, when executed, cause performance of the method of any one of clauses 1 - 11.
Clause 15. A method comprising receiving, from a first base station by a second base station an indication of a handover of a wireless device from the first base station to the second base station, an indication of a capability, of the wireless device, for parallel communications with the first base station, via a first cell, and the second base station, via a second cell; and an indication that a first bandwidth part (BWP) of the first cell is an active BWP for the wireless device;
Clause 16. The method of clause 15, further comprising determining, by the second base station and based on the active BWP and the indication of the capability of the wireless device, a second BWP of the second cell; and
Clause 17. The method of any one of clauses 15- 16, further comprising sending, by the second base station to the first base station, an indication for the wireless device to activate the second BWP; and
Clause 18. The method of any one of clauses 15- 17, further comprising sending, using the second BWP, an indication of the handover of the wireless device via the second cell.
Clause 19. The method of any one of clauses 15- 18, wherein the receiving, from the first base station by the second base station, further comprises receiving configuration parameters, for each of one or more BWPs, that indicate at least one frequency domain location; at least one bandwidth; at least one subcarrier spacing; at least one identifier; and/or at least one channel configuration for an uplink or a downlink.
Clause 20. The method of any one of clauses 15- 19 further comprising receiving, from the first base station, an indication of a capability, of the wireless device, of parallel connection using a frequency band combination comprising frequencies ofthe first cell and the second cell.
Clause 21. The method of any one of clauses 15- 20, wherein the indication for the wireless device to activate the second BWP comprises an identifier ofthe second BWP.
Clause 22. The method of any one of clauses 15- 21, wherein the second BWP fully overlaps with the active BWP.
Clause23. The method ofany one of clauses 15- 22,wherein a frequency domain location of the second BWPis a same frequency domain location of the active BWP.
Clause 24. The method of any one of clauses 15 - 23, wherein a second subcarrier spacing of the second BWP is a same subcarrier spacing of the active BWP.
Clause 25. A base station comprising one or more processors; and memory storing instructions that, when executed, cause the base station to perform the method of any one of clauses 15- 24.
Clause26. A system comprising: abase station configured to perform the method of any one of clauses 15-24; and a wireless device configured to receive the indication of a hand over of the wireless device.
Clause 27. A computer-readable medium storing instructions that, when executed, cause performance of the method of any one of clauses 15- 24.
Clause 28. A method comprising sending, by a first base station to a wireless device, one or more first messages comprising configuration parameters of one or more bandwidth parts (BWPs) of a first cell ofthe first base station;
Clause 29. The method of clause 28, further comprising sending, to a second base station: an indication of a handover of the wireless device from the first base station to the second base station; a capability indicator, of the wireless device, indicating a capability of parallel connections; and a first indication that a first BWP of the first cell is an active BWP for the wireless device;
Clause 30. The method of any one of clauses 28- 29, receiving, from the second base station, a second indication of a second BWP to be activated by the wireless device; and
Clause 31. The method of any one of clauses 28- 30, sending, to the wireless device, one ormore second messages indicating: an indication of the handover from the first cell to a second cell of the second base station; and an indication of the second BWP of the second cell.
Clause 32. The method of any one of clauses 28- 31, further comprising configuring the wireless device to activate, as the active BWP of the wireless device, the first BWP of the one or more BWPs for the first cell.
Clause 33. The method of any one of clauses 28- 32, further comprising: determining that the second BWP does not overlap with the first BWP; and
Clause 34. The methodof any one of clauses 28- 33, further comprising sending a message, to the wireless device, to switch the active BWP to a third BWP that overlaps with the second BWP.
Clause 35. The method of any one of clauses 28- 34, further comprising: determining that bandwidth part identifier (BWP-ID) associated with the second BWP is different than a BWP-ID associated with the first BWP; and
Clause 36. The methodof any one ofclauses 28- 35, further comprising sending a message, to the wireless device, to switch the active BWP to a third BWP that is associated with a same BWP-ID as the second BWP.
Clause 37. The method of any one of clauses 28- 36, further comprising receiving, from the wireless device, a message indicating a switching of the active BWP to a third BWP thatoverlaps the second BWP.
Clause 38. The method of any one of clauses 28- 37, wherein the capability indicator indicates that the wireless device is capable of simultaneous connection to the first cell and the second cell.
Clause 39. A base station comprising: one or more processors; and memory storing instructions that, when executed, cause the base station to perform the method of any one of clauses 28 - 38.
Clause 40. A system comprising: a base station configured to perform the method of any one of clauses 28- 38; and a wireless configuredto receive the indication of a handover.
Clause 41. A computer-readable medium storing instructions that, when executed, cause performance of the method of any one of clauses 28 - 38.
Clause 42. A method comprising: receiving, by a wireless device from a first base station, one or more first messages comprising configuration parameters of one or more bandwidth parts (BWPs) of a first cell of the first base station;
Clause 43. The method of clause 42, further comprising activating afirst BWP of the one or more BWPs for the first cell;
Clause 44. The method of any one of clauses 42- 43, further comprising receiving, from the first base station, one or more second messages indicating: a handover from the first cell to a second cell of a second base station; and a second BWP as an active BWP of the second cell;
Clause 45. The method of any one of clauses 42- 44, further comprising activating, based on the second BWP overlapping with the first BWP, the second BWP of the second cell; and
Clause 46. The method of any one of clauses 42-45, further comprising performing the handover to the second cell using the second BWP.
Clause 47. The method of any one of clauses 42- 46, wherein the first cell and the second cell operate in a same frequency band.
Clause 48. The method of any one of clauses 42- 47, wherein the second BWP fully overlaps with the first BWP.
Clause 49. The method of any one of clauses 42- 48, wherein a first frequency range ofthe first BWP comprises a second frequency range of the second BWP.
Clause 50. The method of any one of clauses 42- 49, wherein the first BWP and the second BWP are uplink BWPs.
Clause 51. The method of any one of clauses 42- 50, wherein the first BWP and the second BWP are downlink BWPs.
Clause 52. The method of any one of clauses 42- 51, further comprising receiving, from the first base station, a radio resource control (RRC) message indicating an identifier of the first BWP to be activated for the first cell.
Clause 53. The method of any one of clauses 42- 52, wherein: the first cell is a special cell of a cell group; and
Clause 54. The method of any one ofclauses 42- 53, wherein the first BWP is activated in response to perfoming an RRC configuration or reconfiguration.
Clause 55. The method of any one of clauses 42- 54, wherein the first cell is a secondary cell of a cell group; and
Clause 56. The method of any one of clauses 42- 55, wherein the first BWP is activated in response to an activation of the first cell.
Clause 57. The method of any one of clauses 42- 56, further comprising receiving, from the first base station, a physical downlink control channel (PDCCH) indicating a downlink assignment or an uplink grant for the first BWP of the first cell.
Clause 58. The method of any one of clauses 42- 57, further comprising: determining an expiration of a BWP inactivity timer of a third BWP of the first cell; wherein the third BWP is activated; and
Clause 59. The method of any one of clauses 42- 58, further comprising, in response to the determining: deactivating the third BWP; and
Clause 60. The method of any one of clauses 42- 59, further comprising activating the first BWP.
Clause 61. The method of any one of clauses 42- 60, further comprising: initiating a random access procedure on a third BWP of the first cell, wherein the third BWP is activated;
Clause 62. The method of any one of clauses 42- 61, further comprising determining that random access channel (RACH) resources are not configured for the third BWP; and
Clause 63. The method of any one of clauses 42- 62, further comprising in response to the determining: deactivating the third BWP; and
Clause 64. The method of any one of clauses 42- 63, further comprising activating the first BWP.
Clause 65. The method of any one of clauses 42- 64, wherein the configuration parameters, for each of the one ormore BWPs, indicate: a frequency domain location; a bandwidth; a subcarrier spacing; an identifier; and/or an uplink or downlink channel configuration.
Clause 66. The method of any one of clauses 42- 65, wherein the one or more second messages comprise second configuration parameters of one ormore second BWPs of the second cell comprising the second BWP, wherein the second configuration parameters, for each of the one or more second BWPs, indicate: a second frequency domain location; a second bandwidth; a second subcarrier spacing; a second identifier; and/or a second uplink or downlink channel configuration.
Clause 67. The method of any one of clauses 42- 66, wherein the one or more second messages indicate an identifier of the second BWP to be activated for the second cell.
Clause 68. The method of any one of clauses 42- 67, wherein a second bandwidth of the second BWP is confined within the bandwidth of the first BWP.
Clause 69. The method of any one of clauses 42- 68, wherein asecond frequency domain location of the second BWP is same as a first frequency domain location of the first BWP.
Clause 70. The method of any one of clauses 42- 69, wherein a second subcarrier spacing of the second BWP is same as a first subcarrier spacing of the first BWP.
Clause 71. The method ofany one of clauses 42- 70, wherein a second identifier of the second BWPis same asa first identifier of the first BWP.
Clause 72. The method of any one of clauses 42- 71, wherein the performing the handover comprises transmitting, to the second base station, an RRC connection reconfiguration complete message.
Clause 73. The method of any one of clauses 42- 72, further comprising not performing the handover to the second cell in response to determining that the second BWP does not overlap with the first BWP.
Clause 74. The method of any one of clauses 42- 73, wherein the wireless device is capable of simultaneous connection to the first cell and the second cell.
Clause 75. A wireless device comprising: one or more processors; and memory storing instructions that, when executed, cause the wireless device to perform the method of any one of clauses 42- 74.
Clause 76. A system comprising: a wireless device configured to perform the method of any one of clauses 42-74; and a base station configured to send the indication of a handover.
Clause 77. A computer-readable medium storing instructions that, when executed, cause performance of the method of any one of clauses 42- 74.
Clause 78. A method comprising: receiving, from a first base station by a second base station: a capability indicator indicating that a wireless device, connected to a first cell of the first base station, is capable of a parallel connection to a second cell of the second base station; and an indication that a first bandwidth part (BWP) of the first cell is an active BWP forthe wireless device;
Clause 79. The method ofclause 78, further comprising determining, by the secondbase station and based on the capability indicator and the first BWP, a second BWP of the second cell to be activated by the wireless device; and
Clause 80. The method of any one of clauses 78- 79, further comprising transmitting, by the secondbase station to the first base station, an indication of the second BWP to be activated by thewireless device.
Clause 81. The method of any one of clauses 78- 80, further comprising: receiving, from a first base station by a second base station, one ormore messages comprising configuration parameters of one or more BWPs of the first cell comprising the first BWP; and
Clause 82. The method of any one of clauses 78- 81, further comprising determining a first location and a first bandwidth of the first BWP based on the configuration parameters.
Clause 83. The method of any one of clauses 78- 82, wherein the determining the second active BWP comprises selecting, from among one or more second BWPs of the second cell, the second BWP having a same second location and a same second bandwidth same as the first location and the first bandwidth of the first BWP, in response to the capability indicator indicating that the wireless device is capable of the parallel connection.
Clause 84. The method of any one of clauses 78- 83, wherein the transmitting the indication of the second BWP further comprises transmitting second configuration parameters of the one or more second BWPs of the second cell.
Clause 85. The method of any one of clauses 78- 84, wherein the secondBWP is a downlinkBWP.
Clause 86. The method of any one of clauses 78- 85, wherein the secondBWP is an uplinkBWP.
Clause 87. The method of any one of clauses 78- 86 wherein the second BWP comprises a downlinkBWP and an uplinkBWP.
Clause 88. The method of any one ofclauses 78- 87, wherein the second BWP fully overlaps with the first BWP.
Clause 89. The method of any one ofclauses 78-88, further comprising transmitting by the firstbase station to the wireless device a message indicating a release of a BWP inactivity timer, wherein the BWP inactivity timer triggers a switching ofthe first BWP on the first cell.
Clause 90. A base station comprising: one or more processors; and memory storing instructions that, when executed, cause the base station to perform the method of any one of clauses 78- 89.
Clause 91. A systemcomprising: a base station configured to perform the method of any one of clauses 78-89; and a wireless device configuredto receive the indication of a handover.
Clause 92. A computer-readable medium storing instructions that, when executed, cause performance of the method of any one of clauses 78- 89.

A wireless device may performa method comprisingmultiple operations. The wireless device may receive, from a first base station, one or more first messages comprising configuration parameters of one or more bandwidth parts (BWPs) of a first cell associated with the first base station. The wireless device may activate, as an active BWP, a first BWP of the one or more BWPs for the first cell. The wireless device may receive, from the first base station an indication of a handover fromthe first cell to a second cell as sociated with a second base station, and/or an indication of a secondBWP, as a second active BWP, associated with the second cell. The wireless device may activate, based on the second BWP overlapping with the active BWP of the first cell, the second BWP of the second cell. The wireless device may send usingthe second BWP, an indication ofthe handover of the wireless device to the second cell.

The wireless device may also perform one or more additional operations. The first cell and the second cell may be configured to operate in a same frequency band. The second BWP may fully overlap with the active BWP. The wireless device may send, to the first base station, an indication of a capability of parallel connection using a frequency band combination comprising frequencies ofthe first cell and the second cell. The wireless device may deactivate, based on performing the handover, the active BWP ofthe first cell. The activating the first BWP may be based on receiving, fromthe first base station, a radio resource control (RRC) message indicating an identifier ofthe first BWP. A second identifier ofthe secondBWP may be a same identifier as a first identifier of the active BWP of the first cell.

Systems, devices and media may be configured with the method. A wireless device may comprise one or more processors; and memory storing instructions that, when executed by the one ormore processors, cause the wireless device to perform the described method, additional operations and/or include the additional elements. A system may comprise a wireless device configured to perform the described method, additional operations and/or include the additional elements; and a base station configured to send the indication ofthe handover. A computer-readable medium may store instructions that, when executed, cause performance of the described method, additional operations and/or include the additional elements.

A second base station may perform a method comprising multiple operations. The second base station may receive, froma first base station: an indication of a handover of a wireless devicefromthe first base station to the second base station, an indication of a capability, ofthe wireless device, for parallel communications with the first base station, via a first cell, and the second base station, via a second cell, and/or an indication that a first bandwidth part (BWP) of the first cell is an active BWP for the wireless device. The second base station may determine, by the second base station and based on the active BWP and the indication of the capability of the wireless device, a secondBWP ofthe second cell. The second base station may send, to the first base station, an indication for the wireless device to activate the secondBWP. The secondbase stationmay send, usingthe second BWP, an indication of the handover ofthe wireless device via the second cell.

The secondbase stationmay also perform one or more additional operations. The secondbase stationmay receive configuration parameters, for each of one ormore BWPs, that indicate: at least one frequency domain location, at least one bandwidth, at least one subcarrier spacing, at least one identifier, and/or at least one channel configuration for an uplink or a downlink. The second base station may receive an indicator of radio frequency chain configuration. The secondbase stationmay receive, fromthe first base station, an indication of a capability, of the wireless device, of parallel connection using a frequency band combination comprisingfrequencies ofthe first cell and the second cell. The second BWP may fully overlap with the active BWP. A frequency domain location ofthe second BWP may be a same frequency domain location ofthe active BWP. A second subcarrier spacingofthe secondBWP may be a same subcarrier spacing ofthe active BWP.

Systems, devices and media may be configured with the method. A secondbase station may comprise one or more processors; and memory storing instructions that, when executed by the one or more processors, cause the second base station to perform the described method, additional operations and/or include the additional elements. A system may comprise a second base station configured to perform the described method, additional operations and/or include the additional elements; anda wireless device configuredto receive the indication ofthe handover. A computer-readable medium may store instructions that, when executed, cause performance of the described method, additional operations and/or include the additional elements.

A first base station may performa method comprising multiple operations. The first base station may send, to a wireless device, one ormore first messages comprising configuration parameters of one ormore bandwidth parts (BWPs) of a first cell of the first base station. The firstbase station may send, to a second base station: an indication of a handover of the wireless device fromthe first base station to the second base station, a capability indicator, ofthe wireless device, indicating a capability of parallel connections, anda first indication that a first BWP of the first cell is an active BWP for the wireless device. The first base station may receive, fromthe secondbase station, a second indication of a second BWP to be activated by the wireless device. The first base station may send, to the wireless device, one ormore second messages indicating: an indication ofthe handover from the first cell to a second cell ofthe secondbase station, and an indication of the second BWP ofthe secondcell.

The first base station may also perform one or more additional operations. The first base station may configure the wireless device to activate, as the active BWP ofthe wireless device, the first BWP ofthe one ormore BWPs for the first cell. The first base station may determine that the second BWP does not overlap with the first BWP. The first base station may send a message, to the wireless device, to switch the active BWP to a third BWP that overlaps with the second BWP. The first base station may determine that bandwidth part identifier (BWP-ID) associated with the secondBWP is different than a BWP-ID as sociated with the first BWP. The first base station may send a message, to the wireless device, to switch the active BWP to a third BWP that is associated with a same BWP-ID as the second BWP. The first base station may receive, from the wireless device, a message indicating a switching ofthe active BWP to a third BWP that overlaps the second BWP. The capability indicator indicates that the wireless device is capable of simultaneous connection to the first cell and the second cell.

Systems, devices and media may be configured with the method. A first base stationmay comprise one or more processors; and memory storing instructions that, when executed by the one or more processors, cause the first base station to perform the described method, additional operations and/or include the additional elements. A system may comprise a first base station configured to perform the described method, additional operations and/or include the additional elements; anda wireless device configuredto receive the indication ofthe handover. A computer-readable medium may store instructions that, when executed, cause performance of the described method, additional operations and/or include the additional elements.

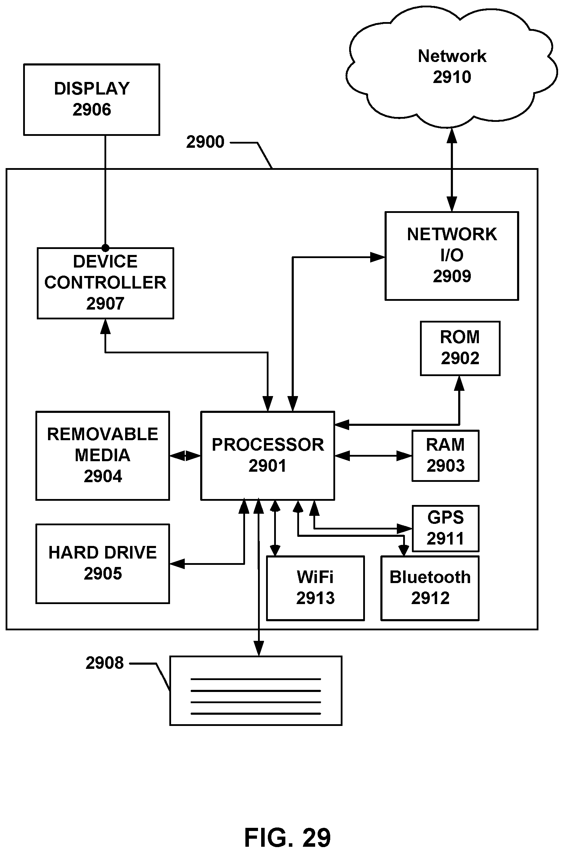

FIG. 29 shows example elements of a computing device thatmay be used to implement any ofthe various devices describedherein, including, e.g., the base station 120A and/or 120B, the wireless device 110 (e.g., 110A and/or 110B), or any other base station, wireless device, or computing device described herein. The computing device 2900 may include one or more processors 2901, which may execute instructions stored in the random access memory (RAM) 2903, the removable media 2904 (suchas aUniversal SerialBus (USB) drive, compactdisk (CD) or digital versatile disk (DVD), or floppy disk drive), or any other desired storage medium. Instructions may also be stored in an attached (or internal) hard drive 2905. The computing device 2900 may also include a security processor (not shown), which may execute instructions of one or more computer programs to monitor the processes executing on the processor 2901 and any process thatrequests access to any hardware and/or software components of the computing device 2900 (e.g., ROM 2902, RAM 2903, the removable media 2904, the hard drive 2905, the device controller 2907, a network interface 2909, a GPS 2911, a Bluetooth interface 2912, a WiFi interface 2913, etc.). The computing device 2900 may include one or more output devices, such as the display 2906 (e.g., a screen, a display device, a monitor, a television, etc.), and may include one or more output device controllers 2907, such as a video processor. There may also be one or more user input devices 2908, such as a remote control, keyboard, mouse, touch screen, microphone, etc. The computing device 2900 may also include one or more network interfaces, such as a network interface 2909, which may be a wired interface, a wireless interface, or a combination of the two. The network interface 2909 may provide an interface for the computing device 2900 to communicate with a network 2910 (e.g., a RAN, or any other network). The network interface 2909 may include a modem (e.g., a cable modem), and the external network 2910 may include communication links, an external network, an in-home network, a provider's wireless, coaxial, fiber, or hybrid fiber/coaxial distribution system (e.g., a DOCSIS network), or any other desired network. Additionally, the computing device 2900 may include a location-detecting device, such as a global positioning system (GPS) microprocessor 2911, which may be configured to receive and process global positioning signals and determine, with possible assistance from an external server and antenna, a geographic position ofthe computing device 2900.

The example in FIG. 29 may be a hardware configuration, although the components shownmay be implemented as software as well. Modifications may be made to add, remove, combine, divide, etc. components of the computing device 2900 as desired. Additionally, the components may be implemented using basic computing devices and components, and the same components (e.g., processor 2901, ROM storage 2902, display 2906, etc.) may be used to implement any of the other computing devices and components described herein. For example, the various components describedhereinmay be implemented usingcomputingdevices having components such as a processor executing computer-executable instructions stored on a computer-readable medium, as shown in FIG. 29. Some or all of the entities described herein may be software based, and may co-exist in a common physical platform (e.g., a requesting entity may be a separate software process and program from a dependent entity, both of which may be executed as software on a common computing device).

The disclosed mechanisms herein may be performed if certain criteria are met, for example, in a wireless device, a base station, a radio environment, a network, a combination of the above, and/or the like. Example criteria may be based on, for example, wireless device and/or network node configurations, traffic load, initial system set up, packet sizes, traffic characteristics, a combination ofthe above, and/or the like. If the one or more criteria are met, various examples may be used. It may be possible to implement examples that selectively implement discbsed protocols.

A base station may communicate with a mix of wireless devices. Wireless devices and/or base stations may support multiple technologies, and/or multiple releases ofthe same technology. Wireless devices may have some specific capability (ies) depending on wireless device category and/or capability (ies). A base station may comprise multiple sectors. A base station communicating with a plurality of wireless devices may refer to base station communicating with a subset ofthe total wireless devices in a coverage area. Wireless devices referred to herein may correspond to a plurality ofwireless devices of a particular LTE or 5G release with a given capability and in a given sector of a base station. A plurality of wireless devices may refer to a selected plurality of wireless devices, and/or a subset of total wireless devices in a coverage area. Such devices may operate, function, and/or perform based on or according to drawings and/or descriptions herein, and/or the like. There may be a plurality of base stations or a plurality of wireless devices in a coverage area that may not comply with the disclosed methods, for example, because those wireless devices and/or base stations perform based on older releases of LTE or 5G technology.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one ormore features described herein, and such data structures are contemplated within the scope of computer executable instructions and computer-usable data described herein.

Many ofthe elements in examples may be implemented as modules. A module may be an isolatable elementthat performs a defined function and has a defined interface to other elements. The modules may be implemented in hardware, software in combination with hardware, firmware, wetware (i.e., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or Lab VIEW MathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and complexprogrammable logic devices (CPLDs). Computers, microcontrollers, and microprocessors may be programmed using languages such as assembly, C, C++ or the like. FPGAs, ASICs, and CPLDs may be programmed using hardware description languages (HDL), such as VHSIC hardware description language (VHDL) or Verilog, which may configure connections between internal hardware modules with lesserfunctionality on a programmable device. The above-mentioned technologies may be us ed in combination to achieve the result of a functional module.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A networkmay comprise any wireless technology, includingbutnot limited to, cellular, wireless, WiFi, 4G 5G, any generation of 3GPP or other cellular standard or recommendation, wireless local area networks, wireless personal area networks, wireless ad hoc networks, wireless metropolitan area networks, wireless wide area networks, global area networks, space networks, and any other network using wireless communications. Any device (e.g., a wireless device, a base station, or any other device) or combination of devices may be used to perform any combination of one or more of steps described herein, including, for example, any complementary step or steps of one ormore ofthe above steps.

Although examples are described above, features and/or steps of those examples may be combined, divided, omitted, rearranged, revised, and/or augmented in any desired manner. Various alterations, modifications, and improvements will readily occurto those skilled in the art. Such alterations, modifications, and improvements are intendedto be part ofthis description, thoughnot expressly statedherein, and are intended to be within the spirit and scope of the descriptions herein. Accordingly, the foregoing description is by way of example only, and is not limiting.

## Claims

1. A method comprising:
receiving, by a wireless device from a first base station, one or more first mes sages comprising configuration parameters of one or more bandwidth parts (BWPs) of a first cell associated with the first base station;
activating, as an active BWP, a first BWP ofthe one or more BWPs for the first cell;
receiving, from the first base station:
an indication ofahandoverfromthe first cell to a secondcell associated with a secondbase station; and
an indication of a second BWP, as a second active BWP, associated with the second cell;
activating, based on the second BWP overlapping with the active BWP ofthe first cell, the second BWP ofthe second cell; and
sending, usingthe second BWP, an indicationofthe handover of the wireless deviceto the secondcell.

2. The method of any one ofthe preceding claims, wherein the first cell and the second cell are configured to operate in a same frequency band.

3. The method of any one ofthe preceding claims, wherein the second BWP fully overlaps with the active BWP.

4. The method of any one of the preceding claims, further comprising sending, to the first base station, an indication of a capability of parallel connection using a frequency band combination comprising frequencies ofthe first cell and the second cell.

5. The method of any one of the preceding claims, further comprising deactivating, based on performing the handover, the active BWP ofthe first cell.

6. The method of any one ofthe preceding claims, wherein the activating the first BWP is basedon:
receiving, from the first base station, a radio resource control (RRC) message indicating an identifier ofthe first BWP.

7. The methodof any one of the preceding claims, wherein a second identifier ofthe second BWP is a same identifier as a first identifier of the active BWP of the first cell.

8. The method of any one of the preceding claims, wherein the receiving one or more first messages comprising configuration parameters, further comprises receiving configuration parameters, for each of one or more BWPs, that indicate:
at least one frequency domain location;
at least one bandwidth;
at least one subcarrier spacing;
at least one identifier; and
at least one channel configuration for an uplink or a downlink.

9. The method of any one ofthe preceding claims, further comprising:
determining that the second BWP does not overlap with the first BWP; and
sending a mes sage, to the first base station, to switch the active BWP to a third BWP that overlaps with the second BWP.

10. The method of any one ofthe preceding claims, further comprising:
determining that bandwidth part identifier (BWP-ID) associated with the secondBWP is different than a BWP-ID associated with the first BWP; and
sending a message, to the first base station, to switch the active BWP to a third BWP that is associated with a same BWP-ID as the secondBWP.

11. The method of any one of the preceding claims, wherein the method further comprises sending, by the wireless device to the first base station, a capability indicator that indicates that the wireless device is capable of simultaneous connection to the first cell and the second cell.

12. The method of any one ofthe preceding claims, wherein:
a frequency domain location ofthe second BWP is a same frequency domain location ofthe active BWP; or
a second subcarrier spacing of the second BWP is a same subcarrier spacing of the active BWP.

13. A wireless device comprising:
one ormore processors; and
memory storing instructions that, when executed, cause the wireless device to perform the method of any one of claims 1 - 12.

14. A systemcomprising:
a wireless device configured to perform the method of any one of claims 1 - 12; and
a base station configured to send the indication of a handover.

15. A computer-readable medium storing instructions that, when executed, cause performance ofthe method of any one of claims 1 - 12.
